# EUROPEAN PATENT APPLICATION

(11) **EP 1 193 713 A2**
(43) Date of publication of application: **03.04.2002**
(21) Application number: 01122662.8
(22) Date of filing: 28.09.2001
(51) Int. Cl.: G11B 27/034, G06F 17/30

(54) **Editing apparatus for editing the content structure of an object**

(30) Priority: 28.09.2000 JP 2000297170; 16.10.2000 JP 2000315765; 02.03.2001 JP 2001059191
(71) Applicant: Information Broadcasting Laboratories, Inc., Taito-ku, Tokyo 111-0035 (JP); Ricoh Company, Ltd., Tokyo 143-8555 (JP)
(72) Inventor: Wakita, Yuki, Ohta-ku, Tokyo 143-8555 (JP); Kunieda, Takayuki, Ohta-ku, Tokyo 143-8555 (JP); Takahashi, Nozomu, Ohta-ku, Tokyo 143-8555 (JP); Suzuki, Kiyoshi, Ohta-ku, Tokyo 143-8555 (JP)
(74) Representative: Schwabe - Sandmair - Marx

(57) **Abstract**

A structure editing apparatus and a picture structure editing apparatus capable of modifying or correcting a structure created in advance with data having a range (segment) set as a structural unit while utilizing original structure information as much as possible are provided. Each apparatus includes a first designating unit designating an arbitrary segment in structure information as a target segment; a second designating unit designating an arbitrary position included in a range of the target segment; and a segment dividing unit dividing the range of the target segment into two segments, i.e., a first half segment and a second half segment with the position designated by the second designating unit set as a dividing position, and replacing the target segment by the two segments.

## Description

### FIELD OF THE INVENTION

The present invention relates to a structure editing apparatus, a picture structure editing apparatus, an object content structure management method, an object content structure display method, a content management method and a computer product.

More specifically, the present invention relates to a structure editing apparatus and a picture structure editing apparatus each having an editing facility for correcting the structure of data (segment) having a range after forming the structure as well as a computer readable computer product recording a program for executing a computer as each unit of the structure editing apparatus and the picture structure editing apparatus. The picture structure editing apparatus, in particular, relates to a case of handling, as target data, a picture stream (including a picture stream including voice). The structure formation and editing features for pictures which this picture structure editing apparatus handles, are used for the management of the pictures, browsing of a retrieval result, the creation of a digest and the like. In addition, the editing of data having a range can be applied to the editing of, for example, an operation process table.

Further, the present invention relates to an object content structure management method, an object content structure display method, an object content structure editing method and a computer readable computer product recording a program for allowing a computer to execute these methods. The present invention particularly relates to an object content structure management method, an object content structure display method, an object content structure editing method and a computer product capable of managing, displaying and editing the content of an actual instance object, schema-defining defining the configuration of an object, managing and displaying the schema-defined object configuration, and editing the content of an instance object.

Furthermore, the present invention is applied to, for example, methods for displaying and editing a document described in the XML format, The format of such a structured document is basically constituted out of a nest surrounded by <tag> and </tag>. A structure is defined in advance by schema definition for each type of tag. In this case, when it is assumed that a portion surrounded by certain tags is an object, the attributes of the object can be described in the <tag>, making it possible to apply the methods of the present invention to the object. The present invention can also be widely applied to objects. As long as the structure of an object is defined and the structure has a hierarchical structure, the object can be used as an object for the present invention. For example, whether an object is an organization, the configuration of a component, folder management, as long as the structure and the configuration can be defined and expressed as a hierarchical structure, the object can be applied as an object for the present invention.

In addition, the present invention relates to a content management method capable of handling one content, such as picture data or voice data, spreading over a plurality of files, as a logical content, collectively managing not only the files of the original content but also related data and data converted into various types of data formats necessary for the processing, a content description file and the like and providing data in a data format suited for the demand of a user.

### BACKGROUND OF THE INVENTION

In recent years, the development of various methods for structuring a picture including only pictures and a picture stream including pictures and voices, creating structure information and managing, editing and utilizing the pictures using this structure information is under way.

First, as an example of structuring a picture stream, there is proposed a method wherein an arbitrary frame range in the picture stream is defined as a segment and when the same range as the range defined by one segment can be expressed by a plurality of segments, a group of the plural segments is defined as a package and the hierarchical structure of the picture stream is thereby created.

Also, as an example of displaying pictures in a conventional picture editing apparatus, a method for arranging picture clips in a time series manner, and indicating the pictures using image icons. The picture editing apparatus of this type is intended to edit pictures per se but not intended to edit a picture stream using the structural elements of a structured picture stream and/or to reconfigure the structure itself.

In other words, while arranging video clips, superposing the video clips on one another and editing the video clips based on the highest rate reduction scale, the picture editing software or a nonlinear picture editing apparatus sometimes aligns continuous frames and displays them. However, the software and editing apparatus are intended to superpose the respective video materials and no user-friendly support tool for structuring a picture stream and reediting the structure of structured picture stream has been provided.

The applicant of the present invention, therefore, proposes a picture structure editing apparatus for defining, as a segment, an arbitrary frame range in a picture stream, defining a group of a plurality of other segments as a package when the same range as the range defined by one segment can be expressed by the group of the plural segments, and for thereby editing the structure of the picture stream using structure information defining the hierarchical structure of the picture stream.

Second, according to the conventional technique, the set membership of instance objects is normally expressed by a tree structure since the tree structure is easy to perceive intuitively. This is obvious from, for example, a file list screen on a personal computer. The same thing is true for an editing software for an XML document which is one of the structured documents. The set membership of instance objects is, therefore, normally expressed by a tree structure.

Meanwhile, according to the above-described software, the structure of actual instance objects and the schema-defined structure of the objects are separately displayed. Due to this, when a new object is added to the tree structure of the instance objects, it is necessary to select the type of the object from schema. To be specific, a method for selecting an object from the tree structure of the schema and dropping the selected object into the object tree structure, a method for displaying types of objects which can be arranged in a hierarchy below the selected object in the form of a different pallet or the like, selecting an object from the pallet and reflecting the selected object on the tree structure.

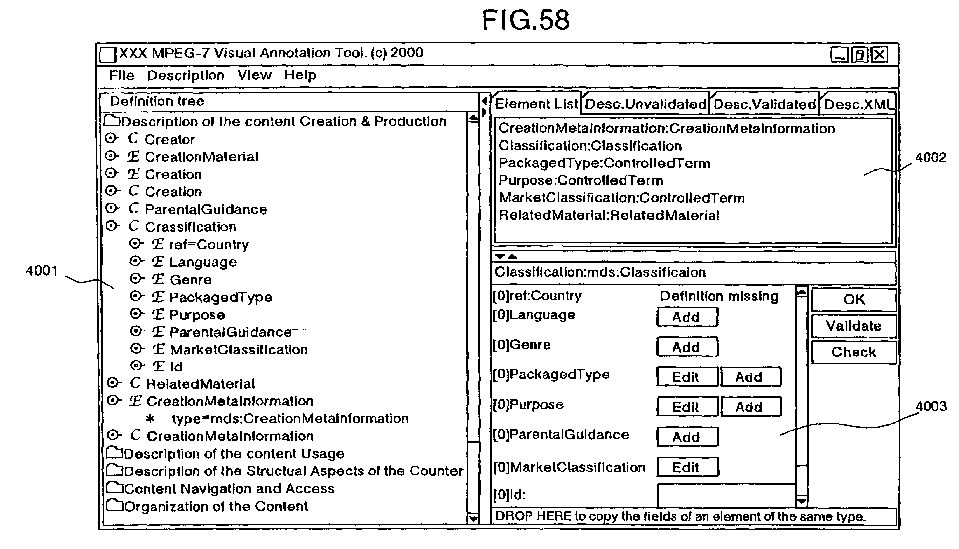

FIG. 58 shows a conventional method for separately displaying the structure of instance objects and the schema-defined structure of the objects, while taking an editing apparatus for MPEG-7 which is a language expands the XML type language as an example. In FIG. 58, the content of schema is displayed on the left portion 4001 of a screen and the contents of instance objects is displayed on the upper right portion 4002 of the screen. Objects which currently designated Classification can hold are listed on the lower right portion 4003 of the screen. According to this application, an object is selected from the lower right portion 4003 of the screen and the contents of the objects are edited while addition and deletion operations are being carried out.

Third, when a certain picture is visualized, it can be considered that this picture is one picture for a person no matter which format is used to express the picture. Even when the picture consists of a plurality of files or a single file, the target pictures are the same to the person. The data formats of picture contents involve a DV format, an MPEG-1 format, an MPEG-2 format, a Real Media format, a Motion JPEG and the like. These data formats have their individual characteristics. However, the contents of pictures are the same irrespectively of the data format. Further, when a description for explaining the logical structure and/or contents of the pictures is created, the created description must be independent of the file format.

Actually, however, contents stored in a storage device are normally stored in one data format for each data type such as picture contents and text contents. Due to this, even when a content is fetched and received, a recipient system which does not correspond to the data format of the content, cannot reproduce the content. Besides, in the delivery of a content, when the data format of the stored content ensures high picture quality but requires a large quantity of data although high quality pictures are not necessary, data to be delivered becomes unnecessarily large in quantity. As a result, transfer time becomes disadvantageously long. Also, even when the data is to be fetched and edited, it is disadvantageously difficult to edit the data using the data format of the stored data.

To deal with the above-described disadvantages, according to the conventional content management method, when a content is text data, the files of the content are registered and stored in one data format and set as primary data. The format of the primary data is converted into the other data format, e.g., a PDF or FTS data format and the generated data is managed based on the same document ID as that of the primary data. When a file is fetched, not only the document ID but also the data format are designated, thereby decreasing the probability that the field cannot be reproduced by a recipient side.

When a database management system is considered as a conventional technique related to the present invention, it is well known to configure a logical file out of a plurality of physical files.

Nevertheless, according to the picture structure editing apparatus based on the conventional technique and that proposed by the applicant of the present invention, a feature for creating the structure of a content is provided but a specialized feature for correcting the created structure is not provided.

Furthermore, when the structure of data is created in units of not only picture data but also other data having a range (segment), it is necessary (required) to correct detailed parts. However, no apparatus having a user-friendly reediting feature has not been provided. To be specific, when a certain segment is further divided into smaller segments and it is noticed that the boundary of the parent segment is not correct, then it is necessary to change the range of the parent segment and recreate the data structure after deleting the detailed structure which has been created. This disadvantageously complicates an operation for correcting the created structure and deteriorates operation efficiency.

Moreover, according to the above-described conventional technique, the structure of actual instance objects and the schema-defined structure of the objects are separately displayed. Due to this, to add a new object to the tree structure of the instance objects, it is necessary to refer to schema displayed separately and to search the type of the target object. This disadvantageously deteriorates operativity, complicates operation and deteriorates efficiency. When the hierarchy of the object to be added and changed is a multilayer hierarchy or many types of objects having similar names exist, in particular, operation efficiency is disadvantageously, considerably deteriorated.

In addition, according to the conventional technique, the schema definition can directly represent the structure of each object but does not take the form of an instance. Due to this, the positional relationship among the respective objects in the hierarchies of a tree structure is difficult to grasp, disadvantageously deteriorating operativity and operation efficiency,

Specifically, take a case where the following items of schema are defined as an example:
1. An object A has one object B.
2. The object B has one object C.
3. The object C has not less than one object A.

When the schema structure of the objects is displayed based on the conventional technique, three structures having the objects A, B and C set as roots, respectively, are arranged. This makes it difficult to recognize that the object A is cyclically referred.

Moreover, according to the above-described conventional content management method, when a content is text data, it is possible to obtain such an advantage as to decrease the occurrence of the probability that the content cannot be reproduced by a recipient side. However, no consideration is given to a picture content or a voice content and independent one file or plural files cannot be integrated as a logical content. Besides, an appropriate data format is automatically selected according to a processing and a content in the data format cannot be fetched.

### SUMMARY OF THE INVENTION

It is an object of the invention to provide a structure editing apparatus and a picture structure editing apparatus capable of modifying and correcting a structure created in advance with the structure of data having a range (segment) used as a unit while utilizing original structure information as much as possible.

Further, it is another object of the invention to provide an object content structure management method, an object content structure display method, an object content structure editing method and a computer product capable of intuitively recognizably displaying a combination of the structure of instance objects and the schema-defined structure thereof and capable of improving operativity and operation efficiency.

Additionally, it is still another object of the invention to provide a content management method capable of fetching a content in a data format suited for a processing out of stored contents of various data types including picture contents and voice contents, without the need for a user to be sensible of a data format.

According to a first aspect of the invention, there is provided a structure editing apparatus wherein an appropriate data range in arranged data is defined as a segment and, when the data range defined by one segment is expressed by a group of a plurality of other segments, the group of the plurality of other segments is defined as a package, thereby editing a structure of the arranged data using structure information defining a hierarchical structure of the arranged data, wherein the structure editing apparatus comprising; first designating unit which designates an arbitrary segment in the structure information as a target segment; second designating unit which designates an arbitrary position included in a range of the target segment; and segment dividing unit which divides the range of the target segment into a first half segment and a second half segment at a dividing position, the dividing position being the position designated by the second designating unit.

According to the first aspect, the segment dividing unit divides the range of the target segment into the first half segment and the second half segment based on the dividing position and replaces the target segment by these two segments. Therefore, when there is a segment to be divided, the segment can be easily corrected (divided) by designating the segment as a target segment and designating a dividing position.

Further, according to a second aspect of the invention, there is provided a picture structure editing apparatus according wherein an arbitrary frame range in a picture stream is defined as a segment, and when the range designated by one segment is expressed by a group of a plurality of other segments, the group of the plurality of segments is defined as a package, thereby editing a structure of the picture stream using structure information defining a hierarchical structure of the picture stream, comprising first designating unit which designates an arbitrary segment in the structure information as a target segment; second designating unit which designates an arbitrary position included in a range of the target segment; and segment dividing unit which divides the range of the target segment into a first half segment and a second half segment at a dividing position, the dividing position being the position designated by the second designating unit.

Further, an object content structure management method according to a third aspect of the invention is an object content structure management method for managing a content structure of an object, the content structure of the object expressed by a tree-structure set membership consisting of zero or at least one object, an attribute capable of being held by the object for each object type and the object type being defined by a schema definition, and wherein a list of child objects defined by the schema definition is managed for each the object, the child objects capable of being held by the object; the list of the child objects holds instances of all objects actually existing as the child objects and objects which do not actually exist but can exist as the child objects, and each object holds determination information for determining whether a certain object is an instance of an actually existing object or an object which does not actually exist but can exist as a child object; when an arbitrary object is set as a start object, a list of child objects of the start object, a list of the child objects of each object held by the list of the child objects, and a list of child objects of each object held by a list of child objects of the child objects are sequentially managed, thereby managing a content structure of the start object.

Further, according to a fourth aspect of the invention, there is provided an object content structure display method is an object content structure management method for displaying a content structure of an object, wherein the content structure of the object expressed by a tree-structure set membership consisting of zero or at least one object, an attribute capable of being held by the object for each object type and the object type being defined by a schema definition, and wherein objects held by the object as child objects are expressed by a tree structure, a character string representing the object type is displayed on each node of the tree structure to display a structure of the object, a type and a value of the attribute capable of being held by an object selected from the displayed tree structure are displayed, thereby displaying a content and a structure of the selected object.

Further, an object content structure editing method according a fifth aspect of the invention provides an object content structure management method for editing a content structure of an object, the content structure of the object expressed by a tree-structure set membership consisting of zero or at least one object, an attribute capable of being held by the object for each object type and the object type being defined by a schema definition, and wherein objects held by the object as child objects are expressed by a tree structure, a character string representing the object type is displayed on each node of the tree structure to display a structure of the object, a type and a value of an attribute capable of held by an object selected from the displayed tree structure are displayed, thereby displaying a content and a structure of the selected object; and when a value to be changed is inputted and change is indicated for the displayed attribute value, the attribute value of the object is updated to the input value.

According to a sixth aspect of the invention, there is provided a content management method capable of managing one content by a plurality of data formats, wherein data of an original content consisting of one or a plurality of files and a plurality of items of data expressed in a data format different from a data format of the data of the original content are integrated into one logical content and collectively managed. According to this aspect, in the content management method capable of managing one content by a plurality of data formats, in which method, data of an original content consisting of one or a plurality of files and a plurality of items of data expressed in a data format different from a data format of the data of the original content are integrated into one logical content and collectively managed.

Other objects and features of this invention will become apparent from the following description with reference to the accompanying drawings.

### BRIEF DESCRIPTION OF THE DRAWINGS

FIG. 1 is a schematic block diagram showing one example of a picture structure editing apparatus in the first embodiment according to the present invention;
FIG. 2 is a block diagram of a computer shown in FIG. 1;
FIG. 3 is an explanatory view showing an example of the structure of structure information used by the picture structure editing apparatus in the first embodiment;
FIG. 4 is an explanatory view showing an example of the display of a structure editing screen by a structure display software in the first embodiment;
FIG. 5 is an explanatory view for an example of the display of the structure editing screen by the structure display software in the first embodiment;
FIG. 6 is an explanatory view showing an example in which the hierarchical structure of a picture stream is displayed on the structure editing screen by the structure display software;
FIG. 7 is an explanatory view showing a segment dividing processing and a package dividing processing in the first embodiment;
FIG. 8 is an explanatory view showing a segment dividing processing and a package dividing processing in the first embodiment;
FIG. 9 is an explanatory view showing a segment dividing processing and a package dividing processing in the first embodiment;
FIG. 10 is an explanatory view showing a segment dividing processing and a package dividing processing in the first embodiment;
FIG. 11 is an explanatory view showing a segment boundary moving processing in the first embodiment;
FIG. 12 is an explanatory view showing a segment boundary moving processing in the first embodiment;
FIG. 13 is an explanatory view showing a segment boundary moving processing in the first embodiment;
FIG. 14 is an explanatory view showing a segment boundary moving processing in the first embodiment;
FIG. 15 is an explanatory view showing a segment boundary moving processing in the first embodiment;
FIG. 16 is an explanatory view showing a segment boundary moving processing in the first embodiment;
FIG. 17 is an explanatory view showing a segment boundary moving processing in the first embodiment;
FIG. 18 is an explanatory view showing a segment boundary moving processing in the first embodiment;
FIG. 19 is an explanatory view showing a segment merging processing in the first embodiment;
FIG. 20 is an explanatory view showing a package hierarchy upgrading processing in the first embodiment;
FIG. 21 is an explanatory view showing a segment hierarchy downgrading processing in the first embodiment;
FIG. 22 is an explanatory view showing a segment hierarchy upgrading processing in the first embodiment;
FIG. 23 is an explanatory view showing a segment deletion processing in the first embodiment;
FIG. 24 is an explanatory view showing a segment deletion processing in the first embodiment;
FIG. 25 is an explanatory view showing a segment deletion processing in the first embodiment;
FIG. 26 is an explanatory view showing a segment deletion processing in the first embodiment;
FIG. 27 is an explanatory view showing a segment deletion processing in the first embodiment;
FIG. 28 is an explanatory view showing a package deletion processing in the first embodiment;
FIG. 29 is an explanatory view for a line segment display for determining a dividing position or a moving position;
FIG. 30 is an explanatory view showing an example of an operation dialog for conducting the segment dividing processing;
FIG. 31 is an explanatory view for line segment displays for determining the dividing position or the moving position;
FIG. 32 is an explanatory view showing an example of an operation dialog for conducting the segment boundary moving processing;
FIG. 33 is an explanatory view showing a frame continuous display screen;
FIG. 34 is an explanatory view for showing the outline of the present invention;
FIG. 35 is a block diagram of an object editing apparatus in the second embodiment according to the present invention;
FIG. 36 is a schematically functional block diagram of modules constituting an object content structure editing software shown in FIG. 35;
FIG. 37 is an explanatory view showing a management state on a memory in accordance with an example of schema definition in the second embodiment;
FIG. 38 is an explanatory view showing a display screen on which the management state shown in FIG. 37 is displayed by an object content structure display module;
FIG. 39 is an explanatory view showing a display screen on which object "CreationMetaInformation" appears repeatedly;
FIG. 40 is an explanatory view showing an example of display icons for selected objects in choices and the other objects in the choices;
FIG. 41 is an explanatory view showing the setting of attribute values in the second embodiment;
FIG. 42 is an explanatory view showing an example of "instance addition" in the second embodiment;
FIG. 43 is an explanatory view showing an example of "instance addition" in the second embodiment;
FIG. 44 is an explanatory view showing a case of adding a probable dummy object MediaDuration as an actually existing instance;
FIG. 45 is an explanatory view showing a case of adding the probable dummy object MediaDuration as an actually existing instance;
FIG. 46 is an explanatory view showing an example of deleting an actually existing object;
FIG. 47 is an explanatory view showing an example of changing the selection of an actually existing object;
FIG. 48 is an explanatory view showing a display screen in another embodiment;
FIG. 49 is an explanatory view showing a display screen in another embodiment;
FIG. 50 is an explanatory view showing an example of applying the present invention to an organization structure design tool;
FIG. 51 is a block diagram of a content management system showing one example of the third embodiment according to the present invention;
FIG. 52 is a block diagram of the hardware of an information processing apparatus for executing a content management system according to the present invention;
FIG. 53 is an explanatory view for a content management method showing one example of the third embodiment;
FIG. 54 is another explanatory view for the content management method showing one example of the third embodiment;
FIG. 55 is another explanatory view for the content management method showing one example of the third embodiment;
FIG. 56 is another explanatory view for the content management method showing one example of the third embodiment;
FIG. 57 is an operation flow chart for the content management method showing one example of the third embodiment; and
FIG. 58 is an explanatory view showing a method for separately displaying the conventional structure of instance objects and the schema-defined structure of objects.

### DESCRIPTION OF THE PREFERRED EMBODIMENT

A structure editing apparatus, a picture structure editing apparatus, an object content structure management method, an object content structure display method, a content management method and a computer product according to the present invention will be described hereinafter in detail in the order of the first embodiment, the second embodiment and the third embodiment with reference to the accompanying drawings.

The structure editing apparatus and the picture structure editing apparatus according to the present invention will be described hereinafter in detail while taking a case of applying the structure editing apparatus and the picture structure editing apparatus to a picture structure editing apparatus with reference to the accompanying drawings. It is noted that the structure editing apparatus of the present invention relates to editing for the correction of the structure of segments each having a range after forming the structure. An apparatus for handling, as target data, a picture stream (including voices) corresponds to the picture structure editing apparatus of the present invention. Accordingly, from the viewpoint of editing the structure of segments each having a range, the structure editing apparatus of the present invention can handle target data as long as the data has a range and there is no limit to types of data. For example, the structure editing apparatus may edit, as target data, data having time table (range) and operation processes (operation contents) within the time such as an operation process table.

Also, among the present invention, the picture structure editing apparatus limiting the target data to pictures is used for a technique for structuring pictures, describing the contents of the pictures, and using structure information thereon for retrieving and/or editing the pictures, browsing a retrieval result and creating a digest.

In correction conducted after forming a structure, even when the range of a parent segment is to be changed, it is desired to change the boundary of the parent segment while storing information on child segments existing in lower hierarchies. Taking this into consideration, the present invention is intended to provide a feature for modifying and/or correcting a structure formed in advance while using original information as much as possible.

First, the picture structure editing apparatus in the first embodiment will be described in detail with reference to the accompanying drawings in the following order:
(1) Schematic configuration of picture structure editing apparatus.
(2) Configuration of structure information.
(3) Display example of structure information using structure display software.
(4) Concrete description of features of structure editing software.
(5) Copying/moving processings for representative range and representative frame of segment.

### (1) Schematic Configuration of Picture Structure Editing Apparatus

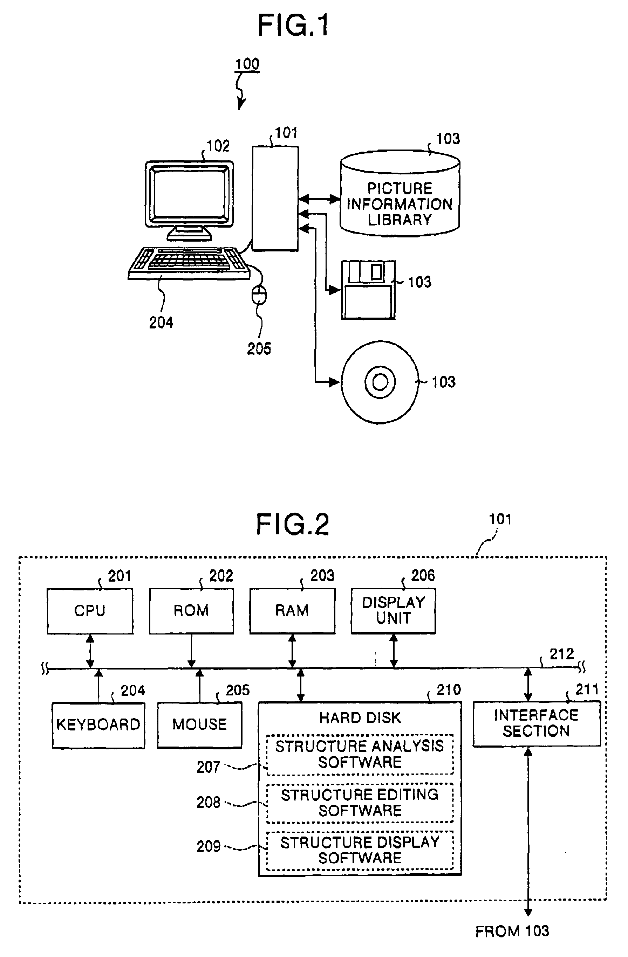

FIG. 1 is a schematic block diagram showing one example of a picture structure editing apparatus 100 in the first embodiment according to the present invention. The picture structure editing apparatus 100 consists of a computer 100 performing a processing for inputting a picture stream from a storage section 103 storing picture streams and/or structure information which are structured picture streams, analyzing the structure of the picture stream, and visually displaying the structure of the picture stream on a display screen 102 based on an analysis result. In FIG. 1, reference symbol 204 denotes a keyboard and 205 denotes a mouse which is a pointing device.

While a hard disk contained in the computer 101 may be used as the storage section 103, it is assumed that a picture information library or a computer product such as a floppy disk, a CD-ROM, an MO or a DVD is used in this embodiment. Also, the storage section 103 may store one of picture streams and structure information or may store both of them. In the latter case, it suffices that a picture stream and structure information as targets may be read into the computer 101.

FIG. 2 is a block diagram of the computer 101 shown in FIG. 1. The computer 101 includes at least a CPU 201 executing processings based on software to be described later, an ROM 202 storing a boot program and the like, an RAM 203 used as the work area of the CPU 201, a keyboard 204 and a mouse 205 for conducting various input operations, a display unit 206, such as a CRT or a liquid crystal display, having a display screen 102 displaying a picture stream analysis process and the structure of a picture stream, a hard disk 210 storing various applications such as a structure analysis software 207 for realizing the features of the picture structure editing apparatus in the first embodiment, a structure editing software 208 and/or a structure display software 209 as well as data, an interface section 211, such as various drivers and a network adapter, connecting the storage section 103 to the computer 101, and a bus 212 mutually connecting the above-described constituent elements.

It is noted that the configuration of the picture structure editing apparatus 100 shown in FIGS. 1 and 2 is provided only for illustrative purposes and any system configuration may be available as long as the respective features of the first embodiment to be described later can be realized. In addition, a technique proposed by Japanese Patent Application No. 10-249598 (Japanese Patent No. 3208116) filed by the applicant of the present application can be utilized as a basic technique for a structure display method for analyzing a picture stream, creating structure information and displaying the structure on a display screen. Further, a picture stream structuring method is intended to, though not specially limited thereto, at least define an arbitrary range in a picture stream as a segment, define a collection of a plurality of other segments as a package when a range included in the range defined by the certain segment or the same range as the defined range can be expressed by the collection of plurality of segments, define the plural segments as partial segment of the certain segment and thereby structure the entire picture stream.

The respective unit of the present invention and the correspondence among the respective unit in the above-described configuration will be described. The first designation unit, the second designation unit, the third designation unit, the fourth designation unit, the fifth designation unit, the sixth designation unit, the seventh designation unit, the eighth designation unit and the ninth designation unit of the present invention are basically realized by the display unit 206, the mouse 205 and the structure editing software 208.

Further, the segment dividing unit, the segment boundary moving unit, the segment merging unit, the package hierarchy upgrading unit, the segment hierarchy downgrading unit, the segment hierarchy upgrading unit, the segment deleting unit, the package deleting unit, the copying/moving processing unit and the attribute copying/moving unit of the present invention are realized as the application programs of the computer 101. In the first embodiment, those applications correspond to the structure analysis software 207, the structure editing software 208 and the structure display software 209.

### (2) Configuration of Structured Information

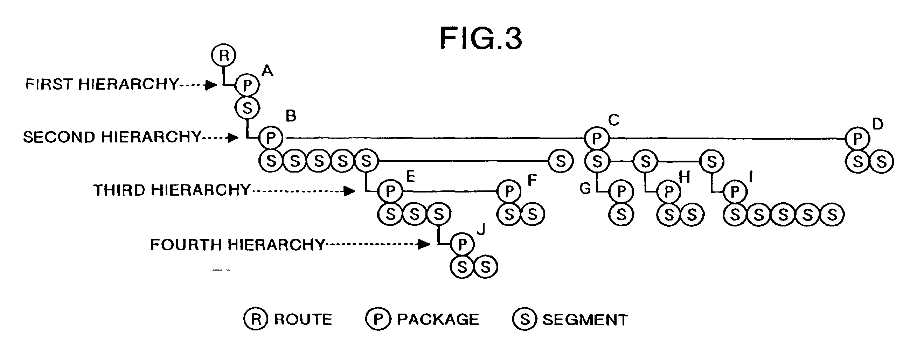

Referring to FIG. 3, an example of the structure of structure information used by the picture structure editing apparatus in the first embodiment will be described. In the first embodiment, an entry to the entire structure of one picture stream is defined as a root R, structures which exist hierarchically below this root R are defined as structural elements, an arbitrary range in the picture stream is defined as a segment S, and when a range included in the range defined by the certain segment S (i.e., a range corresponding to a part of the segment S) or the same range as the defined segment can be expressed by a collection of a plurality of other segments S, the collection of these plural segments S is defined as a package P.

Namely, in the example of the structure shown in FIG. 3, a package P (see reference symbol A) representing entire pictures and one segment S constituting the package P exist in the first hierarchy right below the root R.

Also, in the second hierarchy, there exist a package P (see reference symbol B) and six segments S constituting the package P; a package P (see reference symbol C) and three segments S constituting the package P; a package P (see reference symbol D) and two segments constituting the package P.

Further, in the third hierarchy, there exist a package P (see reference symbol E) and three segments constituting the package P; a package P (see reference symbol F) and two segments S constituting the package P; a package P (see reference symbol G) and one segment constituting the package P; a package P (see reference symbol H) and two segments constituting the package P; and a package P (see reference symbol I) and five segments S constituting the package P.

Moreover, in the fourth hierarchy, there exist a package P (see reference symbol J) and two segments S constituting the package P.

While the first to fourth hierarchies exist as hierarchies in the example of the structure shown in FIG. 3, the depths of the hierarchies and the number of packages P's in the respective hierarchies are not limited to specific ones and they are set at need. In addition, in the first embodiment, when a part of the range defined by the segment in the higher hierarchy or the same range as the defined range can be expressed by a plurality of segments in the lower hierarchy, these plural segments are defined as the partial segments of the segment in the higher hierarchy.

Description will be given to how to create the package P based on what standard while referring to examples. When the picture stream having the structure shown in FIG. 3 is a picture stream recording a movie, for example, the first package P (see reference symbol B) out of the three packages P in the second hierarchy divides pictures according to the features of still images, the second package (see reference symbol D) divides the pictures according to characters, and the third package (see reference symbol D) divides the pictures according to time. In this example, partial segments (segments in the hierarchy right below the hierarchy of the parent segment(which is a segment in the higher hierarchy) are created in such a manner as to divide the parent segment. Due to this, the respective ranges of the partial segments constituting one package do not overlap with one another and the range of the parent segment is completed by collecting the ranges of the respective partial segments.

Further, as stated above, the structure of the picture stream may be extracted or read from the structure information created in advance, or structure information may be created by reading the picture stream and directly structuring the picture stream on the spot.

### (3) Display Example of Structure Information Using Structure Display Software

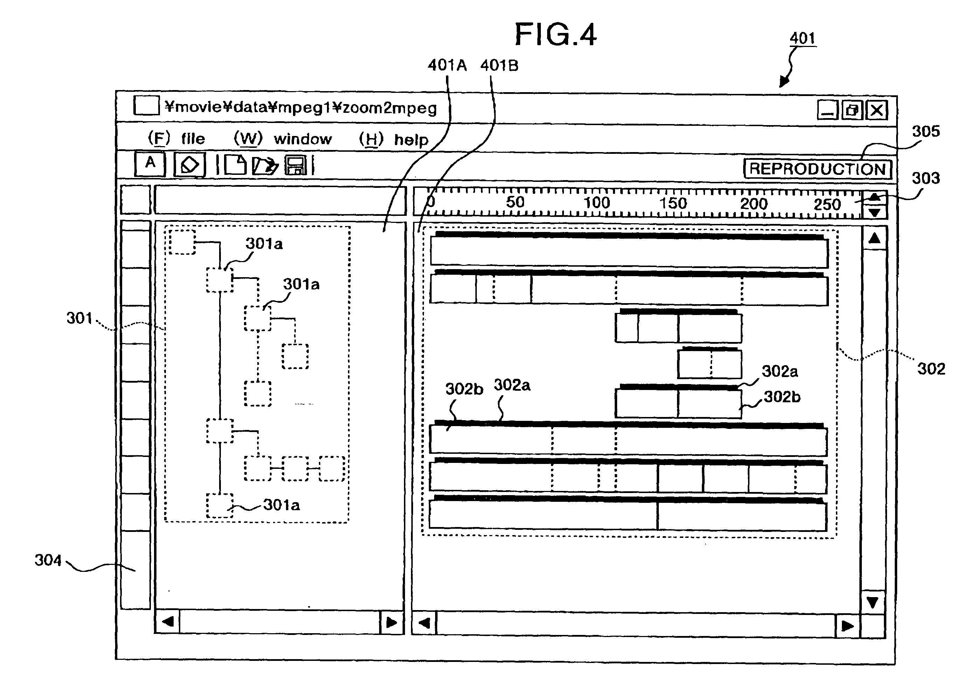

FIG. 4 is an explanatory view showing a display example of a structure editing screen 401 by the structure display software 209 in the first embodiment. This structure display software 209 corresponds to the structure and configuration display unit of the present invention. As will be described hereinafter, the hierarchical structure of the picture stream is displayed based on structured information. It is noted, however, a picture stream the entire structured information of which can be displayed with the size of one frame of the display screen 102 is taken as an example for the brevity of description and that the structure editing screen 401 only displays the basic features of the structure display software 209.

As shown in FIG. 4, the structure editing screen 401 consists of a structure display section 401A displaying structure information 301 expressing a tree-structure set membership while setting the respective packages as nodes 301a, and a configuration display section 401B displaying configuration information 302 consisting of package discrimination displays 302a indicating the ranges of the respective packages and segment discrimination displays 302b indicating the ranges of the respective segments in accordance with the display rows of the corresponding nodes. Reference symbol 304 denotes a row display section for facilitating the visual recognition of the corresponding display rows of the structure display section 401A and the configuration display section 401B. Reference symbol 305 denotes a reproduction button icon designating the reproduction of a selected segment.

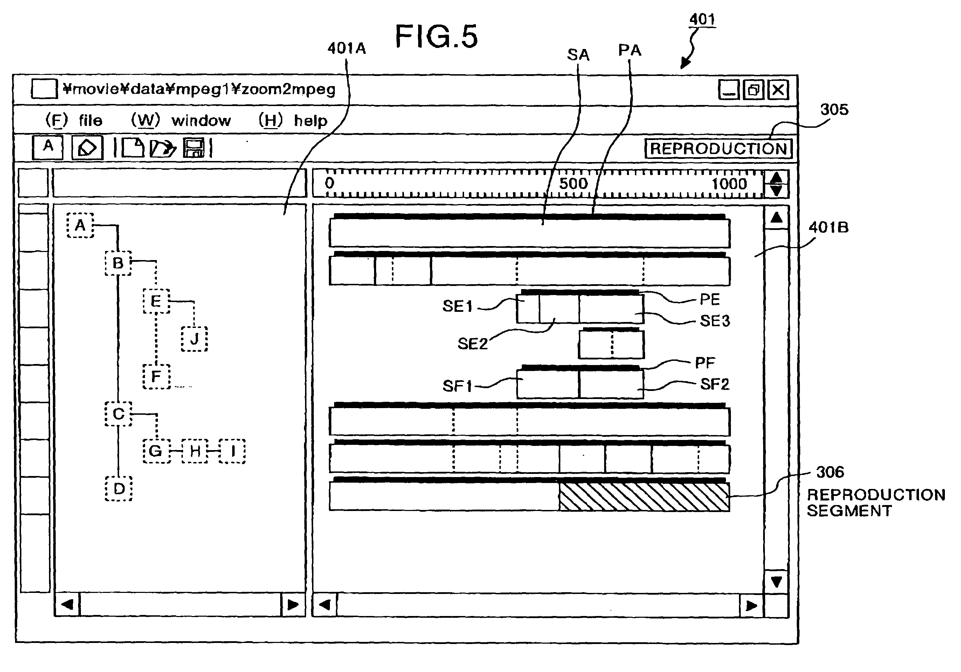

With the configuration, the operation of the picture structure editing apparatus will be described with reference to the display example of the display screen 102 in the first embodiment shown in FIGS. 4 and 5. First, when the structure of the picture stream shown in FIG. 3 is displayed on the display screen 102, the display of the structure is that as shown in FIG. 5. Here, the structure information 301 displayed on the structure display section 401A and the configuration information 302 displayed on the configuration display section 401B are displayed based on the following rules (conditions) (1) to (5). To discriminate the respective nodes 301a to facilitate understanding, symbols A to J shown in FIG. 3 are described within the displays of cubes (cubes expressed by dotted lines) indicating the respective nodes. For a similar reason, the package discrimination displays 302a and the segment discrimination displays 302b are respectively denoted by PA, SA and the like.

### Rule (1):

In the tree structure set membership, nodes belonging to the same hierarchy are displayed on the same display row or the same display column and coupled to one another by a straight line. This rule can be paraphrased as follows. In the arrangement of the tree structure set membership of the structure information 301, when an arbitrary package is set as a parent package and a plurality of child packages each expressing the same range as the range of a segment which is one of a plurality of constituent element of the parent package as a collection of a plurality of other segments are defined, then the plural child packages are defined as fraternal packages. A plurality of nodes indicating the respective fraternal packages are displayed while being arranged in longitudinal direction and coupled to one another by a straight line. Inaddition, in the tree structure set membership, when an arbitrary package is set as a parent package, a plurality of child packages each expressing the same range as the range of a segment which is one of a plurality of constituent element of the parent package as a collection of a plurality of other segments are defined and the ranges of the plural child packages do not overlap with one another, then a plurality of nodes indicating the respective plural child packages are displayed while being arranged in lateral direction and coupled to one another by a straight line.

As can be seen, in FIG. 5, the nodes B, C and D are displayed on the same display column and coupled to one another by a straight line. Therefore, the nodes B, C and D exist in the same hierarchy and the packages corresponding to these respective nodes B, C and D are fraternal packages. Also, the nodes G, H and I are displayed on the same display row and coupled to one another by a straight line. Therefore, the nodes G, H and I exist in the same hierarchy but the packages corresponding to these respective nodes G, H and I are not fraternal packages.

### Rule (2):

In the tree set membership, the node of the package representing the entire picture stream is defined as the highest package and the corresponding node is arranged on the upper left portion of the structure information 301 (structure display section 401A). Accordingly, the node A indicating the package P representing the entire pictures is arranged on the upper left portion of the structure information 301.

### Rule (3) :

In the tree set membership, when an arbitrary package is set as a parent package and a child package expressing the same range as the range of a segment which is one of the constituent elements of the parent package as a collection of a plurality of other segments is defined, then the node indicating the child package is arranged in the lower right portion of the node indicating the parent package and the both nodes are displayed by being coupled to each other by a polygonal line. For example, when the node E is set as a parent package, the node J which is the child package of the parent package is arranged in the lower right portion of the node E and coupled thereto by a polygonal line on the display of the structure display section 401A.

### Rule (4):

In the tree set membership, when there exits a child package the parent package of which is a fraternal package thereof, the child package is arranged in the lower right portion of the node indicating the fraternal package and a fraternal package located below the former fraternal package is arranged to be located below the child package arranged in the lower right portion of the former fraternal package.

Accordingly, in FIG. 5, when attention is paid to the nodes E, F and J, the packages indicated by the nodes E and F, respectively, are fraternal packages relative to each other and the packages indicated by the nodes E and J are a parent package and a child package, respectively.

### Rule (5) :

In the configuration display section 401B, the horizontal direction on the screen is set as a time series direction. On a row corresponding to each node specified by the row display section 304 of the structure display section 401A, a thin band-like package discrimination display 302a having a length corresponding to the range of the corresponding package is displayed at a corresponding time series position. In addition, a block-like segment discrimination display 302b having a length corresponding to the range of a corresponding segment is displayed for each of the segments constituting the package displayed by the package discrimination display 302a at a corresponding time series position.

In FIG. 5, therefore, the package discrimination display (denote by reference symbol PA) corresponding to the node A is displayed as a thin band having a length indicating the entire picture stream on the same row as that of the node A. In addition, the segment discrimination display (denoted by the reference symbol SA) corresponding to the node A is displayed as a block having a length corresponding to the range of segments (the entire picture stream in this case) on the same row as that of the node A.

Further, the package discrimination display (denoted by the reference symbol PE) corresponding to the node E is displayed as a thin band having the length of the package corresponding to the node E at a corresponding time series position on the same row as that of the node E. In addition, segment discrimination displays (denoted by reference symbols SE1 to SE3) corresponding to the node E are displayed as blocks having the ranges of the respective segments at corresponding time series positions on the same row as that of the node E, respectively.

The picture structure editing apparatus 100 in the first embodiment executes the rules (1) to (5) by the structure display software 209, whereby the internal logical structure of the structure information can be visualized to facilitate understanding, the ratio of the ranges of the respective segments can be intuitively recognized, the structures of the a plurality of packages and the configurations of segments can be easily compared and considered, and the ranges and the locations of the respective packages and segments in the structure of the entire structure information can be intuitively, quantitatively grasped.

Moreover, by applying the structure display software 209 in the first embodiment, it is made obviously easy to randomly reflect and display editing results including the addition and deletion of a segment (segments) and the change of the range by the structure editing software 208 to be described later. Further, the structure edited by using the structure display method can be used as information for retrieval and browsing and may preferably be stored again in the storage section 103 for later usage.

### (4) Concrete Description of Features of Structure Editing Software

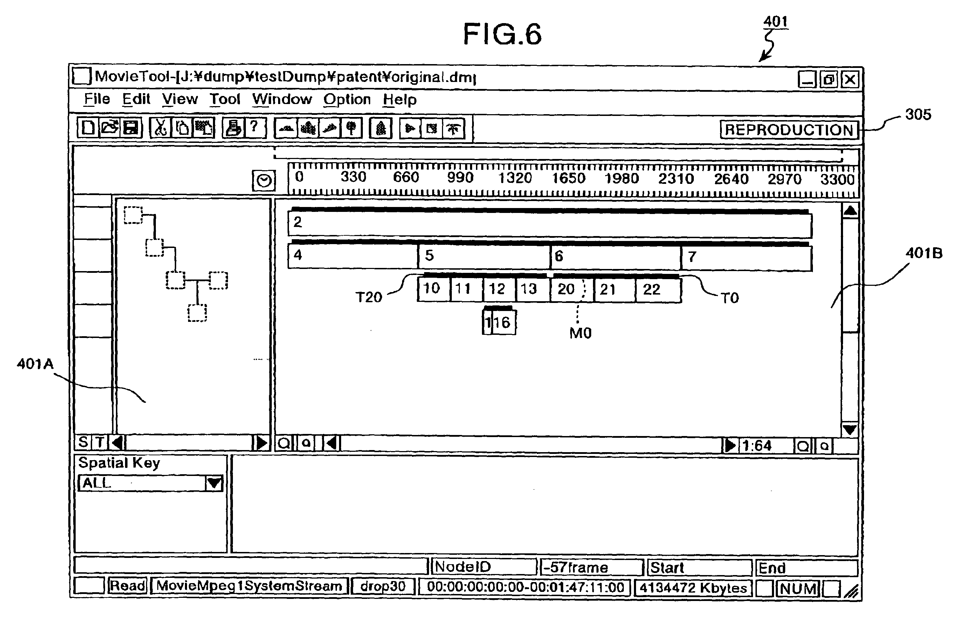

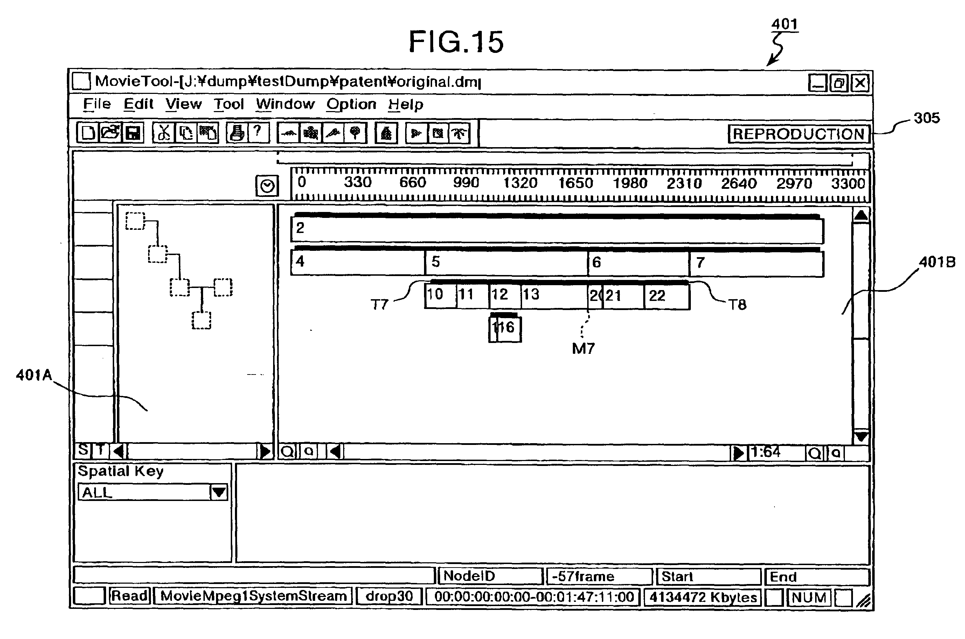

Referring to examples of display screens shown in FIGS. 6 to 31, the correction feature of the structure editing software 208 for correcting the structure of a picture stream will be described. It is noted that the structure editing software 208 operates in cooperation with the structure display software 209 and structure analysis software 207 and realizes the correction feature.

FIG. 6 shows a display example of the hierarchical structure of the picture stream using the structure display software. For brevity, the picture stream having a four-hierarchy structure is taken as an example and the respective segments displayed on the configuration display section 401B are discriminated by allotting numbers to the respective segments.

On the structure editing screen 401 shown in FIG. 6, a segment constituting the package in the first hierarchy is denoted by number 2, segments constituting the package in the second hierarchy are denoted by numbers 4, 5, 6 and 7, respectively, segments constituting a package corresponding to the segment 5 in the third hierarchy are denoted by numbers 10, 11, 12 and 13, respectively and segments constituting a package corresponding to the segment 6 in the third hierarchy are denoted by numbers 20, 21 and 22, respectively, and segments constituting a package in the fourth hierarchy is denoted by numbers 15 and 16, respectively.

Now, a correction processing for dividing a segment will be described.

### (Division Correction Processing 1)

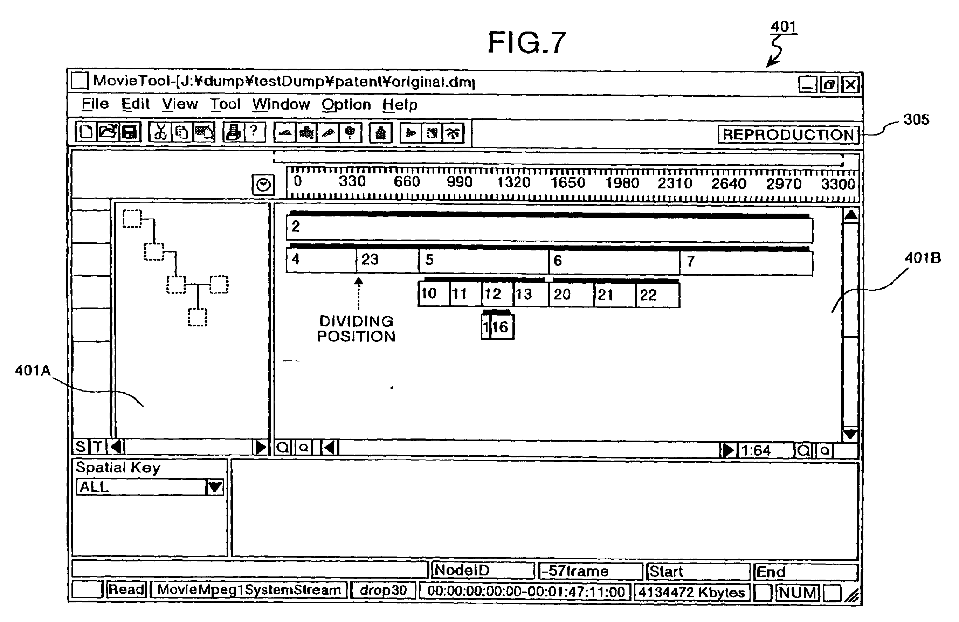

For example, when the segment (number 4) in the second hierarchy shown in FIG. 6 is divided at a position of 400^{th} frame from the start, the segment (number 4) in the structure display section 401A displayed on the structure editing screen 401 is clicked on by the mouse 205. As a result, the segment (number 4) is designated as a target segment. An arbitrary position (here the position of the 400^{th} frame) included in the range of the target segment is clicked on by the mouse 205. Then, when a segment division icon (not shown) is designated, the structure editing software 208 divides the range of the target segment (number 4) into two segments, i.e., a first half segment and a second half segment with the position, which has been clicked on right before the designation of the segment division icon, set as a dividing position, and replaces the target segment (number 4) by the two segments (numbers 4 and 23) as shown in FIG. 7.

While a case where the first half segment takes over the number (number 4) of the original target segment and the second half segment is allotted a new segment number (number 23) is taken as an example, the two segments generated by the division may be allotted new numbers and managed according to the numbers, respectively. In addition, since no package exists in the hierarchy below the segment (number 4), the lower hierarchies are not influenced by the division of the segment (number 4).

### (Division Correction Processing 2)

Description will be given to a division correction processing when a target segment has a package. It is assumed, for example, that the segment (number 6) shown in FIG. 6 is designated as a target segment. The target segment (number 6) has a package T0 and the three segments (numbers 20, 21 and 22) constituting the package T0 exist in the hierarchy below the target segment (number 6).

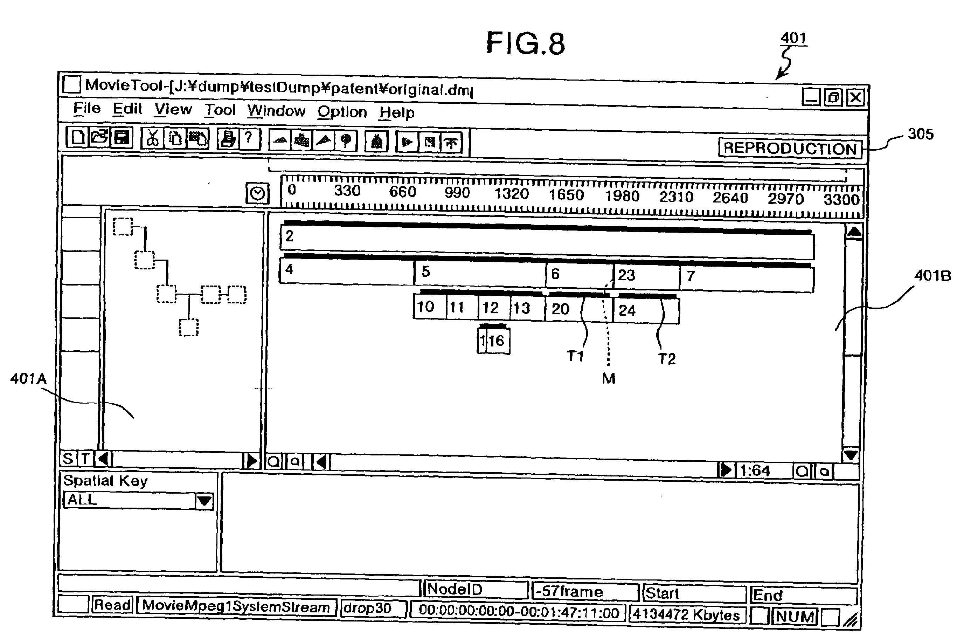

When the target segment has a package as stated above, the package is divided into two packages, i.e., a first half package consisting of a segment corresponding to the range of the first half segment and a second half segment consisting of a segment corresponding to the range of the second half segment. Tobe specific, as shown in FIG. 8, a dividing position M is designated on the target segment (number 6), the target segment (number 6) is divided into two segments; i.e., the first half segment (number 6) and the second half segment (number 23) and the package T0 is divided into two packages, i.e., a package T1 corresponding to the first half segment (number 6) and a package T2 corresponding to the second half segment (number 23).

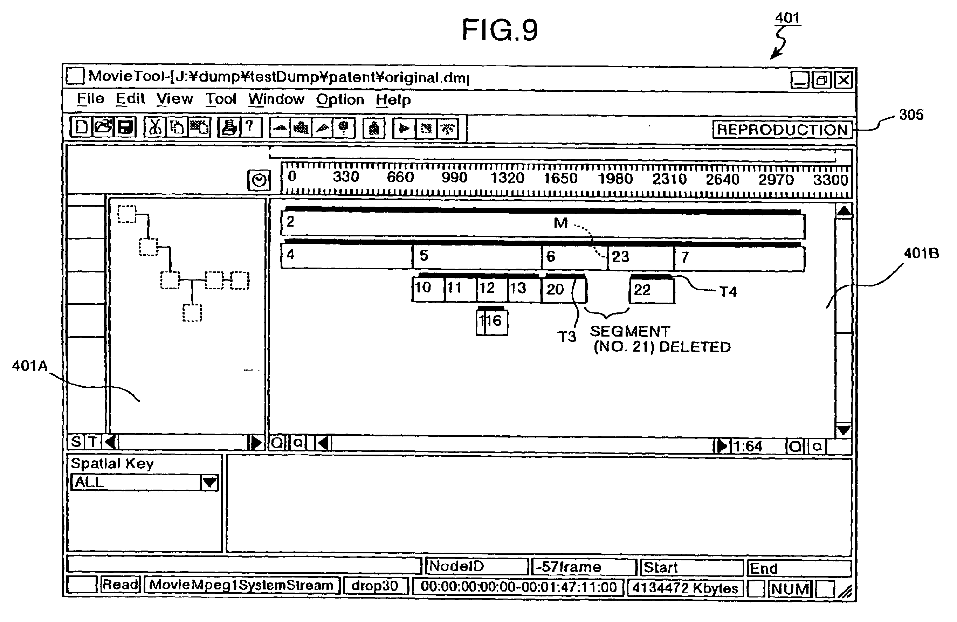

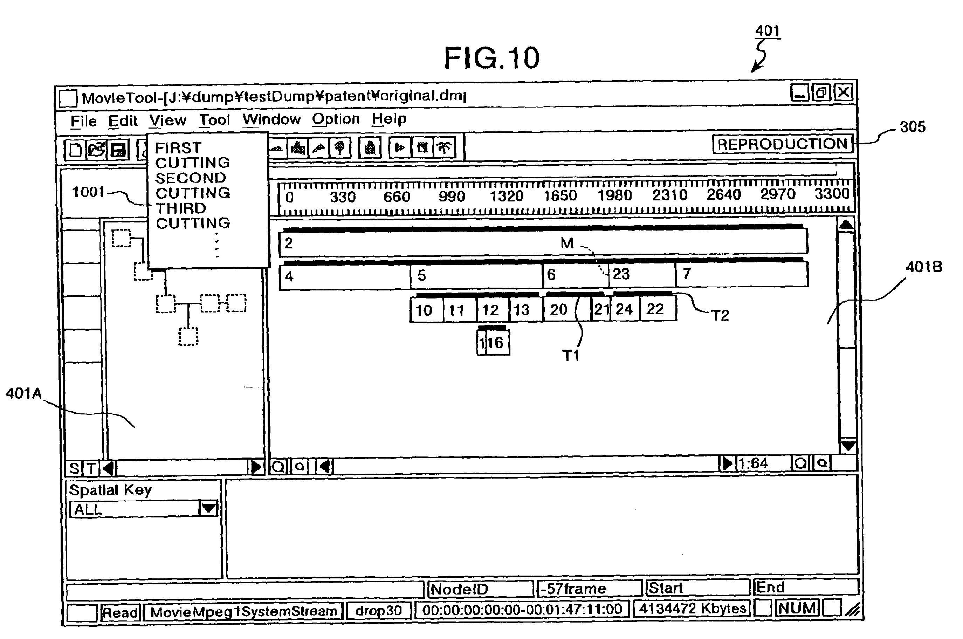

When the target segment has structural elements below the package in the lower hierarchy, the following three cutting methods are conducted to cut the segments in the lower hierarchy:
First cutting: Delete a structural element below a segment to be cut (see FIG. 9).
Second cutting: Divide a segment to be cut (see FIG. 10).
Third cutting: Divide a segment to be cut and then merge the divided segments with adjacent segments, respectively (see FIG. 8).

As shown in FIG. 8, the target segment is divided into the first half segment (number 6) and the second half segment (number 23), and the package T0 is divided into the package T1 corresponding to the first half segment (number 6) and the package T2 corresponding to the second half segment (number 23). This case corresponds to the third cutting processing.

In addition, as shown in FIG. 9, the segment (number 21) divided at the dividing position M is deleted. This case corresponds to the first cutting processing. In this case, after the cutting, a package T3 is created out of the segment in the hierarchy below the first half segment (number 6) and a package T4 is created out of the segment in the hierarchy below the second half segment (23).

Further, as shown in FIG. 10, the segment to be cut (number 21) is divided into a segment (number 21) and a segment (number 24). This case corresponds to the second cutting processing.

The first to third cutting processings are recursively applied to descendant segments when there are segments to be cut at the dividing position M out of segments in the hierarchies below the target segment.

Furthermore, which of the first to three cutting processings is to be used can be easily determined by selecting a desired processing from, for example, a pull-down menu 1001 shown in FIG. 10.

### (Boundary Moving Processing 1)

A boundary moving processing for moving the boundary of a segment will be described.

The boundary moving processing 1 can designate the movement of a boundary on the start position side of a target segment or a boundary on the end position side thereof using the mouse 205 when the end position of a segment right before the target segment is equal to the start position of the target segment and the end position of the target segment is equal to the start position of a segment right after the target segment. When the movement of the boundary is designated using the mouse 205, the designated boundary on either the start position side of the target segment or the end position side thereof is moved to a moving position.

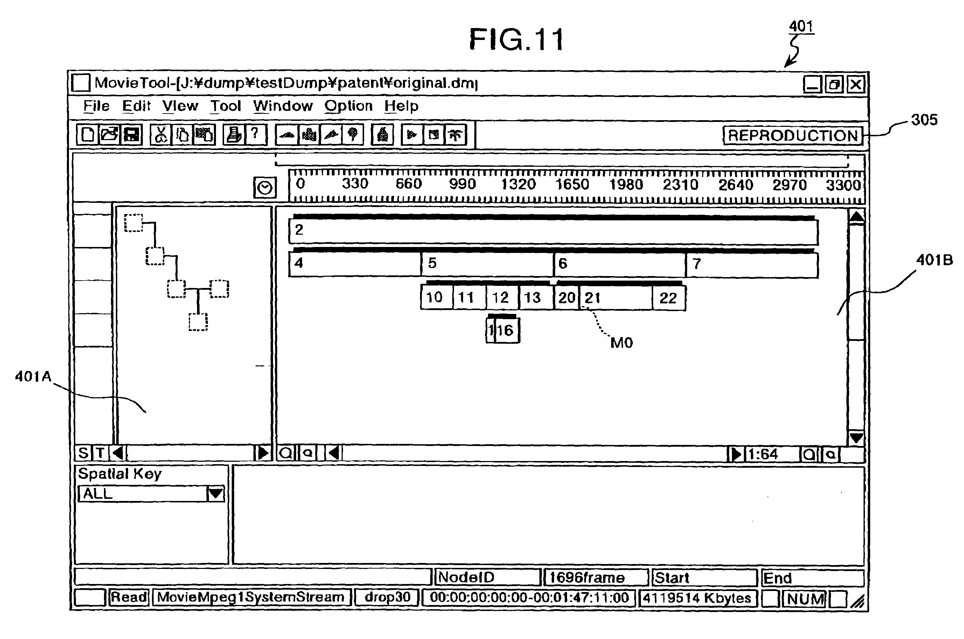

To be specific, take a case where the boundary on the start position side of the segment (number 21) (left boundary in FIG. 6) in the third hierarchy shown in FIG. 6 is designated and this boundary is changed (moved) to the position of the 1760^{th} frame from the start, as an example. First, the segment (number 21) in the structure display section 401A displayed on the structure editing screen 401 is clicked on using the mouse 205. As a result, the segment (number 21) is designated as a target segment. The left boundary position of the target segment (number 21) is clicked on using the mouse 25. After designating a boundary moving icon (not shown) is designated and an arbitrary position is clicked on as a moving position M0, then the structure editing software 208 moves the left boundary position of the target segment (number 21) to the moving position M0 as shown in FIG. 11. At this time, the ranges of the segments (numbers 20 and 22) adjacent the target segment (number 21) are changed to follow up boundary moving positions.

In the boundary moving processing 1, the following two boundary moving methods are conducted depending on how to move the boundaries between the target segment and the adjacent segments, respectively.

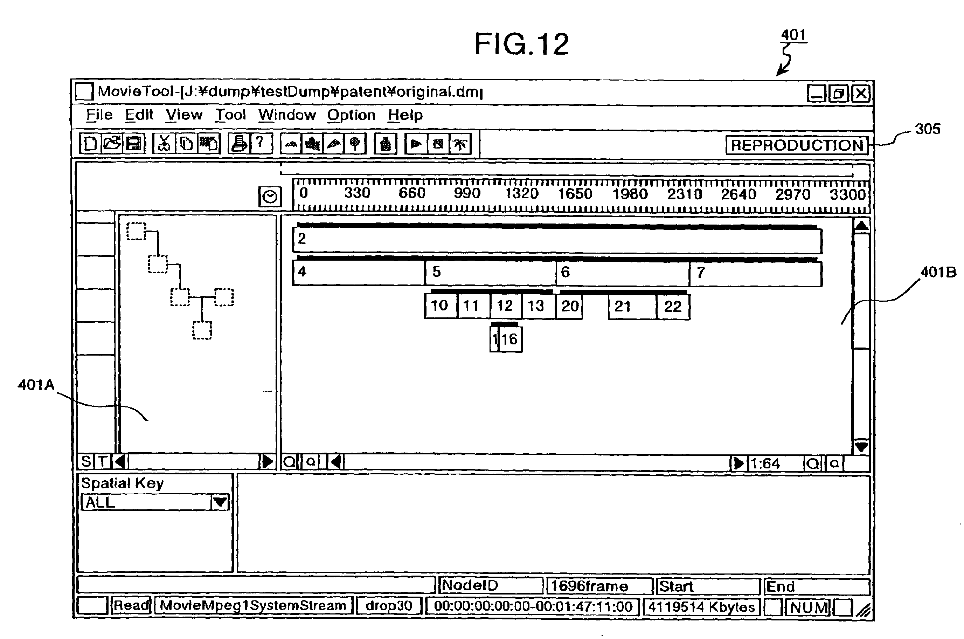

First boundary movement: Move only the start position or end position of the target segment and do not change the start positions or end positions of the other segments. In other words, leave a vacant region generated by the movement as it is (see FIG. 12).

Second boundary movement: Move the start position or end position of the target segment and move the end position or start position of the other segment in contact with the start position or end position of the target segment (see FIG. 11).

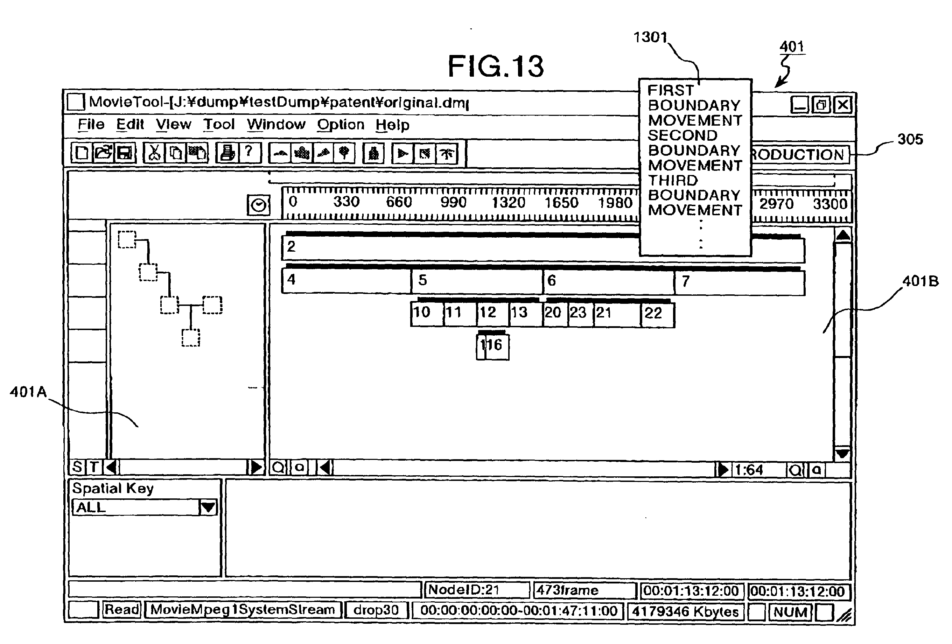

Third boundary movement: Move only the start position or end position of the target segment, do not change the start position or end position of the other segment, and insert a new segment so as to fill a clearance generated by the movement (see FIG. 13).

In FIG. 6, when the segment (number 20) is designated as a target segment, the right boundary position (end position) of the target segment (number 20) is designated and then this right boundary position is changed (moved) to the position of the 1760^{th} frame from the start, then a vacant region generated between the segment (number 20) and the segment (number 21) by the movement is left as it is as shown in FIG. 12. This case corresponds to the first boundary movement.

Further, as shown in FIG. 11, the respective boundaries between the target segment (number 21) and the segments (numbers 20 and 22) adjacent the target segments are always moved together with the movement of the boundary of the target segment. This case corresponds to the second boundary movement.

Furthermore, in FIG. 6, the segment (number 20) is designated as a target segment and the right boundary position (end position) of the target segment (number 20) is designated. Thereafter, when this right boundary position is changed (moved) to the position of the 1760^{th} frame from the start, a new segment (number 23) is inserted into the vacant region generatedbetween the segment (number 20) and the segment (number 21) as a result of the movement as shown in FIG. 13. This case corresponds to the third boundary movement.

Moreover, which of the first to third boundary moving processings is to be used can be easily determined by selecting a desired processing from, for example, a pull-down menu 1301 shown in FIG. 13 using the mouse 205.

### (Boundary Moving Processing 2)

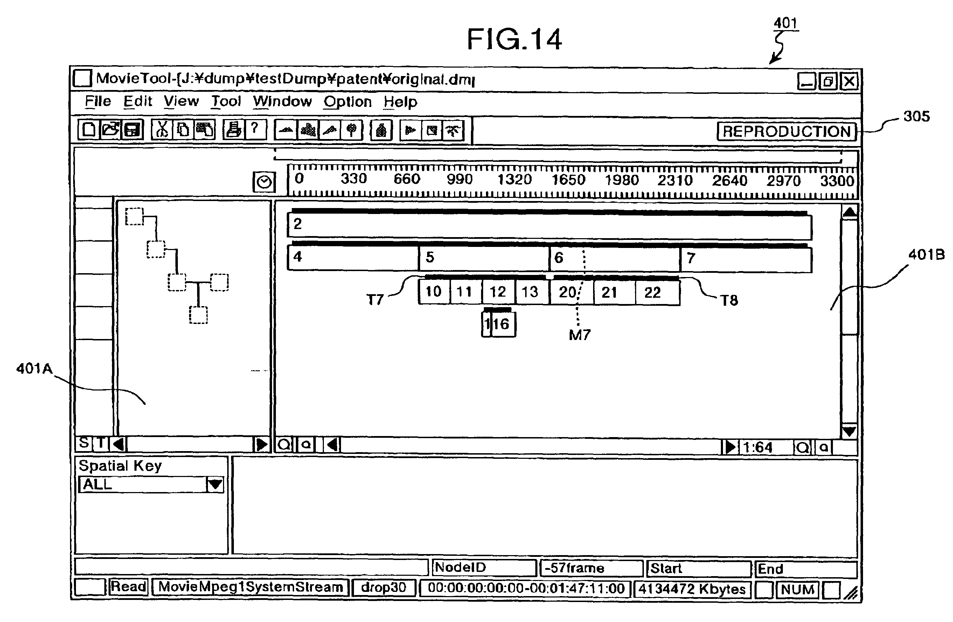

In the boundary moving processing 2, when a target segment has a package, the boundary of a segment in the package is also moved in accordance with the range of the target segment in the segment boundary movement. Take a case of moving the left boundary position of the segment (number 6) to a moving position M7 as shown in FIG. 14 as an example. The target segment (number 6) has a package T8 and the segment (number 5) adjacent the target segment has a package T7. In this state, when the left boundary position of the target segment (number 6) is moved to the moving position M7, the left boundary position of the segment (number 20) of the package T8 is also moved to the moving position M7 in accordance with the movement of the left boundary position of the target segment (number 6). Likewise, the right boundary position of the segment (number 13) of the package T7 is also moved to the moving position M7.

### (Boundary Moving Processing 3)

When a target segment has a package, the boundary of the package is also changed in accordance with the movement of the boundary of the target segment in the segment boundary movement. Due to this, it is necessary to temporarily develop the package at the time of moving the boundary of the target segment and to reconfigure a segment constituting the package in accordance with the boundary (range) of the package after the movement.

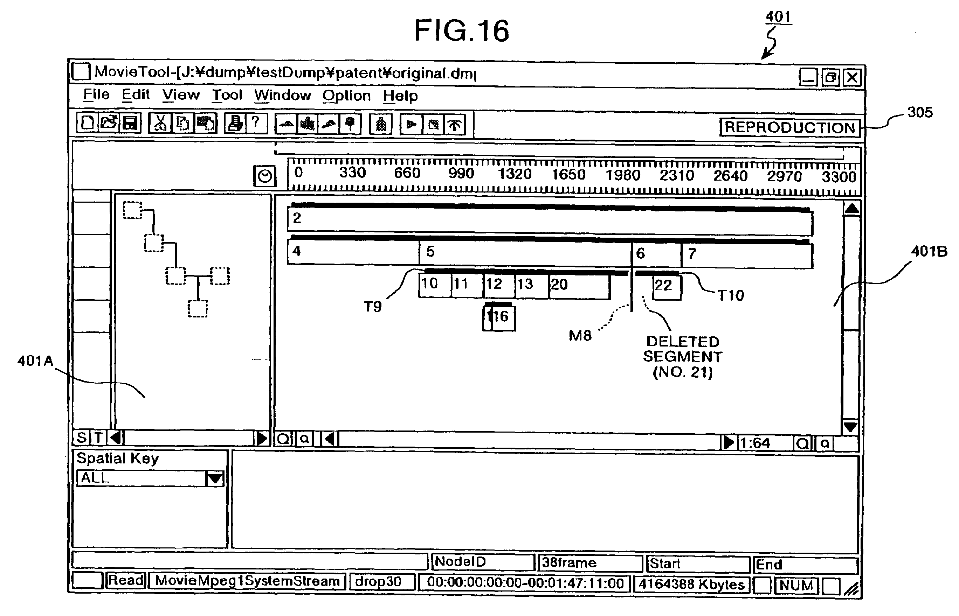

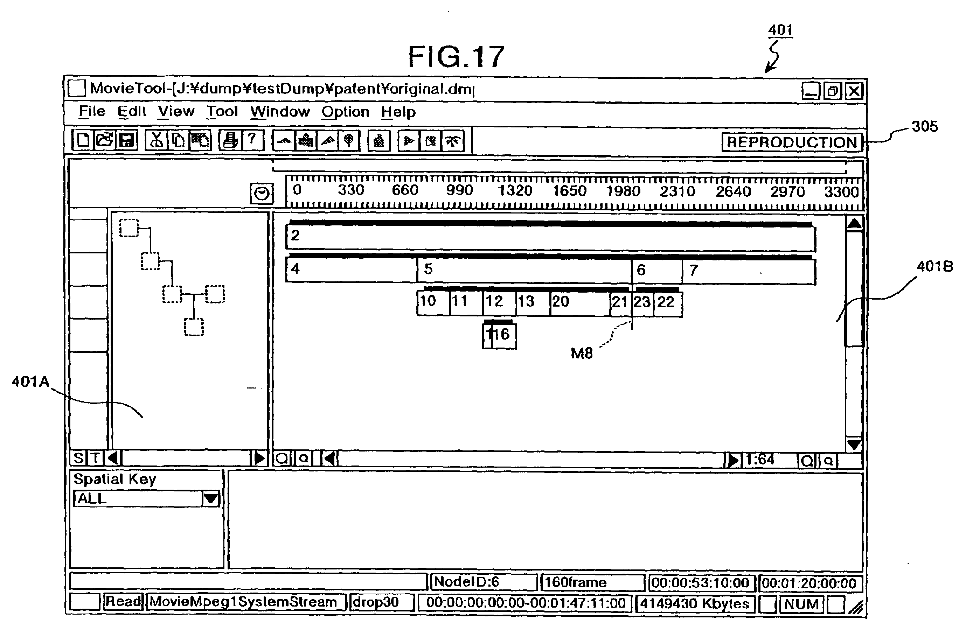

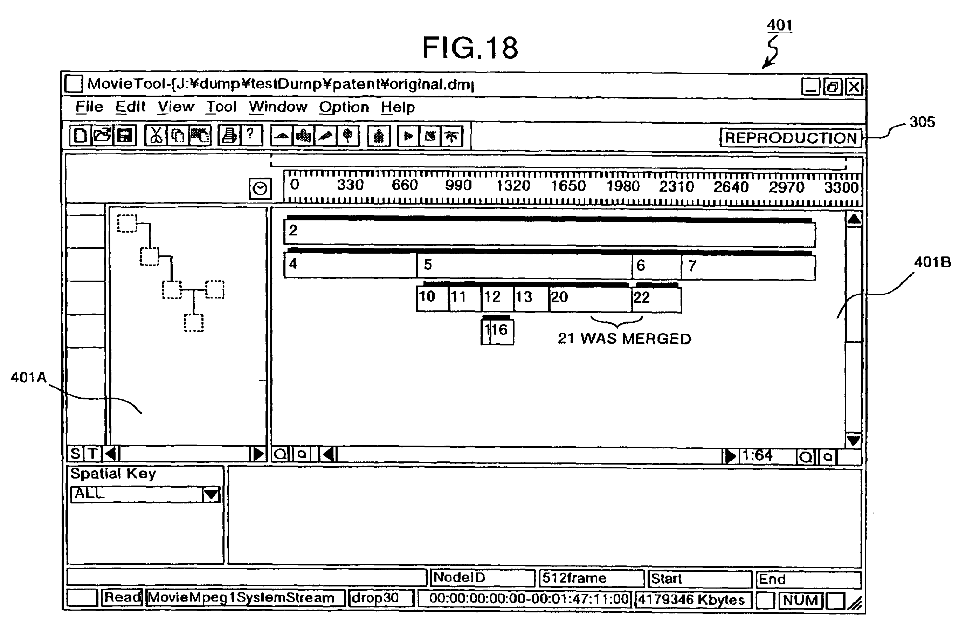

In addition, when the target position has structural elements below the package in the lower hierarchy, the segment in the lower hierarchy is cut in accordance with the movement of the boundary of the target segment in the boundary moving processing. In this case, the following three cutting methods are conducted:
First cutting: Delete structural elements below a segment to be cut by the movement of the boundary of a target segment (see FIG. 16).
Second cutting: Divide a segment to be cut by the movement of the boundary of a target segment (see FIG. 17).
Third cutting: Divide a segment to be cut by the movement of the boundary of a target segment and then merge the divided segments with adjacent segments, respectively (see FIG. 18).

As shown in FIG. 16, when the left boundary position of the segment (number 6) is moved to a moving position M8, the segment (number 21) is cut at the moving position M8. The segment thus cut (number 21) is deleted. This case corresponds to the first cutting processing. In this case, a package T9 consisting of segments (numbers 10, 11, 12, 13and20) and a package T10 consisting of a segment (number 22) are created after the cutting operation.

Further, as shown in FIG. 17, the segment (number 21) cut at the moving position M8 is divided into a segment (number 21) and a segment (number 23). This case corresponds to the second cutting processing.

Moreover, as shown in FIG. 18, the segment (number 21) cut at the moving position M8 is divided into two segments; i.e., a first half segment and a second half segment, the first half segment is merged with the segment (number 20) and the second half segment is merged with the segment (number 22). This case corresponds to the third cutting processing.

When there exists segments to be cut at the moving position M out of segments in hierarchies below the target segment, the first to third cutting processings are recursively applied to descendant segments up to the end segments.

### (Merging Processing)

Description will be given to a segment merging processing for merging a plurality of segments and replacing the merged segments by one segment. In the segment merging processing, when a plurality of target segments to be merged are designated and a merging processing icon (not shown) is selected, then the designated plural target segments are merged and replaced by one segment from the start position of the leading segment to the end position of the last segment on the basis of time series.

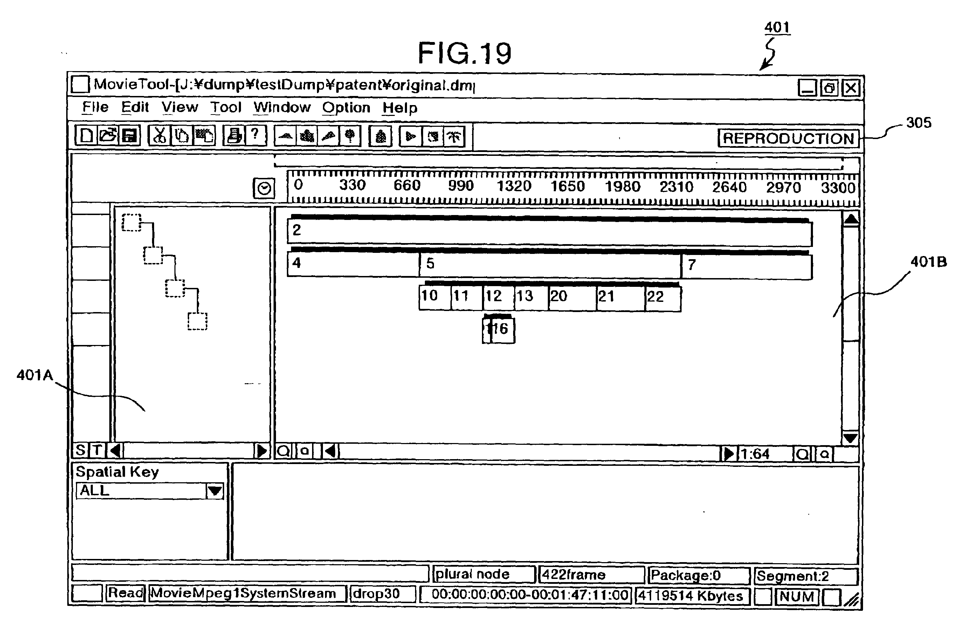

For example, when the segment (number 5) and the segment (number 6) shown in FIG. 6 are designated as target segments to be merged and a merging processing icon (not shown) is designated, then the target segment (number 5) and the target segment (number 6) are merged and replaced by one segment (number 5) as shown in FIG. 19. At this time, when the target segments have the structural elements of packages in the lower hierarchy, the packages are merged following the merger of the target segments. In the example of FIG. 19, packages below the new one segment (number 5) generated as a result of the merger of the target segments are merged into one package consisting of segments (numbers 10, 11, 12, 13, 20, 21 and 22). That is, when a target segment has at least one child package, the package is merged into one package and all the child segments of each package are managed.

### (Package Hierarchy Upgrading Processing)

A package hierarchy upgrading processing will be described. In the package hierarchy up grading processing in the first embodiment, a target package is designated, all segments as the constituent elements of the target package replace the higher segments of the target package to thereby upgrade the target package by one hierarchy.

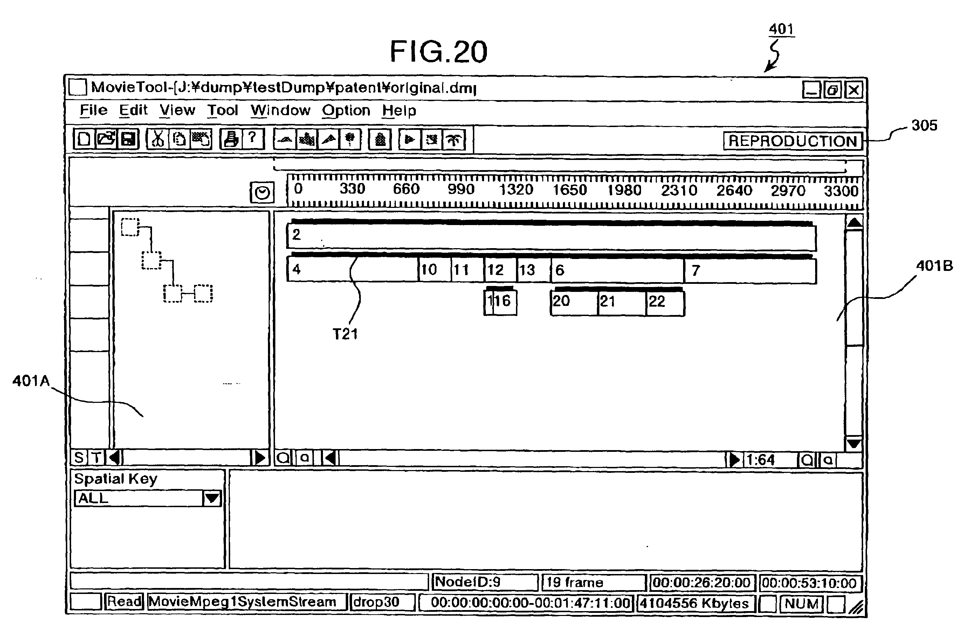

For example, when the package T20 shown in FIG. 6 is designated as a target package and a package hierarchy upgrading processing icon (not shown) is designated, then the target segment (number 5) above the package T20 is replaced by segments (numbers 10, 11, 12 and 13) constituting the package T20 as shown in FIG. 20. As a result, the target package T20 is included in the package T21 higher by one hierarchy than the package T20, meaning that the target package T20 is upgraded by one hierarchy. In accordance with this package hierarchy upgrading, the segments (numbers 10, 11, 12 and 13) arranged in the third hierarchy in FIG. 6 are moved to the second hierarchy and the segments (numbers 15 and 16) arranged in the fourth hierarchy are moved to the third hierarchy.

### (Segment Hierarchy Downgrading Processing)

A segment hierarchy downgrading processing will be described. In this processing, a plurality of segments existing in a certain hierarchy are designated, one new package is created out of these plural segments, the plural segments are merged into one new segment, the new segment is arranged in the hierarchy in which the plural segments have existed and a new package (i.e., a plurality of segments) are arranged in a hierarchy below the new segment. In other words, a plurality of segments are downgraded by one hierarchy.

By way of example, description will be given to a case where three segments (numbers 5, 6 and 7) out of the segments existing in the second hierarchy shown in FIG. 6 are designated as target segments. Here, it is requisite that a plurality of segments which can be designated as target segments be segments adjacent one another in the same package. That is, when another segment exists between the two segments to be designated, the segment hierarchy downgrading processing in the first embodiment is not available. In that case, it is necessary to individually carry out a segment downgrading processing or realize a desired segment hierarchy downgrading processing in combination with the other processing.

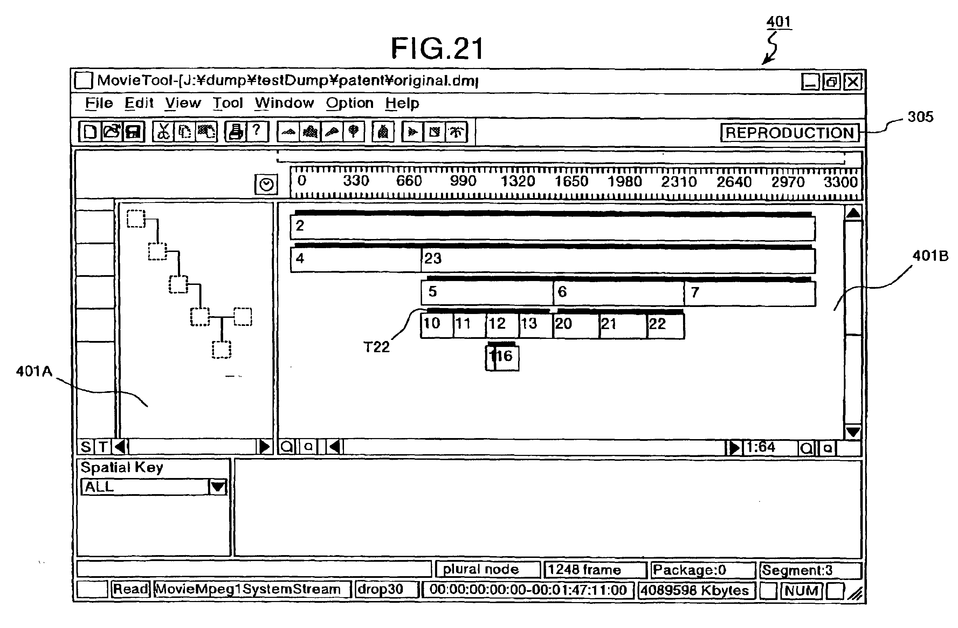

When target segments (numbers 5, 6 and 7) are designated in the second hierarchy and a segment hierarchy downgrading processing icon (not shown) is designated, then a segment (number 23) is created as a new segment and the segment (number 23) is arranged above the target segments (numbers 5, 6 and 7) in the second hierarchy as shown in FIG. 21. At the same time, one package T22 is created out of the target segments (numbers 5, 6 and 7) and the new package T22 is arranged in the hierarchy (third hierarchy) below the segment (number 23). At this time, as is obvious from FIG. 21, when the constituent elements of packages or the like exist in lower hierarchies like the segments (numbers 5 and 6), the constituent elements are downgraded by one hierarchy, respectively, in response to the downgrade of the segments (numbers 5 and 6) by one hierarchy.

### (Segment Hierarchy Upgrading Processing)

A segment hierarchy upgrading processing will be described. In the segment hierarchy upgrading processing, a plurality of segments existing in a certain hierarchy are designated, a segment above a package including the plural target segments is defined as a parent segment, the parent segment is divided into a new segment in a range covering the plural target segments and the other segments, and the plural target segments are replaced by the new segment.

By way of example, description will be given to a case where three segments (numbers 11, 12 and 13) are designated as target segments out of the segments existing in the third hierarchy shown in FIG. 6. Here, it is requisite that a plurality of segments which can be designated as target segments be segments adjacent one another in the same package.

When the target segments (numbers 11, 12 and 13) are designated in the third hierarchy and a segment hierarchy upgrading processing icon (not shown) is designated, then the parent segment (number 5) of the designated target segments in the third hierarchy is divided into a new segment in a range covering the target segments (numbers 11, 12 and 13) and the other segments. At this time, when the parent segment is divided into two segments including a new segment, the segment other than the new segment takes over the number of the parent segment. Also, when the parent segment is divided into three segments including a new segment, a segment on the start position side of the parent segment out of segments other than the new segment takes over the number of the parent segment and a new segment number is allotted to the segment on the end position side.

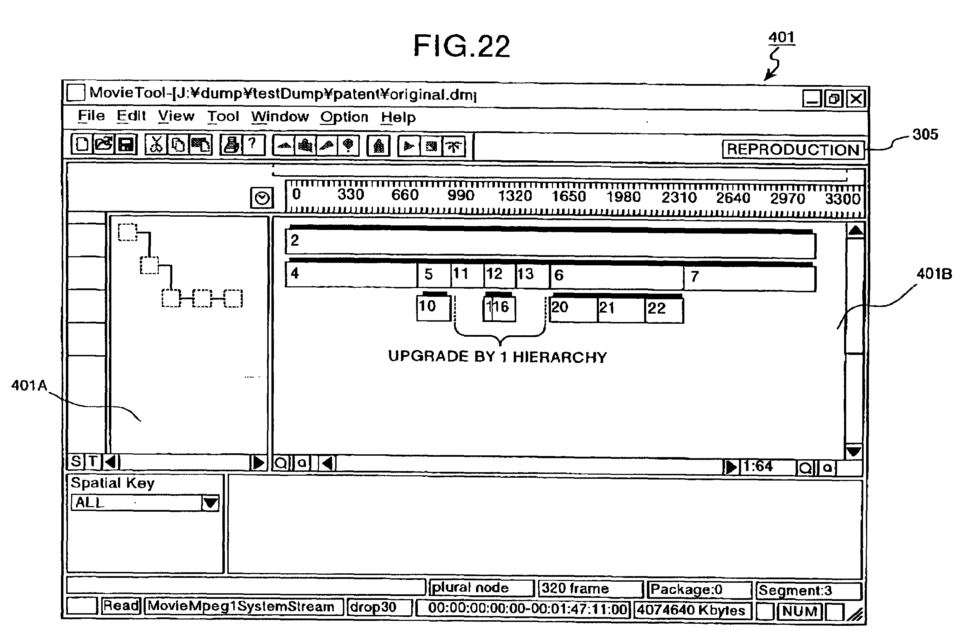

Thereafter, the new segment in the second hierarchy is replaced by the target segments (numbers 11, 12 and 13) in the third hierarchy and the target segments are upgraded by one hierarchy as shown in FIG. 22. At this time, when the constituent elements of packages or the like exist in hierarchies below the target segments, the lower constituent elements are upgraded by one hierarchy, respectively, to follow the upgrade of the target segments by one hierarchy.

### (Segment Deletion Processing)

A segment deletion processing will be described. In the segment deletion processing, a segment designated as a target segment is deleted. At this time, the following processings (1) to (4) are carried out to process a clearance generated after deleting constituent elements below the target segment:
(1) No post-processing.
(2) Extend the boundary of a segment right before a target segment (first processing).
(3) Extend the boundary of a segment right after a target segment (second processing).
(4) Designate one point in the range of a target segment and extend the boundaries of segments right before and after the target segment toward respective designated positions (third processing).

By way of example, description will be given to a case where the deletion of the segment (number 6) is designated in FIG. 6.

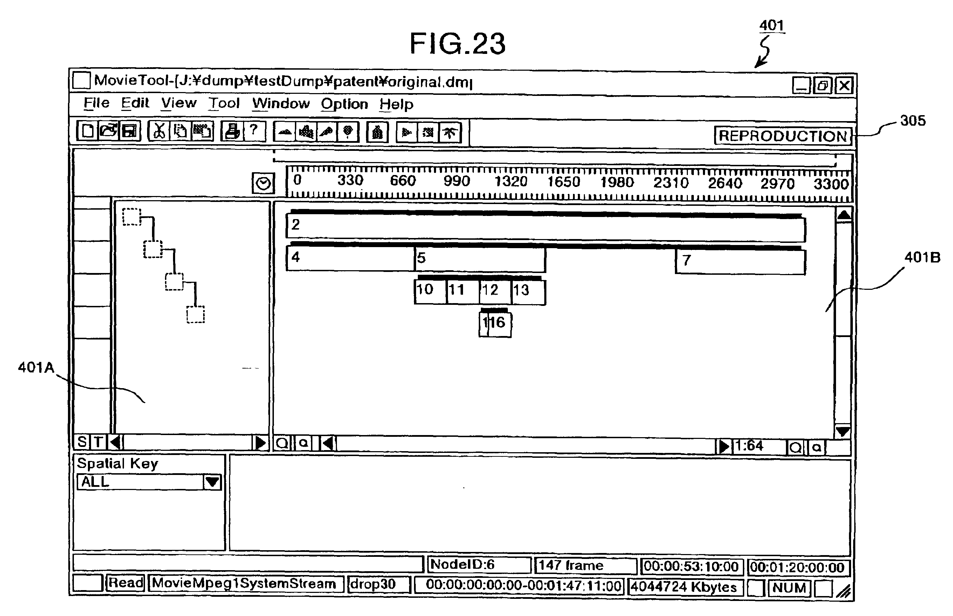

When no post-processing is carried out, as shown in FIG. 23, all the constituent elements below the segment (number 6) are deleted by the deletion of the segment (number 6).

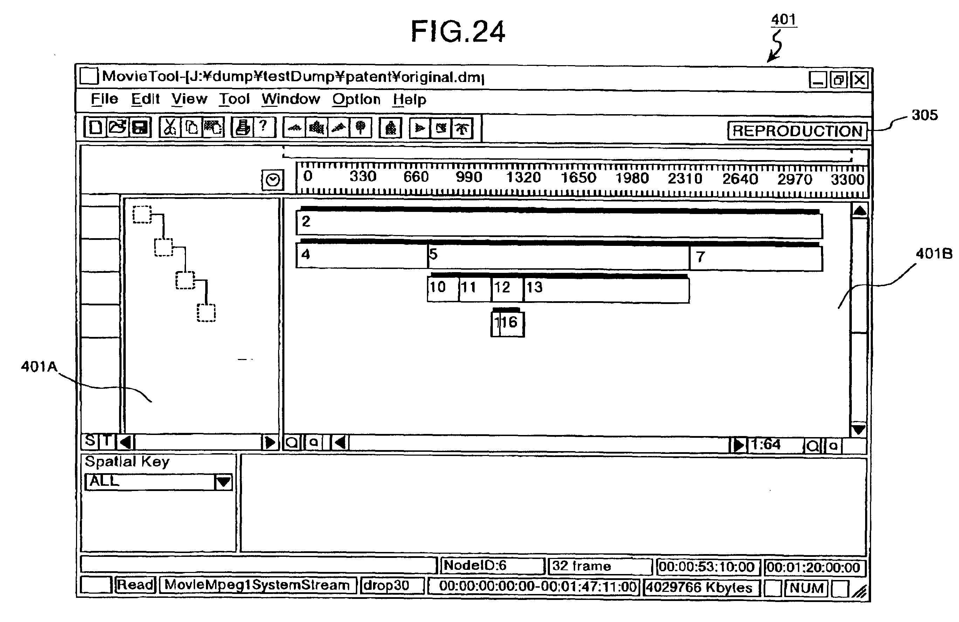

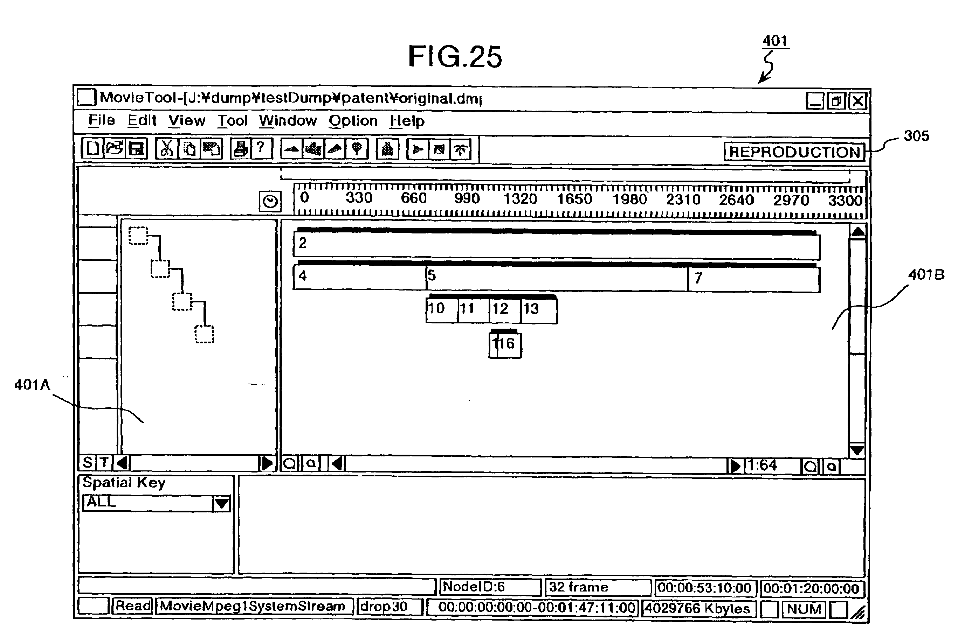

(2) In case of the first processing, the boundary of the segment (number 5) right before the segment (number 6) is extended toward the segment (number 7) in the second hierarchy in which the target segment (number 6) has existed as shown in FIG. 24. At this time, in the third hierarchy, the boundary of the segment (number 13) may be extended toward the right boundary position of the deleted segment (number 22). Alternatively, as shown in FIG. 25, the third hierarchy may be left deleted.

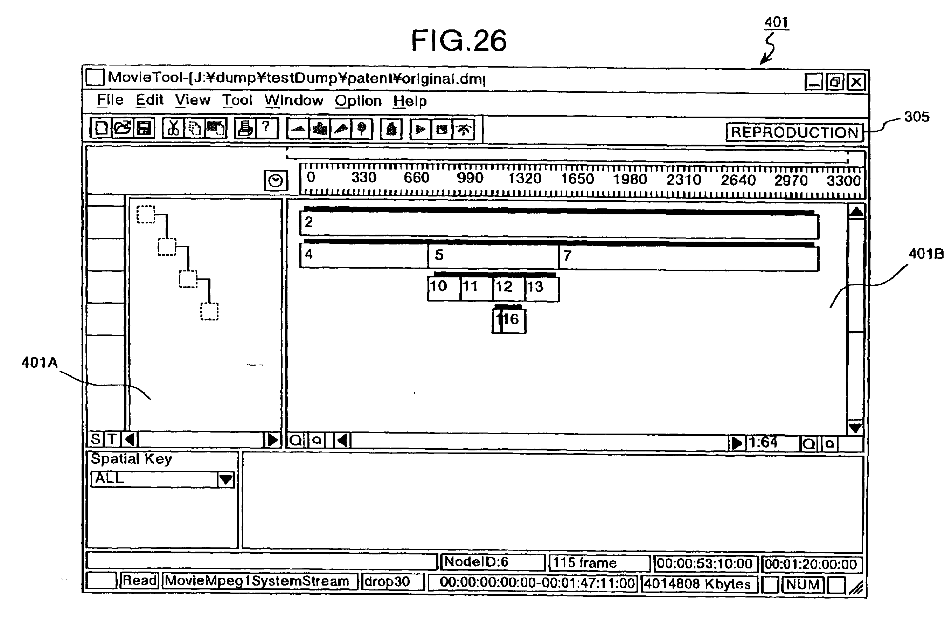

(3) In case of the second processing, as shown in FIG. 26, the boundary of the segment (number 7) right after the target segment (number 6) is extended toward the segment (number 5) in the second hierarchy in which the target segment (number 6) has existed. In the third hierarchy, no segment exists right after the segment (number 22) and the segments (numbers 20, 21 and 22) are, therefore, deleted.

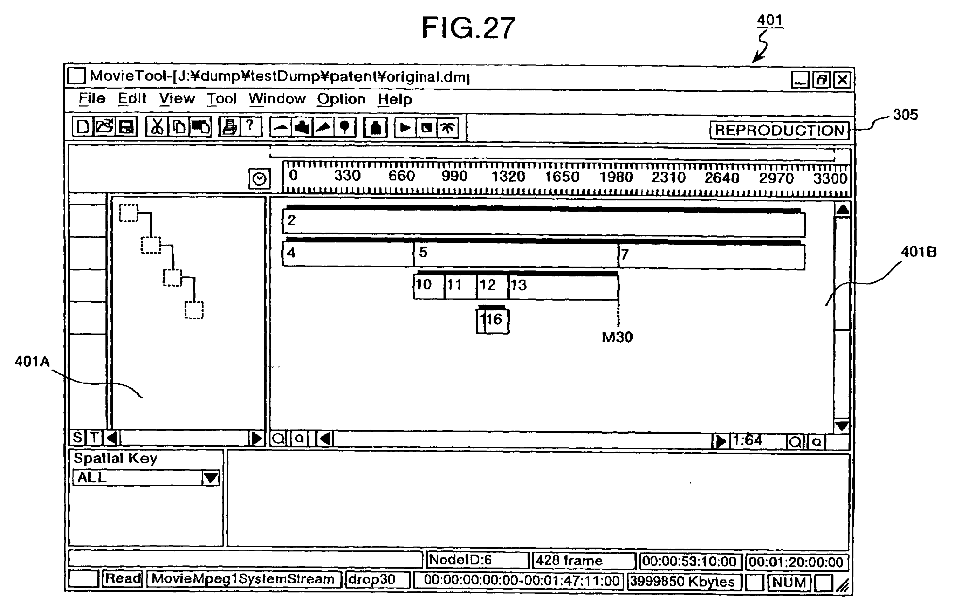

(4) In case of the third processing, as shown in FIG. 27, one point M 30 in the range of the target segment is designated and the boundaries of the segment (number 5) right before the target segment and of the segment (number 7) right after the target segment are extended toward respective designated positions.

It is noted that which of the processings (1) to (4) is to be used can be easily determined by selecting a desired processing from a pull-down menu (not shown) using the mouse 205. (Package Deletion Processing)

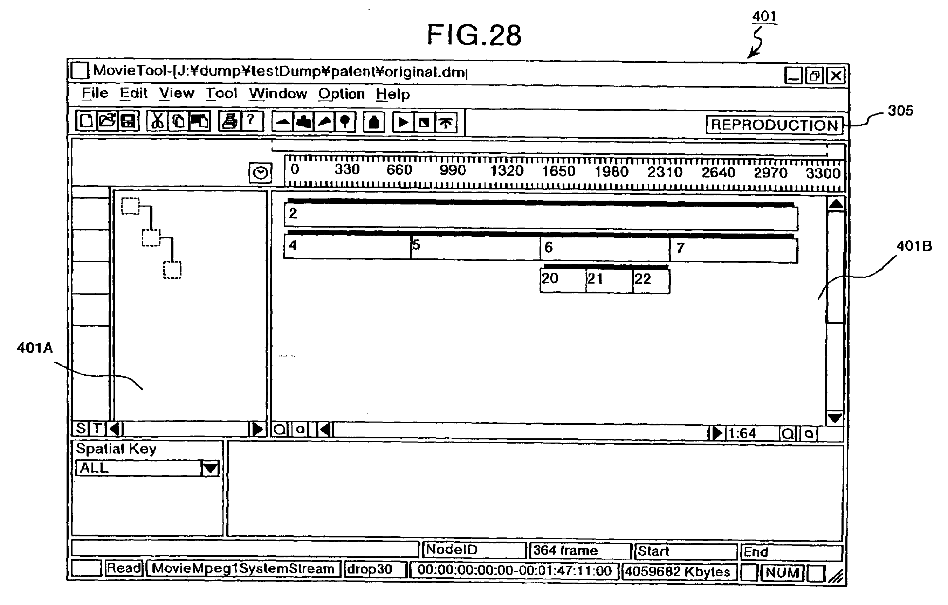

A package deletion processing will be described, In the package deletion processing, constituent elements below a target package are deleted. To be specific, when the package T20 is designated as a target package in FIG. 6, constituent elements below the package T20 are deleted as shown in FIG. 28.

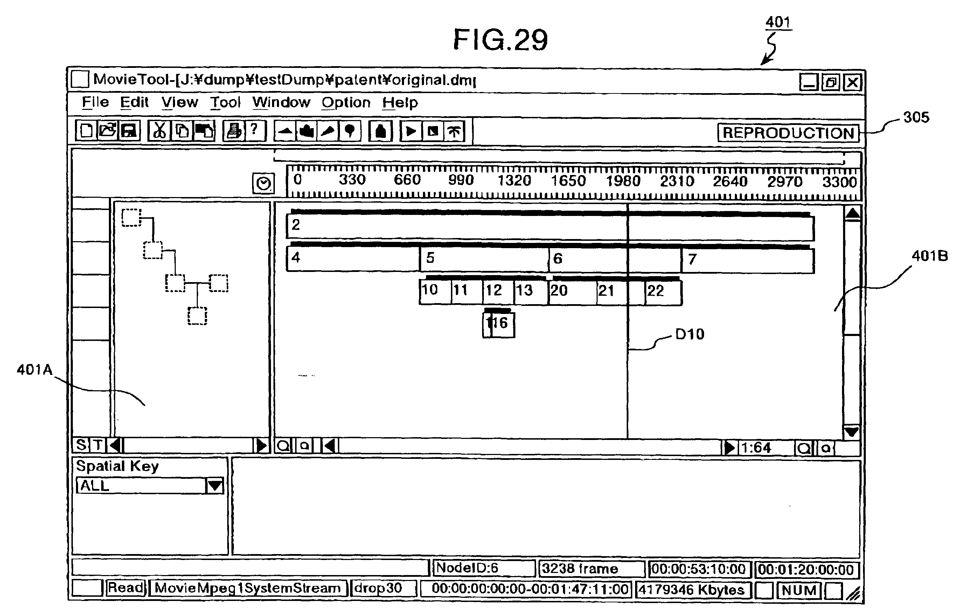

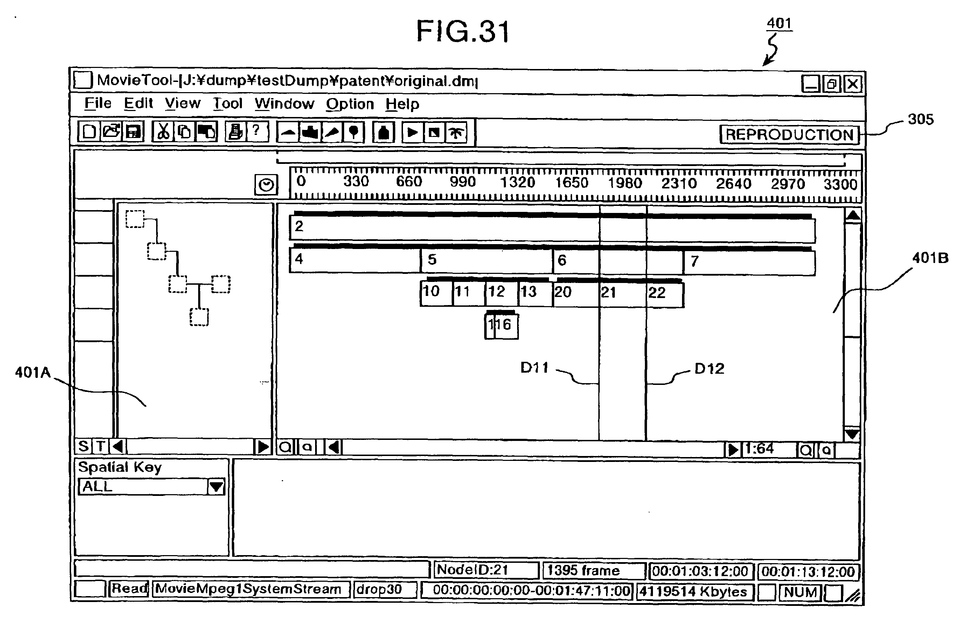

In the above description, no mention is made to line segment displays or the like when a dividing position or a moving position is designated. However, as shown in FIGS. 29 and 31, when line segment displays D10 to D12 are displayed so as to survey a moving position or a dividing position from the first to the lowest hierarchies in the hierarchical structure and these line segment displays D10 to D12 are freely translated by the mouse 205 to determine the dividing or moving position, then visibility and operation efficiency are advantageously improved.

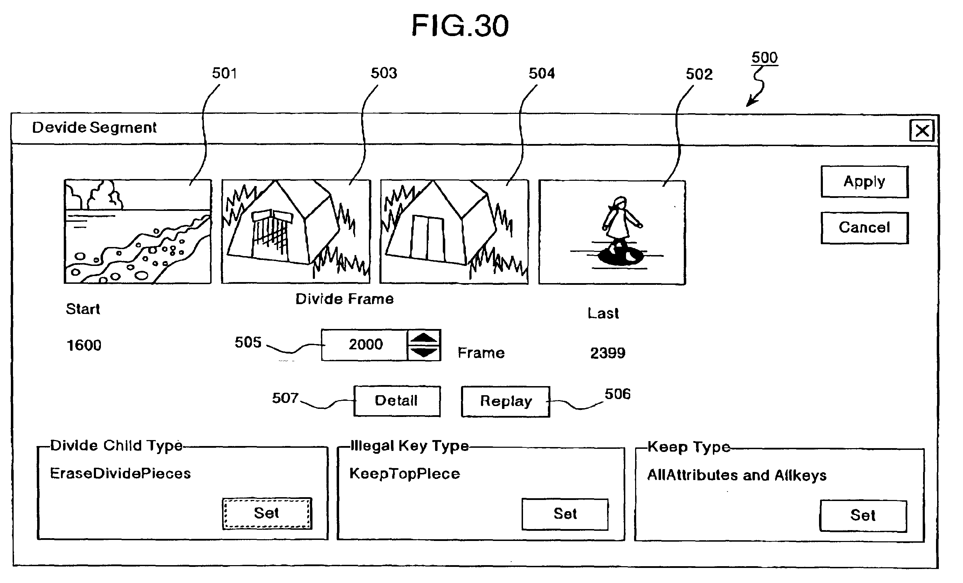

Further, FIG. 30 shows an example of an operation dialog 500 for carrying out a segment dividing processing. The operation dialog 500 supports segment division and is effective for strict correction in units of frames. The operation dialog 500 is displayed on the screen at timing, for example, at which a target segment is designated and a segment dividing processing is designated. In FIG. 30, reference symbol 501 denotes a frame at the start position of the target segment, 502 denotes a frame at the last position of the target segment and 504 denotes a division target candidate frame (frame at a dividing position designated by the line segment display D10 shown in FIG. 29). Also, reference symbol 503 denotes a frame right before the division target candidate frame.

Further, reference symbol 505 denotes a numerical value input section for inputting the frame number of the frame at the dividing position when designating the dividing position. When the frame number of the frame at the dividing position is inputted into the numerical value input section 505 and/or the line segment display D10 is moved, then the displays of the frames 503 and 504 are changed.

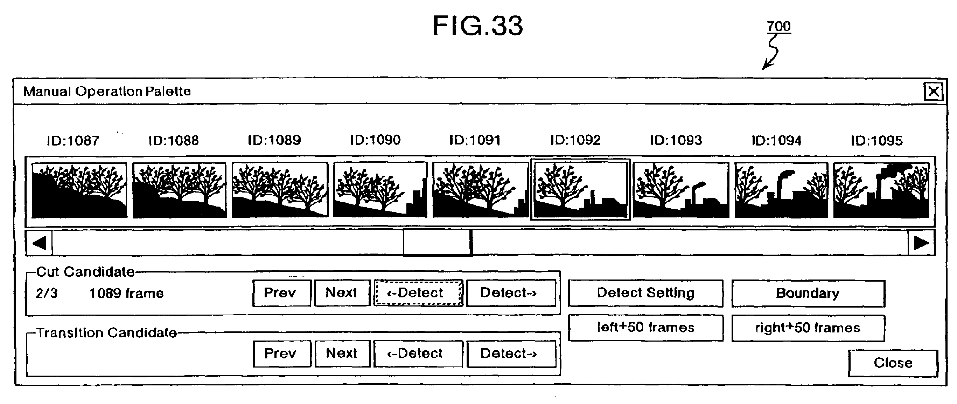

Reference symbol 506 denotes a reproduction button for designating the reproduction of a target segment and 507 denotes a frame candidate select button for selecting a division target candidate frame when conducting segment division. When this frame candidate select button 507 is clicked on, a frame continuous display screen 700 shown in FIG. 33 appears. On the frame continuous display screen 700, the peripheries of the candidate frame (frame 504) designated at that time are displayed as continuous frames.

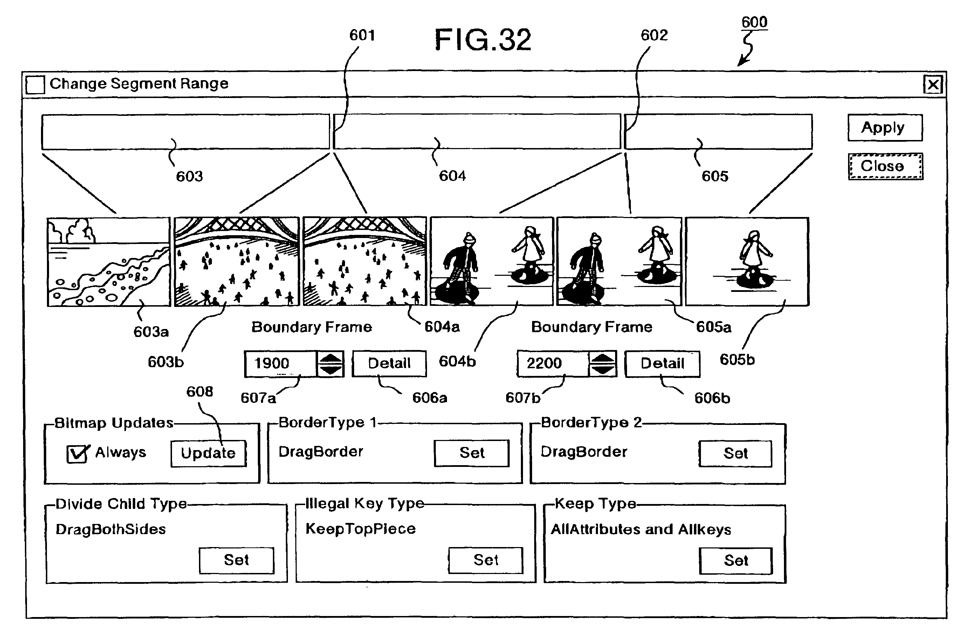

FIG. 32 shows one example of an operation dialog 600 for carrying out a segment boundary moving processing. The operation dialog 600 supports the segment boundary movement when a moving positionis inunits of frames. The operation dialog 600 is effective for strictly correcting a segment in units of frames. The operation dialog 600 is displayed on the screen at timing, for example, at which a target segment is designated and a segment boundary moving processing is designated. In FIG. 32, reference symbols 601 and 602 correspond to the line segment displays D11 and D12 shown in FIG. 31.

Also, reference symbol 604 denotes a target segment, 604a denotes a frame at the start position of the target segment (start frame), 604b denotes a frame at the last position of the target segment (last frame), 603 denotes a segment right before the target segment, 603a denotes a frame at the start position of the segment right before the target segment, 603b denotes a frame at the last position of the segment right before the target segment, 605 denotes a segment right after the target segment, 605a denotes a frame at the start position of the segment right after the target segment, and 605b denotes a frame at the last position of the segment right after the target segment.

Further, reference symbols 607a and 607b denote numerical value input sections for inputting the frame number of a frame at a moving position when the moving position is designated, respectively. When the frame number of a candidate frame at the moving position is inputted into the numerical value input section 607a, the boundary 601 (line segment display D11) is moved to the position of the frame number inputted. When the frame number of a candidate frame at the moving position is inputted into the numerical value input section 607b, the boundary 602 (line segment display D12) is moved to the position of the frame number inputted and the displays of the frames 604a and 604b are changed.

Reference symbols 606a and 606b denote candidate frame select buttons for selecting a candidate frame at a moving position when a segment boundary is moved. When the candidate frame select button 606a is clicked on, the frame continuous display screen 700 shown in FIG. 33 appears. At this time, on the frame continuous display screen 700, the peripheries of the candidate frame designated at that time are displayed as continuous frames.

when a dividing position or a moving position is in the units of frames and it is necessary to check peripheral frames so as to appropriately determine a division target frame or a boundary frame, it is effective to conduct checking and selection on the frame continuous display screen 700. A frame number can be specified by an input interface indicating only a frame number. In this case, however, it is necessary to check frames before and after a candidate frame by another method and efficiency is, therefore, deteriorated. When a processing for correcting an error of a cut point (dividing position) of a segment created by being roughly designated by manual operation is carried out, in particular, a candidate point can be obtained by using a cut detect algorithm on the frame continuous display screen 700 and operation efficiency is advantageously improved. This operation is easy to recognize visually. When it is necessary to refer to pictures, a target position on the frame continuous display screen is discovered by reproduction and the same operation is carried out. This advantageously facilitate selecting an appropriate frame.

Further, in FIG. 32, reference symbol 608 denotes an update button for updating the displays of the respective frames (603a, 603b, 604a, 604b, 605a and 605b) appearing on the operation dialog 600. When clicking on this update button 608, the bitmap displays of the respective frames are updated. When a segment boundary is moved by the segment boundary moving processing, the displays of the respective frames (603a, 603b, 604a, 604b, 605a and 605b) appearing on the operation dialog 600 can be selectively updated only when the update button 608 is clicked on or updated at set update timing. Basically, when the update button 608 is clicked on while a checkbox "Always" is selected (marked), each display is updated every time a segment boundary is changed. When the update button 608 is clicked on while keeping the checkbox "Always" unselected (unmarked), an update timing (change interval) setting dialog (not shown) is displayed and a change interval can be designated in the setting dialog. It is also possible to designate "no update" at this time. When the update timing is designated according to the change interval, it is possible to improve a processing speed. Besides, when "no update" is designated, each display is updated only at the timing at which the update button is clicked on. It is, therefore, possible to dispense with display updating and further improve the processing speed.

A program realizing the respective unit of the picture structure editing apparatus (structure editing apparatus) in the first embodiment is recorded on a computer readable computer product such as a hard disk, a floppy disk, a CD-ROM, an M0 or a DVD and executed after the program is read by the computer from the computer product. This program can be distributed through the computer product or distributed through a communication network such as the Internet.

The second embodiment in which an object content structure management method, an object content structure display method and an object concent structure editing method according to the present invention are applied to an object editing apparatus, will be described here inafter in detail in the following order with reference to the accompanying drawings:
(1) Outline of second embodiment.
(2) Configuration of object editing apparatus in second embodiment.
(3) Operation Example of second embodiment.
(4) Other embodiments.

### (1) Outline of Second Embodiment

The second embodiment manages, display and/or edits the content structure of objects, each of which object content structure is expressed by a tree-structure set membership consisting of 0 or at least one object and in which structure, the attributes which each object can hold for each object type and object types are defined by schema definition. Namely, when an object consists of not less than 0 attribute and not less than 0 other object and the attributes which the object can hold for each object type and the types of the objects are defined by schema in advance, then the second embodiment is intended to manage the actual configurations and contents of the objects in combination with definition information (schema definition) thereon, to visualize them to be recognizably displayed, and to edit them.

The second embodiment relates to a technique for displaying the content of an object as an actual instance, facilitating the editing of the content, outputting an editing result to refer to the content, and storing the content so as to be reused while using the actual configurations and contents of the objects as well as definition information thereon. At the same time, this embodiment is intended to manage schema which defines the configurations of the objects and to recognizably display the schema.

According to the present invention, the structures of instance objects in combination with schema-defined structures thereof are displayed, for example, in an intuitively recognizable manner.

While the schema definition directly represents the structure of each object, it does not take the form of an instance. Consider the following schema definition:
1. An object A has one object B.
2. The object B has one object C.
3. The object C has not less than one or plural objects A.

As already stated above, when this schema structure is displayed according to the conventional method, three structures having the objects A, B and C set as roots, respectively, are arranged. However, in this method, the object C has the object A so that this makes it difficult to recognize that the object A is cyclically referred.

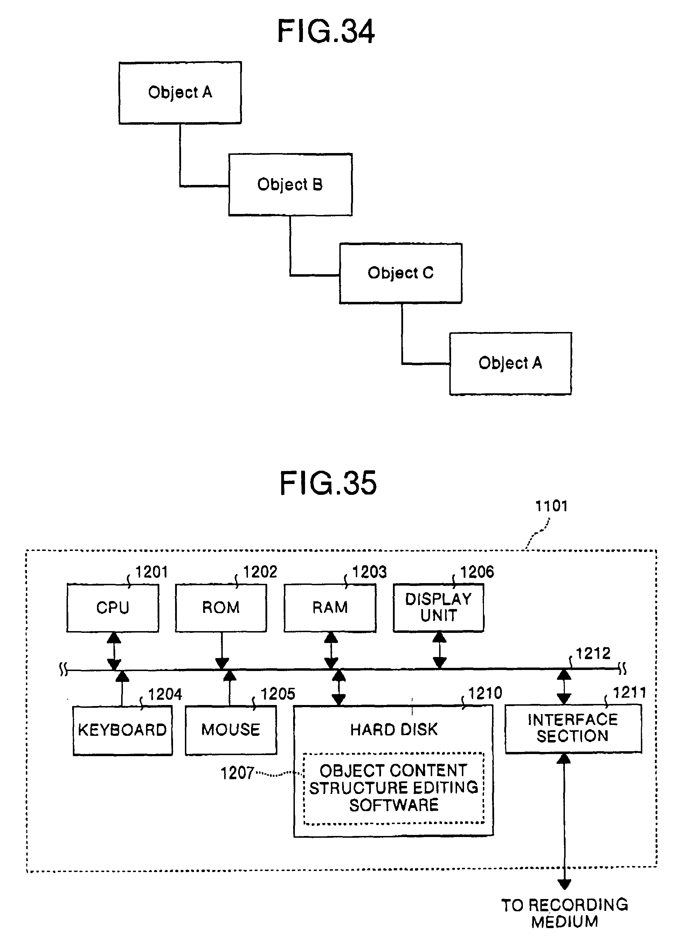

To solve the disadvantage, a combination of a schema structure and an instance object structure are displayed in the second embodiment. In this case, when no instance object basically exists, only the schema structure is displayed. According to the display method of the present invention, the objects are displayed as shown in FIG. 34 when a display hierarchy level is 4. This structure is close to an actual instance sample structure and easy to understand intuitively. Here, when the display hierarchy level is upgraded, the objects B and C are repeated below the object A (object A in the Figure) according to the level number.

### (2) Configuration of Object Editing Apparatus in Second Embodiment

FIG. 35 is a block diagram of an object editing apparatus to which an object content structure management method, an object content structure display method and an object content structure editing method are applied in the second embodiment. In this embodiment, the object editing apparatus will be described while taking an XML object editing editor as an example.

A computer 1101 serving as an object editing apparatus includes a CPU 1201 executing processings based on software to be described later, an ROM 1202 storing a boot program and the like, an RAM 1203 used as the work area of the CPU 1201, a keyboard 1204 and a mouse 1205 for conducting various input operations, a display unit 1206, such as a CRT or a liquid crystal display, having a display screen displaying an object content structure, a hard disk 1210 storing an object content structure editing software 1207 for realizing the object content structure management method, the object content structure display method and the object content structure editing method of the present invention and other various application programs as well as data, an interface section 1211, such as various drivers and a network adapter, for transmitting and receiving data to and from an external unit connected to the computer 1101 through a network which is not shown or a computer product such as a floppy disk, a CD-ROM, an M0 or a DVD, and a bus 1212 mutually connecting the constituent elements.

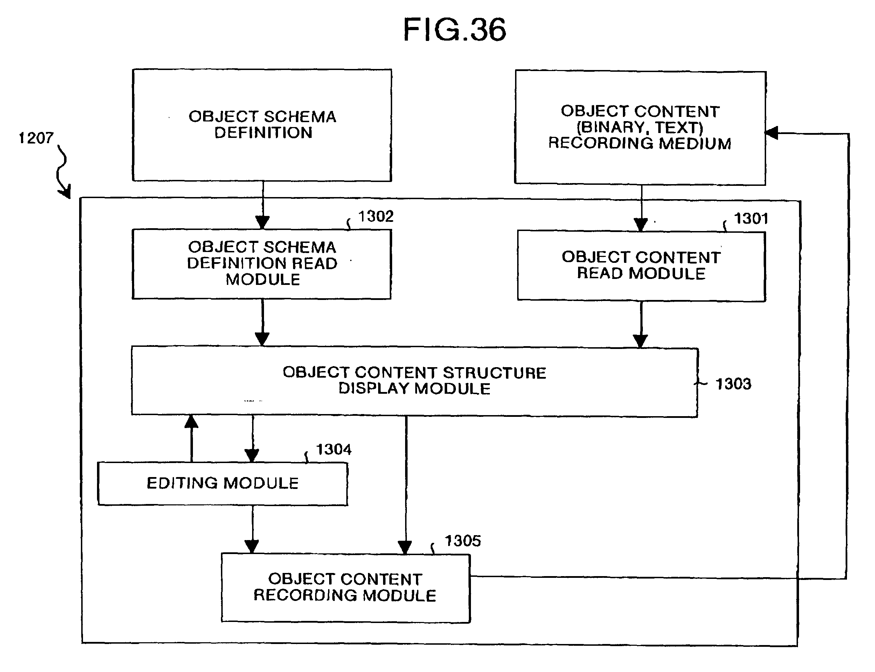

FIG. 36 is a schematically functional block diagram of modules constituting the object content structure editing software 1207 shown in FIG. 35, The modules involve an object content read module 1301 reading an object content described by binary data or text from the computer product or the like, an object schema definition read module 1302 reading object schema definition from the computer product or the like, an object content structure display module 1303 inputting the object content and the object schema definition through the object content read module 1301 and the object schema definition read module 1302, an editing module 1304 editing the object content structure displayed by the object content structure display module 1303, and an object content recording module 1305 outputting the object content structure which is being displayed by the object content structure display module 1393 or which has been edited by the editing module 1304 to the computer product or the like.

### (3) Operational Example of Second Embodiment

With the configuration, the object editing apparatus in the second embodiment operates as an XML object editing editor conducting editing including the editing of MPEG-7 attribute description. First, the schema definition of an object and the content of the object are read from the computer product through the object content read module 1301 and the object schema definition read module 1302 and managed on the memory (RAM 1203 or hard disk 1210). While both the schema definition of the object and the content of the object are read from the computer product in this example, it is also possible to read only the schema definition and to newly create an object. Alternatively, when it is not particularly necessary to dynamically change operation in accordance with the schema definition, the schema definition may be considered to be fixed and may not be read from the computer product.

The examples of input data (object content structure) inputted by the object content read module 1301 are as follows:

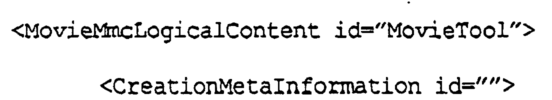

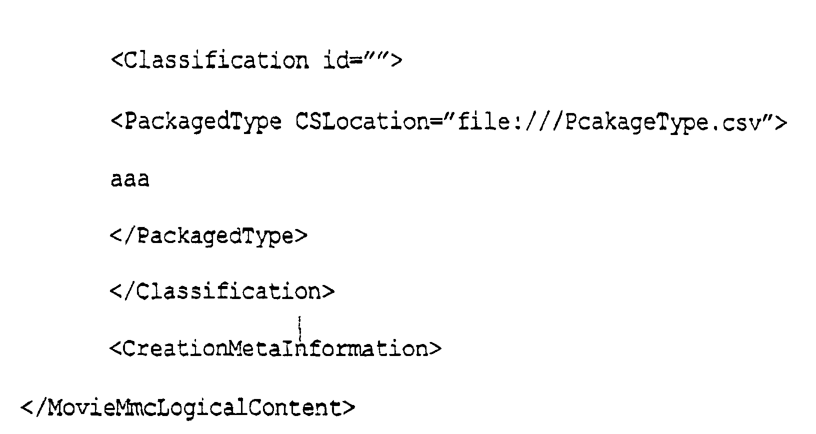

The schema definition will be described while referring to concrete examples.

Each of the following definitions (1) to (8) conceptually represents a part of the schema definition used in the second embodiment. The structure of an object is managed according to this schema definition. The use of plural schema definitions is prohibited unless described otherwise.
(1) Definition of MovieMmcLogicalContent
   Probable objects are as follows. Their attributes are not mentioned herein:
   . IPR
   . CreationMetaInformation
   . UsageMetaInformation
   . MediaTime
(2) Definition of CreationMetaInformation
   Probable objects are as follows. Their attributes are not mentioned herein.
   . Creation
   . Classification
   . RelatedMsterial
(3) Definition of Classification
   Probable objects are as follows. Their attributes are not mentioned herein.
   . Genre
   . PackagedType (can be plural)
   . Purpose
   . AgeClassification
   . MarketClassification
(4) Definition of PackagedType
   No probable objects. Attributes are as follows.
   . ControlledTerm::CSName
   . ControlledTerm::CSTermID
   . ControlledTerm::CSLocation
   . ControlledTerm::CtermElement
(5) Definition of MediaTime
   Probable objects are as follows. Their attributes are not mentioned herein.
   . MediaTimePoint, MediaRelTimePoint or MediaRelIncrTimePoint
   . MediaDuration or MediaIncreDuration
(6) Definition of MediaTimePoint
   No Probable objects. Attributes are as follows.
   . Year
   . Month
   . Day
   . Hour
   . Min
   . Sec
   . Frame
(7) Definition of RelatedMaterial
   Probable objects are as follows. Their attributes are not mentioned herein.
   . MediaType
   . MediaLocator
   . MediaInformation
   . CreationMetaInformation (*take care not to repeat)
   . UsageMetaInformation
(8) The other detailed definitions are not described herein.

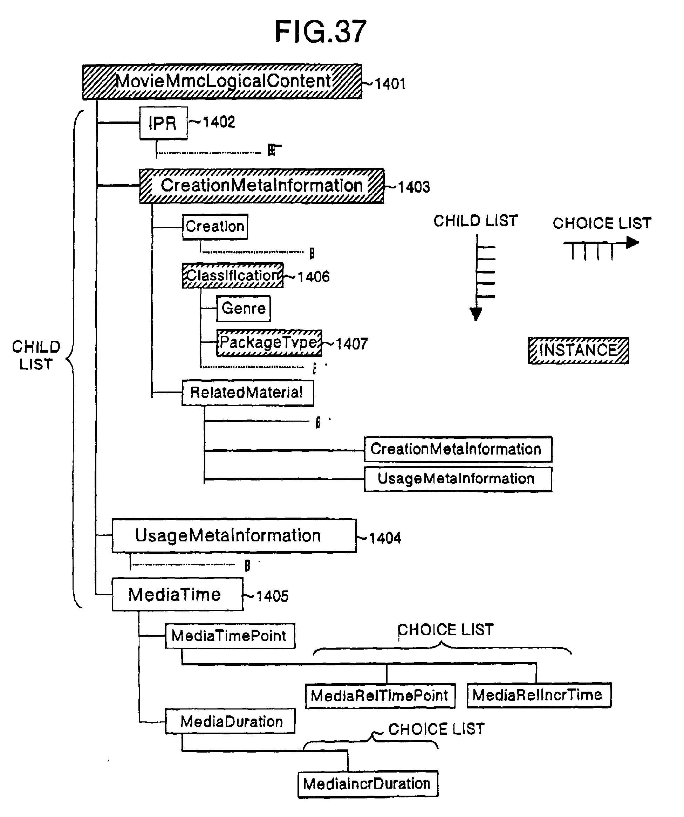

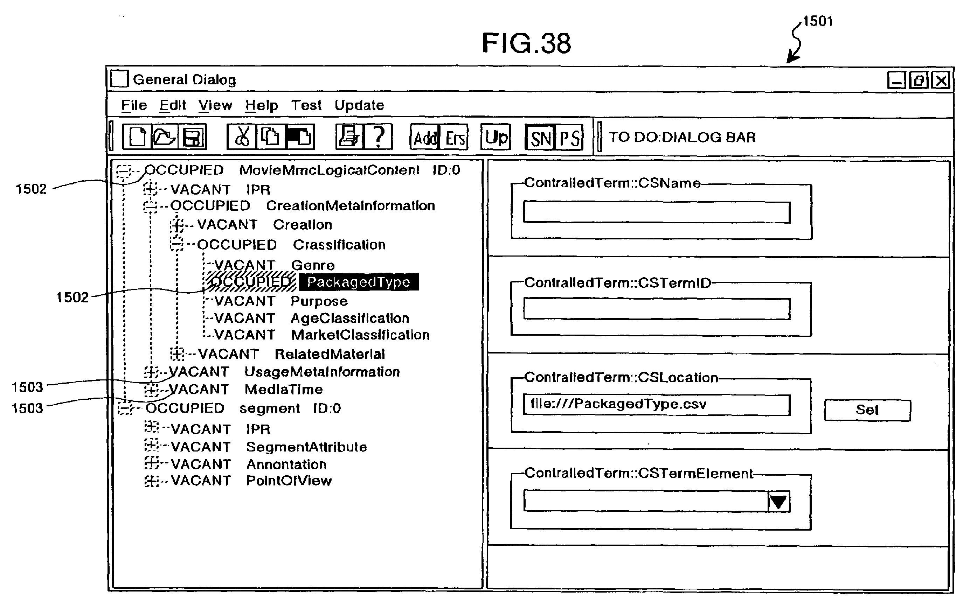

A management state on the memory according to the schema definition (1) to (8) stated above is shown in FIG. 37. Also, FIG. 38 shows a display screen 1501 on which the management state on the memory is displayed by the object content structure display module 1303. It is noted that a selected object (instance object) is denoted by dots to help understand the description. Reference symbols 1401, 1403, 1406 and 1407 shown in FIG. 37 denote instance objects.

Here, the "MovieMmcLogicalContent" 1401 are set as a parent object and the four objects which the "MovieMmcLogicalContent" 1401 can hold are set as child objects, i.e., the "IPR" 1402, the "CreationMetaInformation" 1403, the "UsageMetaInformation" 1404 and the "MediaTime" 1405 are managed as a child list. Also, selected objects and other candidate choices are regarded as one group from the viewpoint of a parent node. While a special object representing this group may be possibly prepared, a choice list is prepared for each object and a selected object is managed by the child list of the parent node in such a manner as to represent this group in the second embodiment as shown in FIG. 37.

Further, on the display screen 1501 shown in FIG. 38, a node indicating an actually existing instance object is denoted by an icon "occupied" and a node indicating the type of an object which is not actually held but can be held is denoted by an icon "vacant". To be specific, the nodes of the objects corresponding to the reference symbols 1401, 1403, 1406 and 1407 shown in FIG. 37 are displayed by the icons "occupied" 1502 and the nodes of the objects corresponding to the reference symbols 1404 and 1405 shown in FIG. 37 which do not actually exist are displayed by the icons "vacant" 1503, respectively.

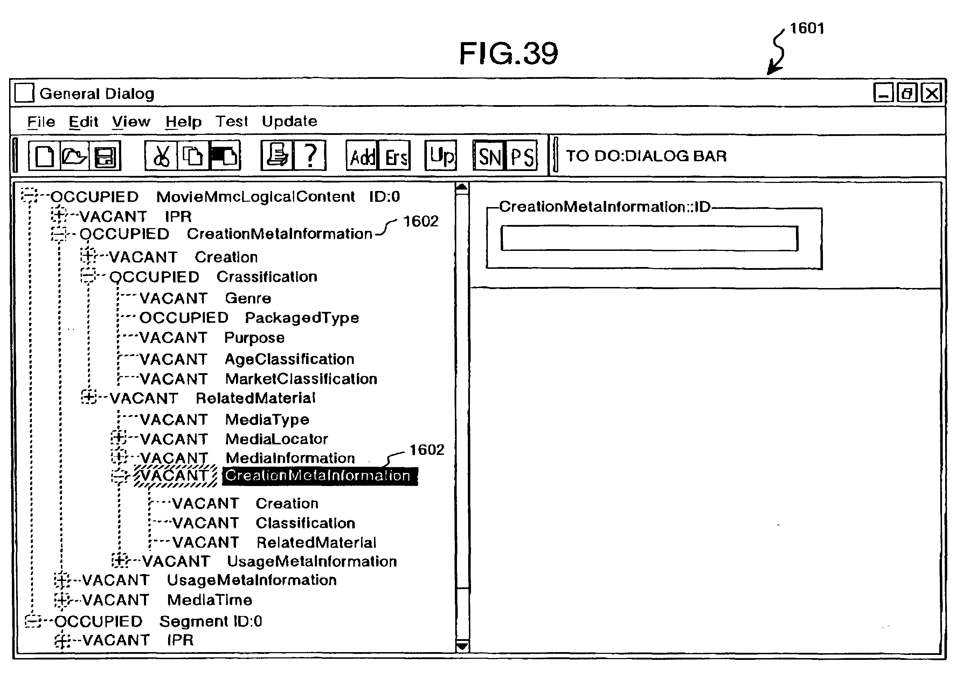

Referring to a display screen 1601 shown in FIG. 39, description will be given to a state in which the object "CreationMetaInformation" 1602 repeatedly appears. Here, since the hierarchical level is 3, three hierarchies from the "occupied" node are displayed and lower hierarchies thereof are not displayed. The designation of this hierarchical level can be inputted by clicking on a predetermined icon which is not shown and selecting a dialog screen.

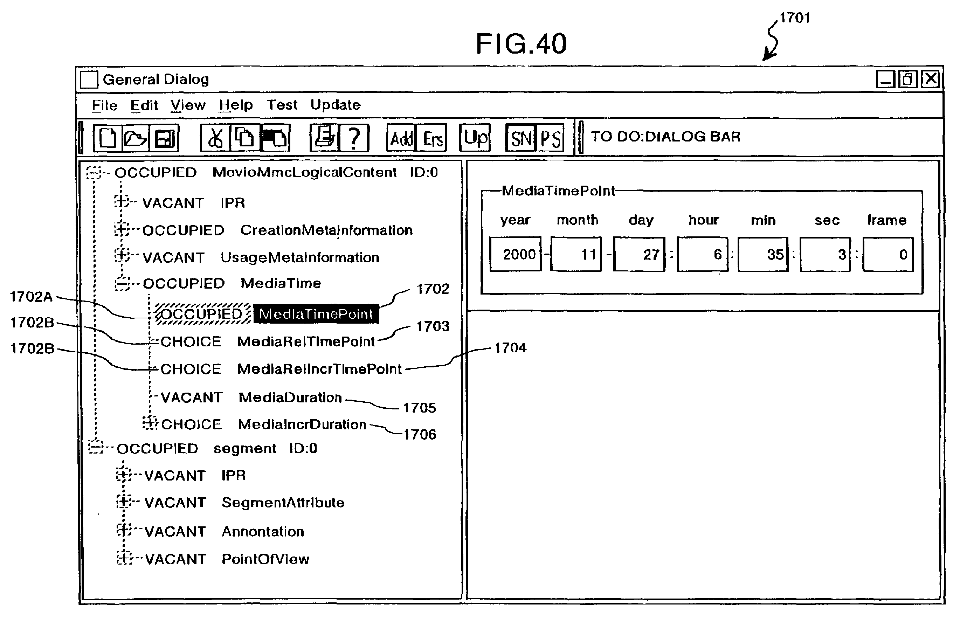

Referring to a display screen 1701 shown in FIG. 40, description will be given to an example of display icons of objects selected in choices and the other objects in the choices. In FIG. 40, the "MediaTimePoint" 1702 is selected from among "MediaTimePoint" 1702, "MediaRelTimePoint" 1703 and "MediaRelIncreTimePoint" 1704 and it is known from an "occupied" icon 1702A that the selected object "MediaTimePoint" 1702 is an instance object which actually exists. In addition, it is known froma "choice" icon 1702 that the two objects 1703 and 1704 following the object 1702 are in choices.

In this example, there are another choice group consisting of "MediaDuration" 1705 and "MediaIncrDuration" 1706, and the "MediaDuration" 1705 is selected as a default. Both of the objects 1705 and 1706 are dummy objects and not actually existing instance objects.

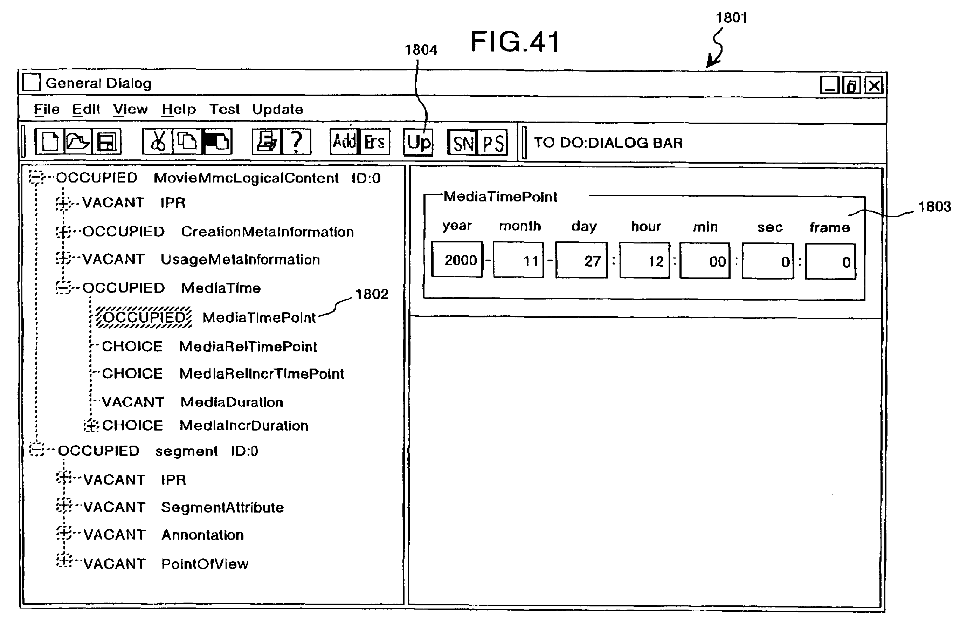

Referring to a display screen 1801 shown in FIG. 41, description will be given to the setting of attribute values. When the time of the "MediaTimePoint" 1802 is corrected by a dialog 1803 and an Up button 1804 is clicked on, the corrected time is reflected on actual data.

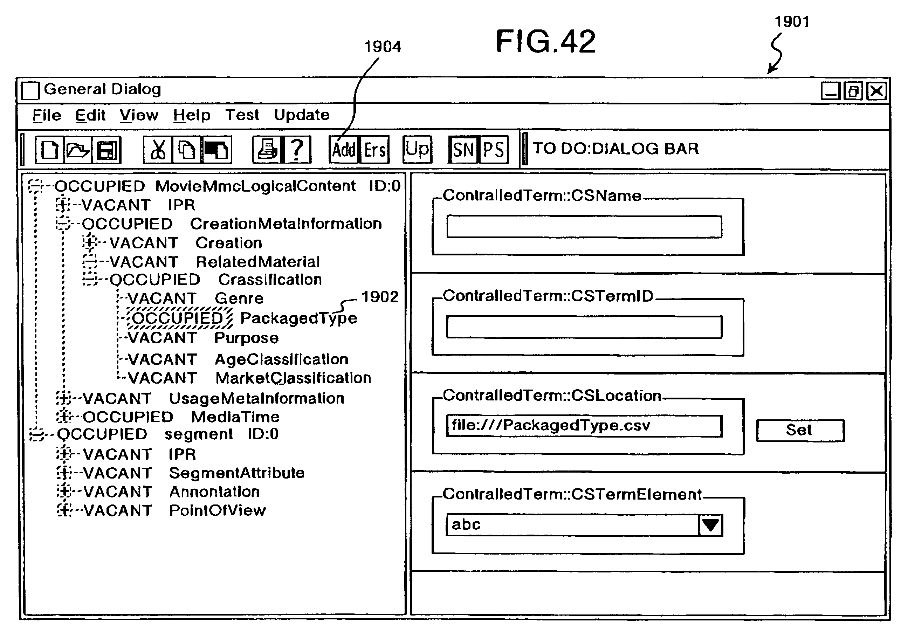

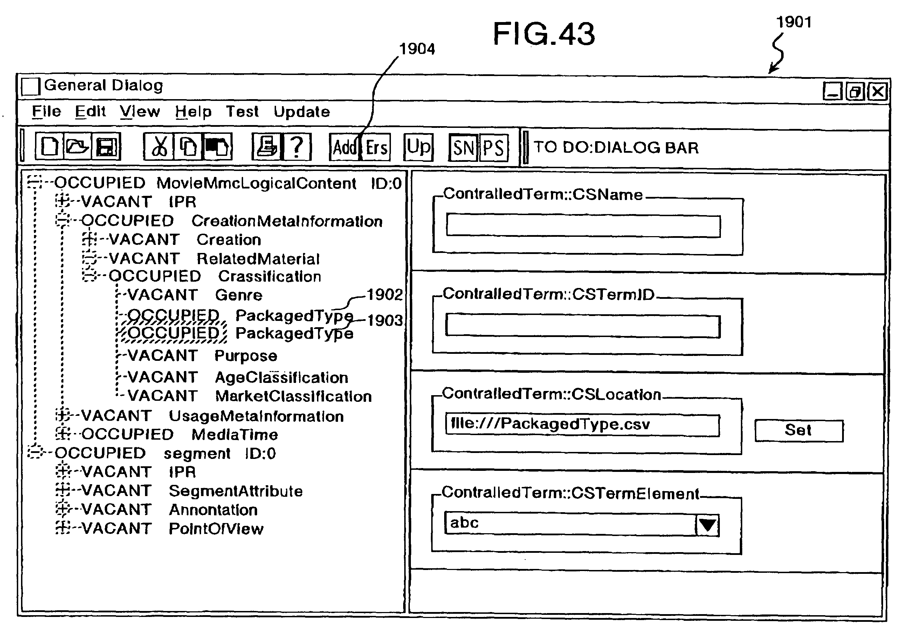

When "addition of instance" is indicated by designating the existing object "PackagedType" 1902 from a display screen 1901 shown in FIG. 42 and clicking on an "Add" button 1904, another instance object 1903 of the same object type "PackagedType" as the object 1902 is created below the object 1902 as shown in a display screen 1902 shown in FIG. 43. It is noted that this indication can be executed since a plurality of "PackagedType" can exist below "Classification". However, the Add button 1904 is not active in case of, for example, "Classification" itself since a plurality of "Classification" cannot exist below "CreationMetaInformation".

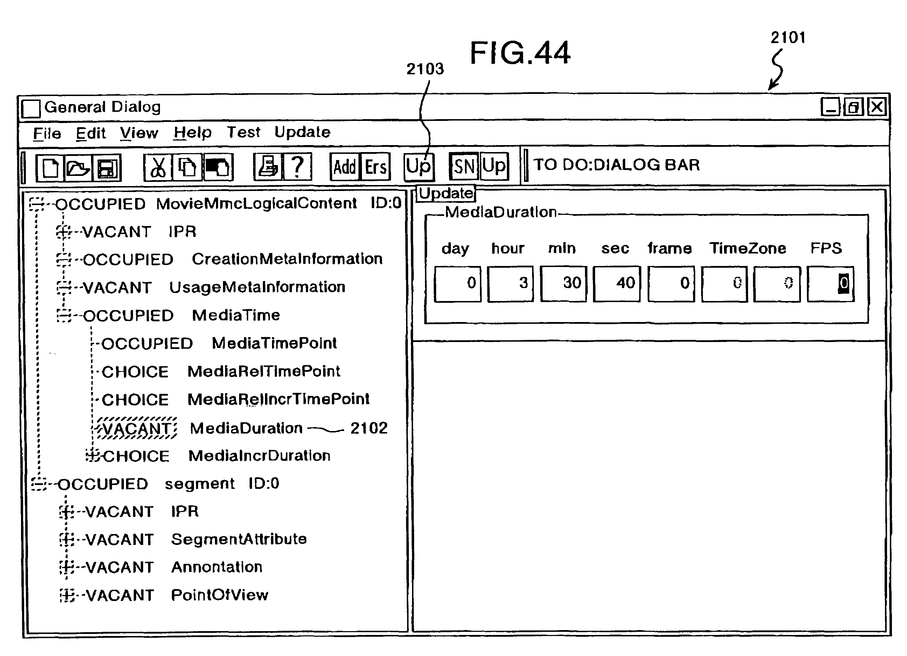

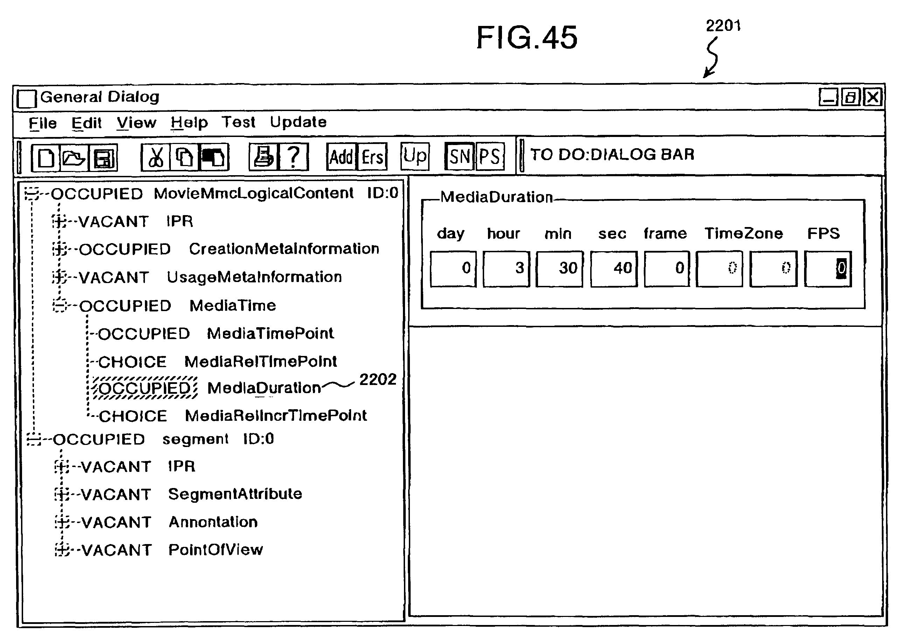

Referring to a display screen 2101 shown in FIG. 44, description will be given to a case of adding a probable dummy object MediaDuration as an actually existing instance object. First, when the "MediaDuration" 2102 is designated, "addition" is indicated by inputting attribute values thereof and clicking on an Up button 2103, then an instance object is added as a "MediaDuration" 2202 as shown in a display screen 2201 shown in FIG. 45.

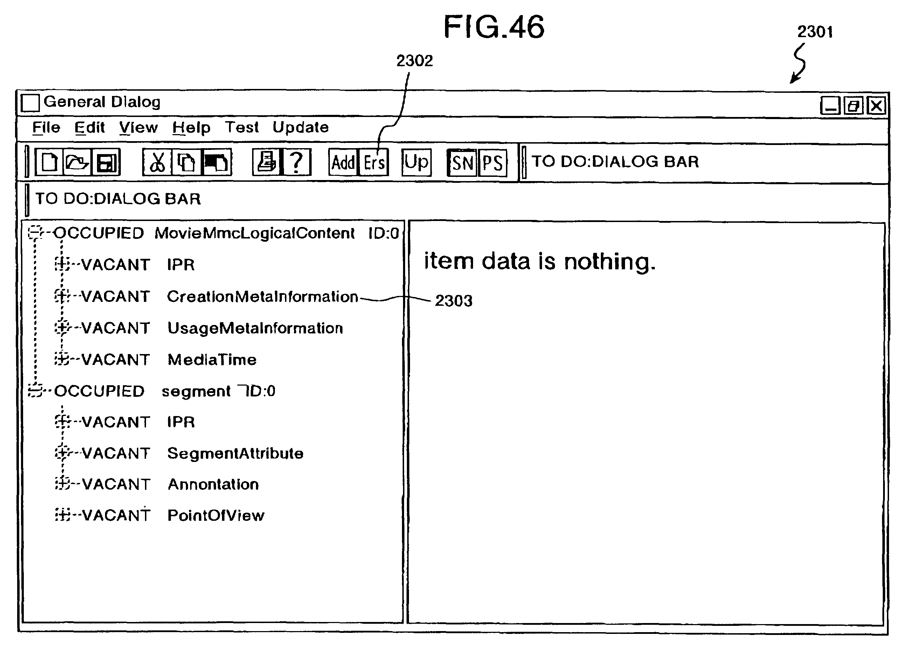

Further, when an actually existing object displayed by the "occupied" icon on the display screen is designated and "deletion" is indicated by clicking on an Ers button, then the "occupied" icon is changed to a "vacant icon" and the object is deleted. As shown in FIG. 42, for example, when the "CreationMetaInformation" is an actually existing object, the "CreatioMetaInformation" is designated and the Ers button 2302 shown in FIG. 46 is clicked on, thereby displaying the "CreationMetaInformation" 2303 by a "vacant" icon as shown in FIG. 46. Namely, the "CreationMetaInformation" is deleted, turned a probable dummy object and displayed by the "vacant" icon.

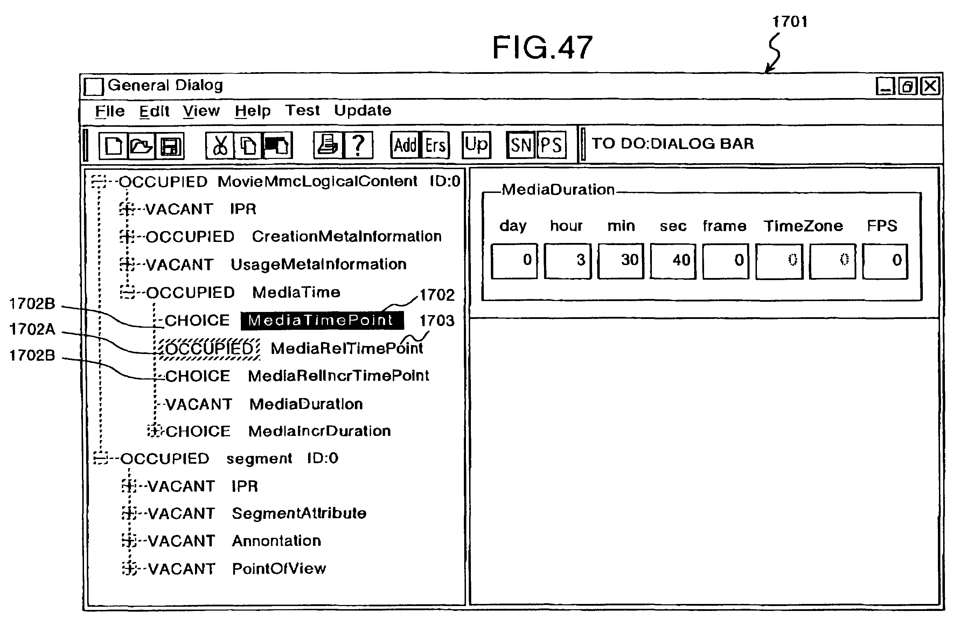

When, for example, the "MediaTimePoint" 1702 is designated on the display screen 1701 shown in FIG. 40 and "change selection" is indicated, then the icon of the "MediaTimePoint" 1702 which has been selected so far is changed to a "choice" icon 1702B indicating a choice and instead the icon of the "MediaTimePoint" 1703 is changed to a "occupied" icon 1702A as shown in FIG. 47. At this moment, it is the "MediaRelTimePoint" 1703 that is actually selected as an instance object.

An example in which the object content recording module 1305 outputs the contents of objects edited by the object editing apparatus in the second embodiment as MPEG-7 data is shown as follows. It is noted that the object contents are stored in the computer product so as to be reused later.

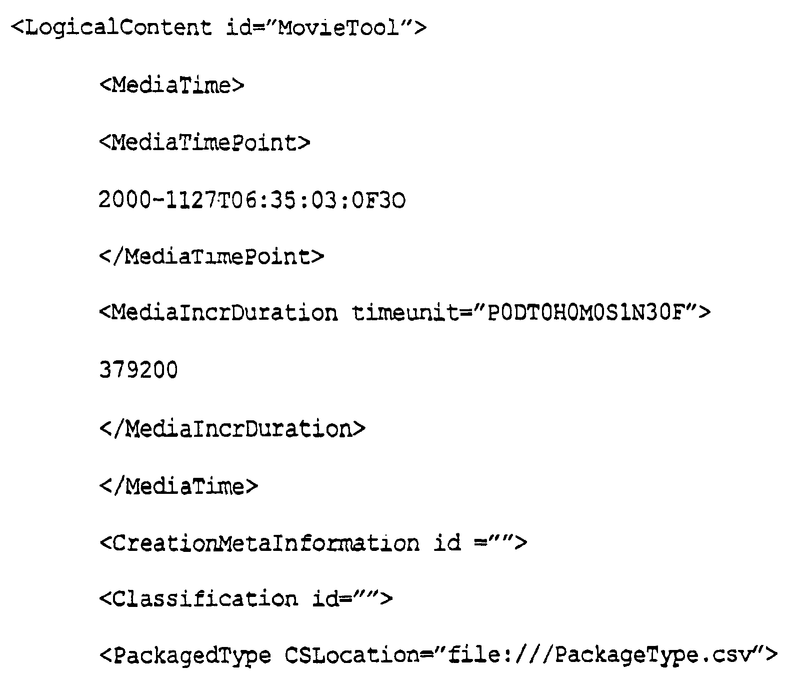

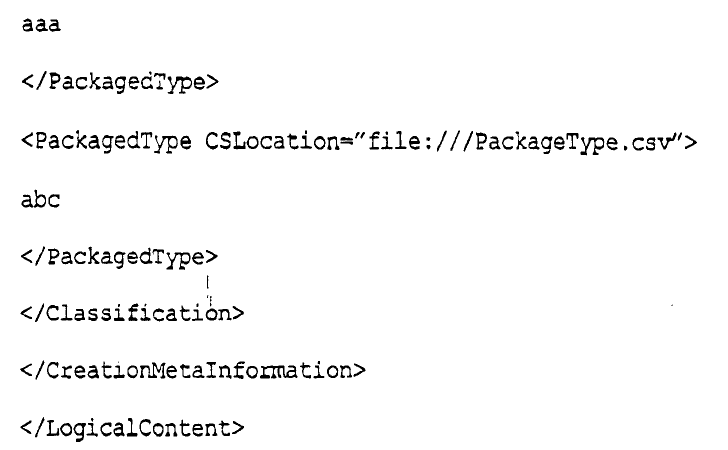

As already stated above, according to the second embodiment, not only the objects of the set membership are managed by a list but also the schema-defined structures of the objects are managed by one list and the both are displayed. It is, therefore, possible to display a combination of the structures of instance objects and the schema-defined structures thereof intuitively easy to understand and to improve operativity and operation efficiency.

Further, it is normally conducted to represent the set membership of instance objects by a tree structure and it is also a well-known method to display the types of objects which can be arranged below the instance objects in the form of a pallet or the like. According to the conventional method, however, the type of an object cannot be understood unless the object is selected and the types of objects cannot be provided as a list. Further, since the type of an object which is a candidate child object of an actually existing object only in one hierarchy is known, it is disadvantageously impossible to know what types of objects can be arranged in lower hierarchies when a tree structure indicating schema is not referred to. In the second embodiment, by contrast, the types of objects which an object can hold as child objects are simultaneously represented as nodes in the tree structure of the objects, making it possible to simultaneously display the schema-defined structures of objects and the structures of actual objects and to thereby solve the disadvantage of the conventional method.

Further, when the same type of an object appears twice in the set membership displayed as the structure of objects in the form of a hierarchical structure, the same repetition endlessly occurs and the hierarchical structure cannot be possibly displayed. The second embodiment can avoid this disadvantage by determining a display hierarchical level and enables a user to dynamically determine the display hierarchical level at need. Thus, orderly display can be provided.

Furthermore, in the second embodiment as stated above, selected objects and the other choices are recognizably visualized and the attributes of the other choices can be clearly displayed. This can facilitate select operations.

Moreover, when the types and relationship of objects by schema definition are complicated, many objects are possibly displayed. Even so, the second embodiment enables a necessary object to be discovered from the many objects.

In addition, since it is possible to check by which object an attribute value is held at glance and to easily edit the attribute value, the second embodiment is effective for editing a necessary attribute value.

Moreover, when a certain object is desired to exist as a plural or to be added or deleted, it is possible to perform an operation for determining whether or not such repetition, addition or deletion can be conducted without the need to check the schema definition. Besides, the both of repetition and addition/deletion can be realized by almost the same operation, thereby ensuring good operativity. Even when the ancestor of the designated dummy object is also a dummy object, all the necessary objects (sequence) can be instantiated by one operation, ensuring good operativity. In case of a conventional pallet method, the operations cannot be conducted since only the candidate objects which actually existing object hold are displayed.

Furthermore, the contents of the objects edited are described by a language such as the MPEG-7 language and stored as files, thereby making it possible to use the contents in various applications including the reuse of the contents to reedit them, the exchange of the contents and retrieval based on read information and the like.

### (4) Other Embodiments

Other embodiments of the present invention will be described. It is noted that the basic configurations and operations are the same as those in the preceding embodiment and only different parts will be, therefore, described herein.

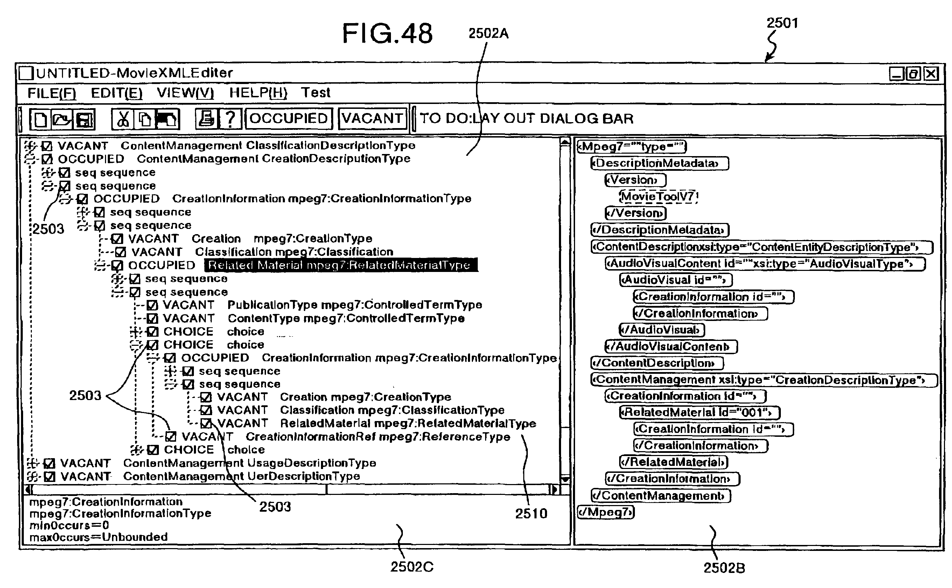

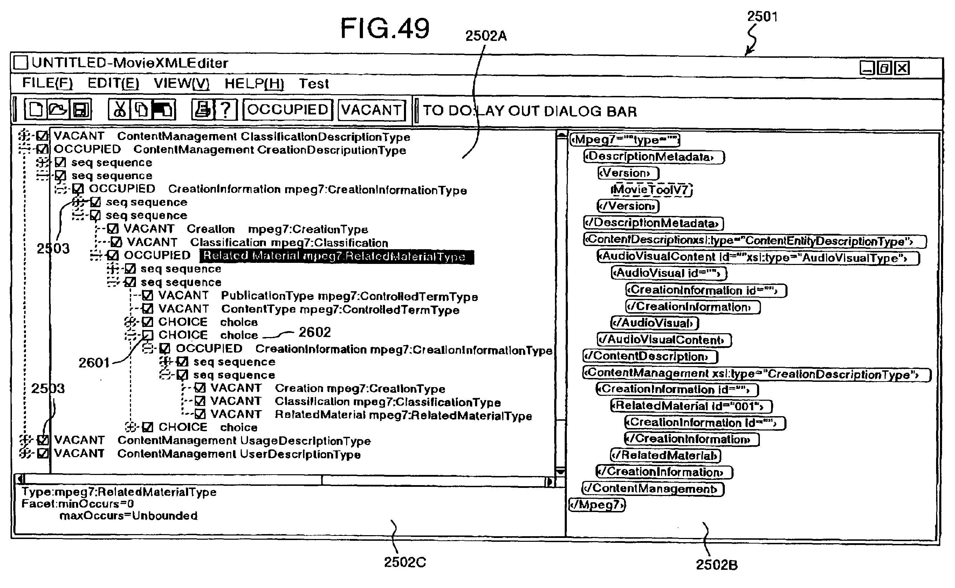

FIGS. 48 and 49 show a display screen 2501 in another embodiment of the present invention. In this embodiment, an object structure display section 2502A, an instance display section 2502B and an attribute editing section 2502C are provided. While this embodiment is not completely the same as the preceding embodiment since the schema of MPEG-7 is changed, CreationInformation (changed from CreationMetaInfomration), Creation, RelatedMaterial and the like are arranged, In this embodiment, CreationInformation is repeatedly arranged below RelatedMaterial.

Further, on the display screen 2501 shown in FIG. 48, checkboxes 2503 are added to the object structure display section 2502A. In addition, all the checkboxes 2503 are marked in FIG. 48.

In FIG. 49, the checkbox 2601 of one choice 1602 is unmarked. As a result, only a child node displayed right below the choice 1602 is an instance displayed by an "occupied" icon and the "CreationlnformationRef" 2510 displayed by the "vacant" icon, which is shown in FIG. 48, is not displayed in FIG. 49.

Meanwhile, the instance display section 2502B displays actual instances. An instance is inputted and edited by clicking on the main body of the tag (e.g., xxx part in aaa bbb="sss" ccc="ttt">xxx</aaa>).

As for the attribute editing section 2502C, in the example, when sss and ttt are inputted and edited on the following table-type window, the content is reflected on the instance display section 2502B.
bbb sss
ccc ttt

The object structure display section 2502A increases and deletes (instantiates and deletes) objects on a window displaying the structures of objects. The result is reflected on the instance display section 2502B.

Information on objects displayed on the attribute editing section 2502C will be described. Information on an object is displayed in a character string put next to the object. It is noted, however, that, to avoid complicating display, only the most necessary items of information (tag name and type name) are displayed next to the object and the other items of information are displayed in the form of a "type = value" string in another place (lower left portion of the screen in the example of FIGS. 48 and 49) when the object is selected.

Contents to be displayed are as follows:
- tag name of object
   mpeg7:CreationInformation in FIG. 48;
- type name of object
   mpeg7:CreationformationType in FIG. 48;
- probable occurrence frequency (minimumprobable occurrence number, maximum probable occurrence number)
   min0occurs=0
   max0occurs=Unbounded (where "Unbounded" means unlimited)

The above items of information are determined from schema. The other items of information can be also displayed as follows:
- number of actually instantiated objects of the same type below the same parent.

With the configuration, by preparing ON/OFF states by selecting and marking a certain checkbox 2503, it is possible that a probable object which a user does not need is not displayed and created. This can save the capacity of the memory. In this case, the disadvantage that all the objects are not listed (lower constituent elements cannot be displayed unless checked) can be overcome by preparing a menu for determining "At which stage a designated node is checked ON and developed".

Furthermore, when this method is adopted, it is possible to create lower structures at timing on demand inside the apparatus.

Here, display operation rules in the second embodiment will be briefly described.
a. Display using checkbox
   The checkbox of an object is:
   OFF: Only an instance object or instance objects (occupied) are displayed right below the object.
   ON: All probable objects including instance object(s) (occupied) are displayed.
b. The meanings of +- are the same as those in the conventional tree display.
   +: A child node exists but is not developed.
   -: A child node exist and is developed.
      no mark: end node without a child node.
c. The meanings of 'occupied' and 'vacant' are the same as before.
   occupied: actually existing instance.
   vacant: probable object.
      To create structures displayed on the object structure display section 2502A, all probable objects (vacant) below a certain object are created at timing at which the checkbox 2503 of the object becomes ON and all probable objects (vacant) are deleted at timing at which the checkbox 2503 thereof becomes OFF to improve memory efficiency.
      According to the conventional method, probable objects in hierarchies from the highest hierarchy corresponding to a designated level are automatically created irrespectively of a tree display state. In the second embodiment, by contrast, the memory can be efficiently used by, for example, dynamically creating and destroying probable objects which are not necessary this time, at need.
      Description will now be given to the change of the display screen shown in FIGS. 48 and 49 when the following processings d. to e. are carried out.
d. Icon of node changed to 'occupied' (node is instantiated).
   At this time, when the node which icon changed to "occupied" can exist as a plural, another node which is the same as the former node is created with an icon "vacant" to serve as a fraternal node relative to the former node and arranged next to the former node. Next time a node of the same type is to be instantiated, the node with the icon "vacant" is instantiated. As long as the number of nodes does not exceed the maximum possible number, yet another vacant node is created at this timing.
   On the other hand, when the node cannot exist as a plural, only the node is displayed by an icon "occupied" and the number of nodes with icons "vacant" does not increase.
e. Deletion of node

When a node can exist as a plural, opposite operations to those in d. above are carried out. Even when a node with an icon "occupied" is deleted, another vacant node of the same type must exist. The node is deleted as it is (while the vacant node is always left). The deletion target should be anode with an icon "occupied". Finally, at least one probable node may be left.

When a node cannot exist as a plural, what is necessary is to change the icon of the node to "occupied".

Any "object" is available as an object which the present invention is intended as long as the structure of the object is defined by the rules to manage the attributes thereof and other objects. Accordingly, the present invention can be also applied to an organization chart or a component chart exactly in the same manner as that stated above as other embodiments. The other embodiments include:
· Display and editing of class hierarchies and attribute objects.
· Display and editing of the organization chart and the component chart.

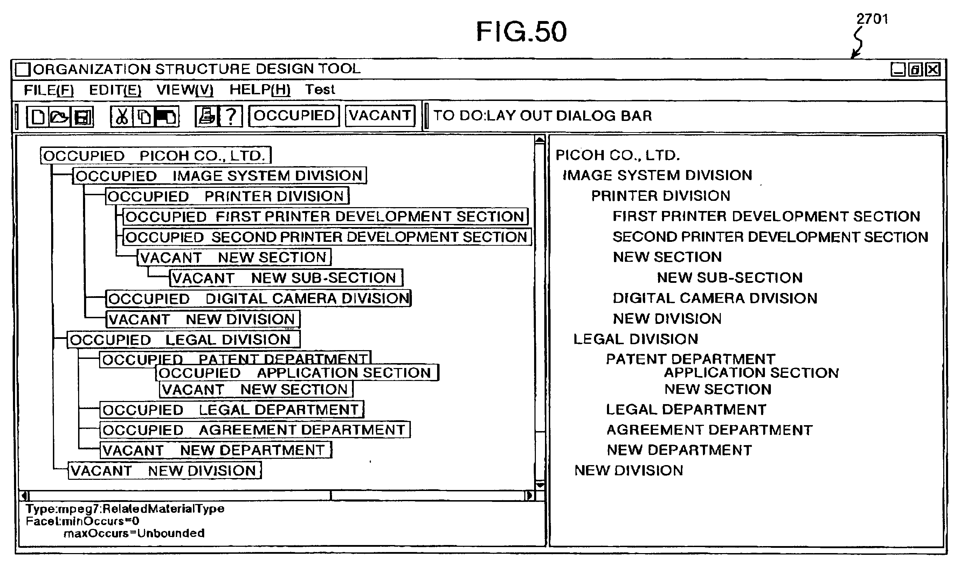

FIG. 50 shows an example in which the present invention is applied to an organization structure design tool. On a display screen 2701 shown in FIG. 50, groups such as divisions, sections and subsections in the organization chart of each company correspond to the objects of the present invention.

The object content structure management method, the object content structure display method and the object content structure editing method in the second embodiment stated so far can be realized by executing a program prepared in advance in accordance with the procedures already described. This program is recorded on a computer readable computer product such as a hard disk, a floppy disk, a CD-ROM, an M0 or a DVD and distributed through the computer product. Alternatively, the program can be distributed through a network.

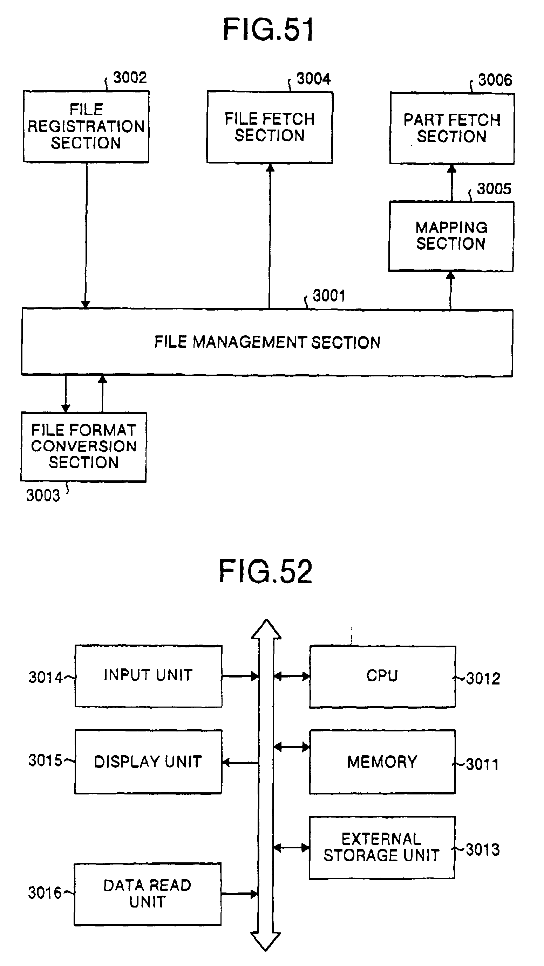

The third embodiment of the present invention will be described hereinafter in detail with reference to the drawings. FIG. 51 is a block diagram of a content management system showing one example of the third embodiment. FIG. 52 is a block diagram of hardware for executing such a system as the content management system. The block diagram shown in FIG. 52 is, for example, is a block diagram of the hardware of an information processing apparatus such as a personal computer.

As shown in FIG. 52, this information processing apparatus includes a memory 3011 temporarily storing data and programs, a CPU 3012 operating according to a program stored in the memory 3011, controlling the entire processing apparatus and managing the contents of objects according to the present invention, an external storage unit (such as a hard disk device) 3013 storing data and programs, an input unit 3014 having a keyboard, a mouse and/or the like and inputting data and designated items, a display unit 3015 displaying various information, and a data read unit 3016 reading programs and picture data from a detachable computer product.

Also, as shown in FIG. 51, the content management system includes a file management section 3001 managing files stored in the external storage unit 3013, a file registration section 3002 registering data inputted from the data read unit 3016 or the like as a file through the file management section 3001, a file format conversion section 3003 converting the data format of the file data registered by the file management section 3002 and managed by the file management section 3001 into a different data format, a file fetch section 3004 fetching a file designated by a user or the like through the file management section 3001, a mapping section 3005 mapping a part of logical contents to be described later on a physical file (as which a conventional ordinary file or content file such as picture data, voice data and text data is referred to herein), and a part fetch section 3006 fetching a mapped part in the physical file.

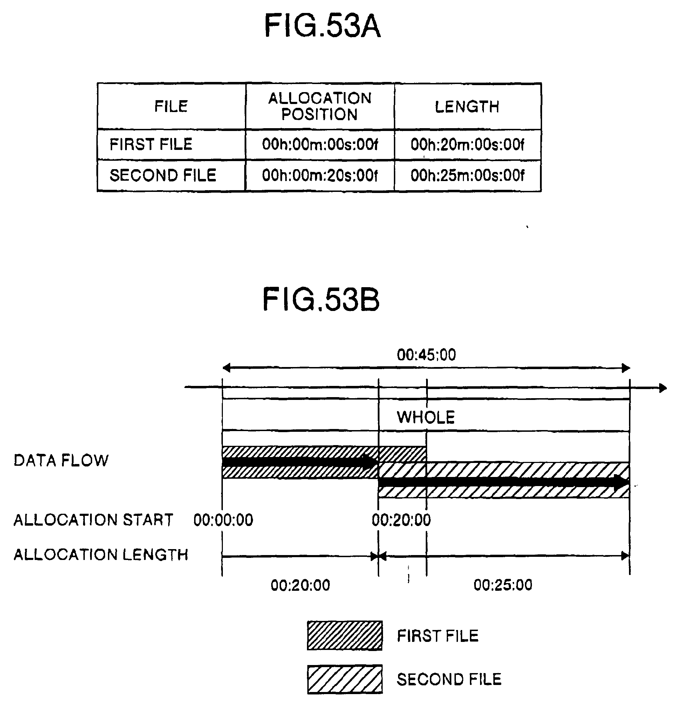

Description will be given first to a case of registering a content by the file registration section 3002 with the configuration, while referring to FIG. 53.

In the example shown in FIG. 53, original contents of an entire length of 45 minutes (which are picture data in a data format of, for example, MPEG-2, and which are two physical files each having a length of 25 minutes with an overlap part of a length of 5 minutes interposed therebetween) are registered. At the time of registration, a title as a logical content name is allocated to each original content by the input unit 3014 and an allocation position for allocating each picture content as a logical content and an allocation length thereof are designated by time.

FIG. 53(a) is a table showing the designated allocation positions and designated allocation lengths each of which is indicated by the hour (h), minute (m), second (s) and the like. The content of this table is illustrated in FIG. 53 (b). As is obvious from FIGS. 53(a) and 53(b), the first file is allocated by a length of 20 minutes excluding the overlap part out of the entire length of 25 minutes.

As can be seen, individual original content data constituting the entire logical contents may be a part of one physical file or may include an overlapped content with the other data.

The file management section 3001 of the content management system in this embodiment manages the two physical files and the values shown in FIG. 53(a) as a set.

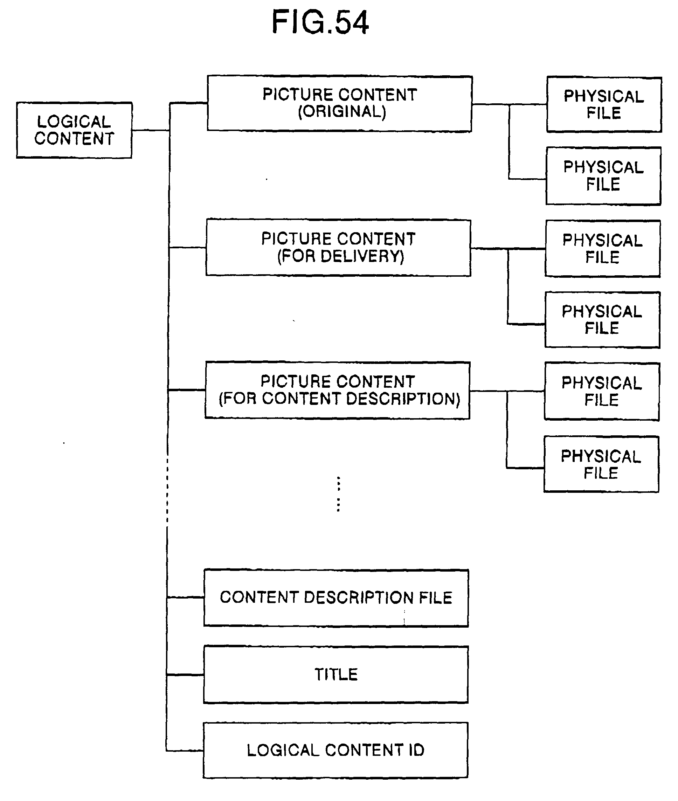

Further, the file management section 3001 allocates a logical content ID (discrimination information) for management purposes to each registered logical content and manages the logical content ID' s and titles as well as the respective physical files while making them correspond to one another as shown in FIG. 54 (FIG. 54 also includes contents and files in other data formats to be described later). Actually, however, a management table which can express a plurality of logical contents is created as shown in FIG. 54 for managing the logical content ID' s and titles as well as the respective physical files. It is noted that the file name of each file shown in FIG. 54 is one of management target items.

Also, in this content management system, the file format conversion section 3003 converts the data format of the original contents thus registered (which are the contents of the two physical files corresponding to "picture contents (original)" in the example shown in FIG. 54) into, for example, the MPEG-1 format of picture contents for content description and into, for example, the Real Media format of picture contents for delivery, respectively, to thereby create files, adds the created files as a part of the logical contents shown in FIG. 54 and manages the files. In the example shown in FIG. 54, the files include the contents of the two physical files corresponding to "picture contents (for content description)" (which are referred to from a content description file to be described later) and "picture contents (for delivery)", respectively. In other words, this content management system prepares contents each having a data format converted to be suited for a corresponding processing depending on how to process the contents (how to use the contents). Picture contents for delivery are, for example, set to have the Real Media data format which can reduce the quantity of data compared with the MPEG-2 data format since more importance is attached to data transfer time than picture quality.

Further, the content management system in this embodiment can add, to the logical contents, a content description file for providing a user with what the content is like so that the user can easily understand the content, and for facilitating conducting retrieval for multimedia data using the content retrieval system provided in this information processing apparatus. Due to this, a content description system for creating a content description file is provided separately from the content management system shown in FIG. 51 in the information processing apparatus in this embodiment. When the content description file is created, the content description system issues a content description data request for designating one logical content, to the file fetch section 3004. In response to this request, the file fetch section 3004 fetches a list (or lists) of physical files in the MPEG-1 data format which include picture data used for the content description and sends the fetched list (or lists) to the content description system. It is noted that each physical file in the MPEG-1 data format is smaller in quantity of data than the original contents in the MPEG-2 data format and the quality of the file is satisfactory enough for content description.

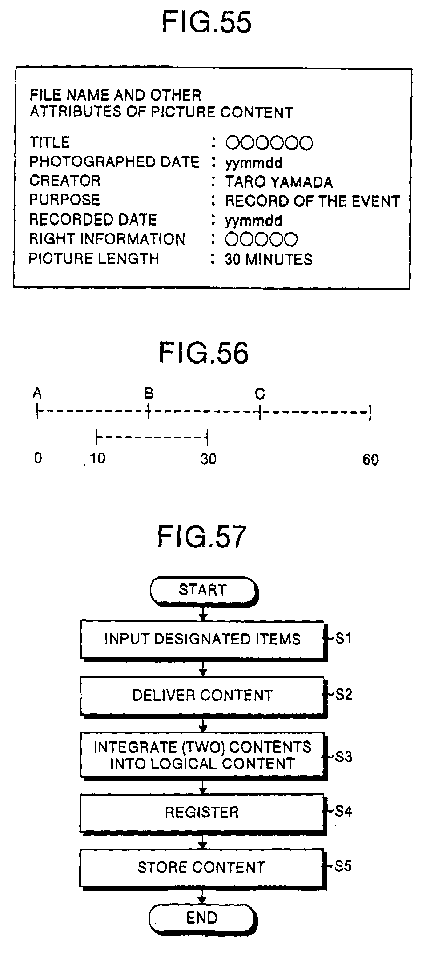

The content description file completed as meta data is added and registered to the logical contents through the file registration section 3002. When this meta data is data on the attributes (contents) of information (contents) and intended at picture data, then the meta data includes, as attributes, the name of a content file for referring to picture contents in, for example, the MPEG-1 data format as well as a title, photographed data, a creator, a purpose, recorded date, right information, a picture length and the like. In addition, as shown in FIG. 55, the content description has a logical structure including an item title and a sub-item title.

Further, when the delivery system in this information processing apparatus request one logical content, the content management system supplies the physical file in the Real Media data format prepared for delivery to the delivery system through the file fetch section 3004 or the part fetch section 3006. At this time, when not the entire logical contents but a part of the range of the logical content is designated, the mapping section 3005 in the content management system maps the physical files in the designated range. For example, when the entire logical content has a length of 60 minutes, the content consists of three physical files A, B an C each having a length of 20 minutes as shown in FIG. 56 and the range of a length of 10 to 30 minutes from the start of the logical content is designated, then the mapping section 3005 maps the file A from a point of ten minutes to the last and the file B from the start to a point of ten minutes, i.e., a part of the logical content having a length of 20 minutes in all.

In this way, a set of the name of an actually necessary physical file and the range of the file are determined and, in the above example, a list shown below is sent to the delivery system through the part fetch section 3006:
A: (10, 20)
B: (0, 10).

The picture contents for content description and the picture contents for delivery may be created and registered at the time of registering the original contents or a physical file in a data format suited for a requested processing may be created and registered in accordance with the processing request for specifying a logical content at the time of receiving the request after registering the original contents.

A registration operation flow will be described in accordance with an operation flow shown in FIG. 57. First, a user inputs designation items such as allocation positions for allocating picture contents to the logical contents, allocation lengths and title using the input unit 3014 (in a step S1). Then, picture contents consisting of, for example, two physical files intended at registration and read from the detachable computer product or the like are sent to the file registration section 3002 (in a step S2).

The file registration section 3002 integrates the two contents into one logical content as shown in, for example, FIG. 53(a) in accordance with inputted designation information (in a step S3).

Then, the file registration section 3002 registers the respective physical files through the file management section 3001, the file management section 3001 allocates a logical content ID (discrimination information) for management to the logical content and registers the logical content in a management table while making the logical content ID, the title and the names of the respective physical files correspond to one another as shown in FIG. 54 (in a step S4). Further, the content received is stored in the external storage unit 3013 (in a step S5).

While the above description has been given to the registration of picture data, that of voice data can be realized in the same manner.

Further, though not shown in FIG. 54, it is also possible to add logical contents obtained by converting the data format of the original contents into a data format suited for editing data, e.g., an AVI data format or a MotionJPEG-2 data format in which respective frames are independent of one another, to the logical contents. Since respective frames are not independent of one another in the MPEG-2 data format, MPEG-2 is not suited for editing data.

Moreover, though not shown in FIG. 54, it is also possible to register related files through the file registration section 3002, to add the files to the logical contents in the manner stated above and to collectively manage all the files in accordance with a user's request.

Additionally, it is not necessary for a user to select a data format suited for one of the processings but the content management system automatically selects a data format in accordance with the type of a requested processing. To this end, the content management system presets optimum data formats in a table while making the data formats correspond to the types of processings, respectively.

Furthermore, when a program created in accordance with the content management method stated so far is stored in, for example, the detachable computer product and the computer product is attached to the information processing apparatus, such as a personal computer, which is incapable of conducting content management according to the present invention, then it becomes possible that even the information processing apparatus conducts content management according to the present invention.

As stated so far, the structure editing apparatus of the present invention (the first to sixteenth aspects) can easily modify a segment or a package in which ever hierarchy when reviewing a content and make a modification to the logical structure created by conducting structuring. Also, the structure editing apparatus of the present invention can conduct a processing while utilizing the configurations below the child segments as such as possible. This can avoid wasting operations for the creating a structure conducted so far and realize a natural operation flow conducted by a person including roughly performing processings and then modifying detailed parts, thereby ensuring good efficiency. In other words, the present invention can advantageously provide a structure editing apparatus capable of modifying and correcting a structure created in advance with the structure of data having a range (segment) used as a unit while utilizing original structure information as much as possible.

Further, in the structure editing apparatus of the present invention (the first aspect), the segment dividing unit divides the range of the target segment into the first half segment and the second half segment based on the dividing position and replaces the target segment by these two segments. Therefore, when there is a segment to be divided, the segment can be easily corrected (divided) by designating the segment as a target segment and designating a dividing position.

Further, in the structure editing apparatus of the present invention (the second aspect), when a package exists in a hierarchy below the target segment in the hierarchical structure of the structure information, the package is also divided into two packages to correspond to the division of the target segment. Therefore, it is possible to easily make a modification or correction while utilizing the original structure information.

Further, in the structure editing apparatus of the present invention (the third aspect), when the target segment is designated by the pointing device o the first designating unit, the second designating unit displays a line segment indicating the dividing position on the displayed target segment and the position of the line segment is freely translated by the pointing device of the second designating unit to thereby determine the dividing position. Therefore, it is possible to carry out a dividing operation in a short period of time to thereby improve working efficiency. Also, since it is possible to visually recognizably display a candidate position and to determine the position while freely moving the position, good operativity is ensured.

Further, in the structure editing apparatus of the present invention (the fourth aspect), when the boundary movement is designated, the segment boundary moving unit moves the boundary on the start position side or the boundary on the end position side designated by the third designating unit to the designated moving position. Therefore, it is possible to easily make a modification or correction while utilizing the original structure information.

Further, in the structure editing apparatus of the present invention (the fifth aspect), when the boundary is moved by the segment boundary moving unit, it is possible to select one of the three boundary moving methods. When the first boundary moving method is selected, only the start position or the ed position of the target segment is moved and the start position or the end position of the other segment is not changed. When the second boundary moving method is selected, the start position or the end position of the target segment is moved and the end position or the start position of the other segment in contact with the start position or the end position of the target segment is moved. When the third boundary moving method is selected, then only the start position or the end position of the target segment is moved, the start position or the end position of the other segment is not changed and a new segment is inserted to fill a generated clearance. It is, therefore, possible to move the boundary in accordance with the content of correction and, therefore, to improve operativity and working efficiency.

Further, in the structure editing apparatus of the present invention (the sixth aspect), when the target segment has a package, the segment moving unit also moves the boundary of a segment in the package in accordance with the range of the target segment. It is, therefore, possible to further improve operativity and working efficiency.

Further, in the structure editing apparatus of the present invention (the seventh aspect), the second designating unit freely translates a line segment indicating the moving position to thereby determine the moving position. It is, therefore, possible to carry out a moving operation in a short period of time and to improve working efficiency. Also, since it is possible to visually recognizably display a candidate position and to freely move the candidate position to determine the position, thereby ensuring good operativity.

Further, in the structure editing apparatus of the present invention (the eighth aspect), when a descendant segment is cut by the segment dividing unit or the segment moving unit, one of the three cutting processings can be selected. When the first cutting processing is selected, a structural element below a segment to be cut is deleted, When the second cutting processing is selected, the segment to be cut is divided. When there further exists a segment to be cut below the divided segment, the same processing is recursively applied up to an end segment. When the third cutting processing is selected, the segment to be cut is divided and then divided segment parts are merged with two segments adjacent the divided segment. When there further exists a segment to be cut below the divided segment, the same processing is recursively applied up to an end segment. It is, therefore, possible to move the boundary in accordance with the content of correction and, therefore, to improve operativity and working efficiency. Also, when a segment having hierarchies created in advance is operated and the structures below the descendants of the segment are destroyed, the operations conducted so far becomes useless. According to the present invention, it is possible to make effective use of the structural elements below the child segments in accordance with the purpose and to carry out operations suited for the meaning of the operation, advantageously facilitating operations.

Further, in the structure editing apparatus of the present invention (the ninth aspect), when the first designating unit designates the plurality of target segments and the fourth designating unit designates the segment merger, then the segment merging unit merges the designated plurality of target segments and replaces a start position of a first segment to an end position of an end segment on basis of time series by one segment. It is, therefore, possible to improve operativity and working efficiency.

Further, the structure editing apparatus of the present invention (the tenth aspect) comprises apackage hierarchy upgrading unit which replaces a segment above the target package by all segments serving as structural elements of the target package and upgrading the target package by one hierarchy when the fifth designating unit designates the target package. It is, therefore, possible to upgrade a package by one hierarchy at need to thereby improve operativity and working efficiency.

Further, in the structure editing apparatus of the present invention (the eleventh aspect), the segment hierarchy downgrading unit creates, as new segment, a segment in a range corresponding to a combined range of a plurality of segments, arranges the new segment in place of the plurality of segments, creates a new package below the new segment, and move the plurality of target segment below the new segment when the first designating unit designates the plurality of target segments and the sixth designating unit designates the segment hierarchy downgrading. Therefore, it is possible to downgrade a segment by one hierarchy at need to thereby improve operativity and working efficiency.

Further, in the structure editing apparatus of the present invention (the twelfth aspect), when the fist designating unit designates the plurality of target segments and the seventh unit designate the segment hierarchy upgrading, then the segment hierarchy upgrading unit sets a segment above a package including the plurality of target segments as a parent segment, divides the parent segment into a new segment in a range corresponding to a combined range of the plurality of target segments and other segments, and replaces the plurality of target segments by the new segment. It is, therefore, possible to upgrade a segment by one hierarchy at need and to thereby improve operativity and working efficiency. Further, the structure editing apparatus of the present invention (the thirteenth aspect) comprises eighth designating unit which designates segment deletion; and segment deleting unit which deletes a structural element below the target segment when the eighth designating unit designates the segment deletion. It is, therefore, possible to delete a segment at need and to thereby improve operativity and working efficiency.

Further, in the structure editing apparatus of the present invention (the fourteenth aspect), as a processing for a clearance generated after the segment deleting unit deletes the structural element below the target segment, one of no post-processing, a first processing for extending a boundary of a segment right before the target segment, a second processing for extending a boundary of a segment right after the target segment, and a fourth processing for designating one point in a range of the target segment and extending the boundaries of the segments right before and after the target segment toward respective designated positions is selectable. It is, therefore, possible to delete a segment in accordance with the content of correction and to thereby improve operativity and working efficiency.

Further, the structure editing apparatus of the present invention (the fifteenth aspect) comprises: ninth designating unit which designates package deletion; and package deleting unit which deletes a structural element below the target package when the fifth designating unit designates the target package and the ninth designating unit designates the package deletion. It is, therefore, possible to delete a package in accordance with the content of correction and to thereby improve operativity and working efficiency.

Further, in the structure editing apparatus of the present invention (the sixteenth aspect), the arranged data is a picture stream. It is, therefore, possible to provide the structure editing apparatus according to the first to fifteenth aspects as the picture structure editing apparatus.

Further, the picture structure editing apparatus of the present invention (the seventeenth aspect) comprises: first designating unit which designates an arbitrary segment in the structure information as a target segment; second designating unit which designates an arbitrary position included in a range of the target segment; and segment dividing unit which divides the range of the target segment into a first half segment and a second half segment at a dividing position, the dividing position being the position designated by the second designating unit. Due to this, when there is a segment to be divided, the segment can be designated as a target segment and the dividing position is designated, thereby making it possible to easily correct (divide) the segment.

Further, when the target segment has a package, the picture structure editing apparatus of the present invention (the eighteenth aspect) divides the package into a first half package consisting of a segment corresponding to a range of the first half segment and a second half package consisting of a segment corresponding to a range of the second half segment. It is, therefore, possible to easily modify or correct the package while utilizing the original structure information.

Further, the structure editing apparatus of the present invention (the nineteenth aspect) displays a line segment for indicating a dividing position on the target segment displayed and freely translates a position of the line segment using the pointing device. It is, therefore, possible to carry out a dividing operation in a short period of time and to thereby improve operation efficiency. Besides, it is possible to visually recognizably display a candidate position and to freely move the candidate position to determine the position, thereby ensuring good operativity.

Further, when the dividing position is in units of frames, the picture structure editing apparatus of the present invention (the twentieth aspect) arranges a segment start frame A, a segment end frame B, a division target candidate frame C and a frame D right before the division target candidate frame C in an order of the frame A, the frame D, the frame C and the frame B and displays the frames together with the number of frames on an operation dialog. As result, the frames before and after the candidate boundary position are displayed in a time series manner and the display of the frames is updated every time the candidate frame is changed. It is, therefore, possible to judge whether or not the frame which becomes an actual operation target is appropriate at glance, thereby ensuring good operativity.

Further, in the picture structure editing apparatus of the present invention (the twenty-first aspect), when the boundary movement is designated, the segment boundary moving unit moves the designated boundary on one of the sides of the start position and the end position to the moving position designated by the second designating unit. It is, therefore, possible to easily make modification or correction while utilizing the original structure information.

Further, in the picture structure editing apparatus of the present invention (the twenty-second aspect), when the boundary is to be moved by the segment boundary moving unit, it is possible select three boundary moving methods. When the first boundary moving method is selected, only one of the start position and the end position of the target segment is selected without changing one of the start position of the segment right after the target segment and the end position of the segment right before the target segment. When the second boundary moving method is selected, one of the start position and the end position of the target segment is moved, and one of the end position of the segment right before the target segment and the start position of the segment right after the target segment in contact with one of the start position and the end position of the target segment is moved. When the third boundary moving method is selected, only one of the start position and the end position of the target segment is moved without moving one of the start position of the segment right after the target segment and the end position of the segment right before the target segment, and a new segment is inserted to fill a generated clearance. It is, therefore, possible to move the boundary in accordance with the content of correction and to thereby improve operativity and working efficiency.

Further, in the picture structure editing apparatus of the present invention (the twenty-third asped), when the target segment has a package, the segment boundary moving unit moves a boundary of a segment in the package in accordance with the range of the target segment. It is, therefore, possible to further improve operativity and working efficiency.

Further, in the picture structure editing apparatus of the present invention (the twenty-fourth aspect), a line segment for indicating the moving position is displayed on the target segment displayed, and a position of the line segment is freely translated using the pointing device. It is, therefore, possible to carry out a moving operation in a short period of time and to thereby improve operating efficiency. Also, it is possible to visually recognizably display a candidate position and to freely move the position to thereby determine the position, thereby ensuring good operativity.

Further, in the picture structure editing apparatus of the present invention (the twenty-fifth aspect)), when the moving position is in units of frames, a start frame A of a segment right before the target segment, an end frame B of the segment right before the target segment, a start frame C of the target segment, an end frame D of the target segment, a start frame E of a segment right after the target segment and an end frame F of the segment right after the target segment are displayed together with the number of frames on an operation dialog. Therefore, the frames before and after the candidate boundary position are displayed in a time series manner and the display of the frames is updated every time the candidate frame is changed. It is, therefore, possible to determine whether or not the actually operation target frame is appropriate at glance, thereby ensuring good operativity.

Further, in the picture structure editing apparatus of the present invention (the twenty-sixth aspect), when one of the segment division and the segment boundary movement is conducted through one of the segment dividing unit and the segment boundary moving unit, respectively, it is possible to select one of updating only when an update button is depressed and updating at set update timing to display updating of the respective frames displayed on the operation dialog. It is, therefore, possible to dispense with a processing for display by designating display update timing at need and to improve operating speed. Also, this is effective when the number of desired frame is known in advance and display is unnecessary.

Further, in the picture structure editing apparatus of the present invention (the twenty-seventh aspect), when the reproduction button is depressed, the target segment at a time of depression of the reproduction button is reproduced; and when the frame candidate select button is depressed, peripheries of a candidate frame designated at a time of depression of the frame candidate select button are displayed on a frame continuous display screen. It is, therefore, possible to appropriately determine the division candidate frame or the boundary frame. Also, when it is necessary to check peripheral frames, these frames can be easily checked and selected on the continuous display screen, thereby improving operativity.

Further, the computer readable computer product of the present invention (the twenty-eighth aspect) records a program for allowing a computer to execute respective unit of any one of picture structure editing apparatuses according to the first to sixteenth aspects. As a result, it is possible to advantageously obtain a computer product allowing the program to be read by a machine and the operations of the first to sixteenth aspect to be realized by the computer.

Further, the computer readable computer product of the present invention (the twenty-ninth aspect) records a program for allowing a computer to execute respective unit of any one of the seventeenth to twenty-seventh aspect. As a result, it is possible to advantageously obtain a computer product allowing the program to be read by a machine and the operations of the seventeenth to twenty-seventh aspect to be realized by the computer.
The object content structure management method, the object content structure display method and the object content structure editing method of the present invention described so far can be realized by allowing the computer to execute a program prepared in advance in accordance with the procedures. This program is recorded on the computer readable computer product such as a hard disk, a floppy disk, a CD-ROM, an M0 or a DVD and provided. Alternatively, this program can be distributed through the network.

Further, in an object content structure management method according to the present invention (the thirtieth to thirty-second aspect), a list of child objects defined by the schema definition is managed for each the object, the child objects capable of being held by the object; the list of the child objects holds instances of all objects actually existing as the child objects and objects which do not actually exist but can exist as the child objects, and each object holds determination information for determining whether a certain object is an instance of an actually existing object or an object which does not actually exist but can exist as a child object; when an arbitrary object is set as a start object, a list of child objects of the start object, a list of the child objects of each object held by the list of the child objects, and a list of child objects of each object held by a list of child objects of the child objects are sequentially managed, thereby managing a content structure of the start object. It is, therefore, possible to provide an object content structure management method capable of intuitively recognizably displaying a combination of the structures of instance objects and the schema-defined structures thereof and capable of improving operativity and operating efficiency.

Particularly, when the objects which do not actually exist but can exist as child objects are managed one by one for the objects of the same type, it is possible to improve efficiency of the memory used for management.

Further, only the selected object is managed by a list of child objects of a parent object and objects other than the selected object of the choices are managed as the objects which do not actually exist but can exist as child objects in the choice list of the selected object, thereby making it possible to improve the display of the content structures of the objects, the display of the content structures during editing and editing operativity.

Further, in an object content structure display method according to the present invention (the thirty-third to thirty-eighth aspects), objects held by the object as child objects are expressed by a tree structure, a character string representing the object type is displayed on each node of the tree structure to display a structure of the object, a type and a value of the attribute capable of being held by an object selected from the displayed tree structure are displayed, thereby displaying a content and a structure of the selected object. It is, therefore, possible to provide an object content structure management method capable of intuitively recognizably displaying a combination of the structures of instance objects and the schema-defined structures thereof and capable of improving operativity and operating efficiency.

Further, not only instance objects actually heldby the object but also objects which are not held by the object but can be held based on the schema definition are simultaneously displayed in the tree structure one by one for each object type, and the instance objects and the objects other than the instance objects are discriminated by different icons, respectively and then displayed. It is, therefore, possible to further improve visibility and operativity.

Further, when there is a probability that objects likely to be held by the object serving as a root further hold objects, the tree structure is expressed hierarchically; and when a displayed hierarchical level is designated at a time of hierarchically displaying the tree structure, structures below the actually existing instance objects are displayed up to the designated hierarchical level and display of structures below the designated hierarchical level is omitted. It is, therefore, possible to further improve operativity and operation efficiency.

Further, when it is possible to hold any one of a plurality of types of objects under a schema definition of types of child objects capable of being held by the object, all objects of choices are displayed in a tree structure as child nodes and the objects actually selected and held among the choices and the unselected choices are discriminated from each other by different icons, respectively and then displayed. It is, therefore, possible to further improve operativity and operation efficiency,

Further, when retrieval is indicated after designating the character string representing the object type, all retrieved objects are highlighted. It is, therefore, possible to further improve operativity and operation efficiency.

Further, when it is possible to hold a plurality of child objects of a same type under a schema definition of types of the child objects capable of held by the object, one of a maximum number and a minimum number of the child objects capable of being held are displayed in the tree structure. It is, therefore, possible to further improve operativity and operation efficiency. Further, in an object content structure editing method according to the present invention (the thirty-ninth to forty-sixth aspect), objects held by the object as child objects are expressed by a tree structure, a character string representing the object type is displayed on each node of the tree structure to display a structure of the object, a type and a value of an attribute capable of held by an object selected from the displayed tree structure are displayed, thereby displaying a content and a structure of the selected object; and when a value to be changed is inputted and change is indicated for the displayed attribute value the attribute value of the object is updated to the input value. It is, therefore, possible to provide an object content structure management method capable of intuitively recognizably displaying a combination of the structures of instance objects and the schema-defined structures thereof and capable of improving operativity and operating efficiency.

Further, when instance addition is indicated after one of the objects existing in the tree structure is designated, an instance object of the same type as a type of the designated object is created and the object of the same type is displayed as a fraternal node of the designated object in the tree structure. It is, therefore, possible to further improve operativity and operation efficiency.

Further, the object permitted to be held as a plural and the object prohibited from being held as a plural by the schema definition are discriminated by different display colors or different icons, respectively and then displayed, instance addition indication for the object prohibited from being held as a plural is not accepted. It is, therefore, possible to further improve operativity and operation efficiency.

Further, when addition is indicated after designating one dummy objects indicating types of objects which do not actually exist but can be held, the designated dummy object is changed to an actual instance and an icon of the designated dummy object is changed to an icon indicating the actual instance in the tree structure. It is, therefore, possible to further improve operativity and operation efficiency.

Further, when not only the designated dummy object but also ancestor objects of the designated dummy object are dummy objects, the ancestor objects are sequentially changed to instances. It is, therefore, possible to further improve operativity and operation efficiency.

Further, when deletion is indicated after designating the actually existing object and the designated object exists as a plural, then structures below the objects are deleted and display of the objects is deleted from the tree structure; and when the deletion is indicated after designating the actually existing object and the designated object is a single object, then nodes below the designated object are changed to dummy objects and display icons of the nodes in the tree structure are changed. It is, therefore, possible to further improve operativity and operation efficiency.

Further, when selection change is indicated after one of dummy objects indicating unselected choices is designated, the objects selected before the selection change are changed to the objects indicating choices and the designated object is changed to a selected object. It is, therefore, possible to further improve operativity and operation efficiency.

Further, edited object contents are outputted by a description language, the description language being one of an MPEG-7 description language or an XML description language. It is, therefore, possible to further improve operativity and operation efficiency.

Further, the computer readable computer product of the present invention (the forty-seventh aspect) records a program for allowing a computer to execute an object content structure management method according to any one of the thirtieth to thirty-second aspects and this program is read by and executed by the computer, thereby making it possible to obtain the same advantages as those of the object content structure management method according to any one of the thirtieth to thirty-second aspects.

Further, the computer readable computer product of the present invention (the forty-eighth aspect) records a program for allowing a computer to execute an object content structure display method according to any one of the thirty-third to the thirty-eighth aspects and this program is read by and executed by the computer, thereby making it possible to obtain the same advantages as those of the object content structure management method according to any one of the thirty-third to the thirty-eighth aspects.

Further, the computer readable computer product of the present invention (the forty-ninth aspect) records a program for allowing a computer to execute an object content structure editing method according to any one of the thirty-ninth to forty-sixth aspects and this program is read by and executed by the computer, thereby making it possible to obtain the same advantages as those of the object content structure management method according to any one of the thirty-ninth to forty-sixths aspects.

Further, according to a content management method of the present invention (the fiftieth aspect) which is a content management method capable of managing one content by a plurality of data formats, data of an original content consisting of one or a plurality of files and a plurality of items of data expressed in a data format different from a data format of the data of the original content are integrated into one logical content and collectively managed, It is, therefore, possible for a user to fetch the stored contents in various data formats including a long content spreading over a plurality of files such as a picture content or a voice content in units intended by the user without being sensible of the data formats of the contents. It is also possible to register, delete and retrieve the contents in units of logical contents.

Further, according to the fifty-first aspect of the invention based on the invention of the fiftieth aspect, when a content is one of picture data and voice data, then the files of the original contents, a file in a data format suited for a processing or a file registered in response to a user' s request are collectively managed. It is, therefore, possible for a user to fetch a content in a data format suited for a processing without being sensible of the data format. It is also possible to freely, collectively register related files and fetch them.

Further, according to the fifty-second aspect of the invention based on the invention of the fifty-first aspect, the files of the original content and the file in the data format suited for the data editing, the content description operation or delivery are collectively managed. It is, therefore, possible for a user to fetch a content in a data format suited for one of such processings without being sensible of the data format.

Further, according to the fifty-third aspect of the invention based on the invention of the fifty-first to fifty-second aspect, after registering the original contents, a file in a data format suited for a processing requested in response to a processing request for specifying a logical content is created or files in a plurality of data formats assumed in advance are automatically created at free timing. It is, therefore, possible to prepare a file in a data format suited for a processing without causing a user inconvenience.

Further, according to the fifty-fourth aspect of the invention based on any one of the inventions of the fiftieth to fifty-third aspects, when the original contents are constituted out of a plurality of items of data, the files as well as management information for managing an allocation position and an allocation length of each data for allocating each data to the logical content consisting of the plurality of items of data of the original content is provided are collectively managed. It is, therefore, possible to create a logical content in which respective items of data are logically linked to one another, as a logical stream.

Further, according to the fifty-fifth aspect of the invention based on the invention of the fifty-fourth aspect, each data of the original content constituting the logical content may be a part of one file or an overlapped content may be provided between the data of the original content. It is, therefore, possible to create a logical content suited for user's intention. Also, according to the fifty-sixth aspect of the invention based on any one of the inventions of the fiftieth to fifty-fifth aspects, an attribute is described as content description information indicating a content. It is, therefore, possible for a user to easily understand what the content is like and to easily retrieve multimedia data while utilizing the content retrieval system.

Further, according to the fifty-seventh aspect of the invention based on the invention of the fifty-sixth aspect, an attribute is described in an expression format having a logical structure. This can make the content further easier to understand. Also, in the fifty-eighth aspect of the invention based on any one of the fiftieth to fifty-fifth aspect, content description information according to the fifty-sixth or fifty-seventh aspect is included as data to be collectively managed. It is, therefore, possible to fetch content description information from the logical content at which the content description information is intended and to thereby facilitate fetching the content description information.

Further, according to the fifty-ninth aspect of the invention is a computer product storing programs, a program for executing any one of the content management methods according to the fiftieth to fifty-eighth aspect is stored in, for example, a detachable computer product. Therefore, when the computer product is attached to the information processing apparatus, such as a personal computer, which is incapable of conducting content management according to the present invention, even the information processing apparatus can obtain the advantages of the inventions according to the fiftieth to fifty-eighth.

The present document incorporates by reference the entire contents of Japanese priority documents, 2000-297170 filed in Japan on September 28, 2000, 2000-315765 filed in Japan on October 16, 2000, and 2001-059191 filed in Japan on March 2, 2001.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A structure editing apparatus wherein an appropriate data range in arranged data is defined as a segment and, when the data range defined by one segment is expressed by a group of a plurality of other segments, said group of the plurality of other segments is defined as a package, thereby editing a structure of said arranged data using structure information defining a hierarchical structure of said arranged data, said structure editing apparatus comprising:
first designating unit which designates an arbitrary segment in said structure information as a target segment;
second designating unit which designates an arbitrary position included in a range of said target segment; and
segment dividing unit which divides the range of said target segment into a first half segment and a second half segment at a dividing position, the dividing position being said position designated by said second designating unit.

2. A structure editing apparatus according to claim 1, wherein
when said target segment has a package, said segment dividing unit divides the package into a first half package consisting of a segment corresponding to a range of said first half segment and a second half package consisting of a segment corresponding to a range of said second half segment.

3. A structure editing apparatus according to claim 1, wherein
said first designating unit is constituted out of a display unit displaying said structure information and a pointing device for designating the target segment, and said second designating unit is constituted out of the display unit displaying said structure information and a pointing device for designating said dividing position; and
said second designating unit displays a line segment for indicating the dividing position on said target segment displayed and freely translating a position of the line segment using the pointing device of said second designating unit.

4. A structure editing apparatus according to claim 1, comprising:
third designating unit which designates movement of one of a boundary on a side of a start position of said target segment and a boundary on a side of an end position of said target segment when an end position of a segment right before said target segment is equal to the start position of the target segment and the end position of the target segment is equal to a start position of a segment right after the target segment; and
segment boundary moving unit which moves the designated boundary on one of the sides of the start position and the end position with said position designated by said second designating unit set as a moving position when said third designating unit designates the movement of the boundary.

5. A structure editing apparatus according to claim 4, wherein
when said boundary is to be moved, said segment boundary moving unit can select one of three boundary movement processings, the three boundary movement processings being:
a first boundary movement processing for moving only one of the start position and the end position of said target segment without changing one of the start position of the segment right after the target segment and the end position of the segment right before the target segment;
a second boundary movement processing for moving one of the start position and the end position of said target segment, and moving one of the end position of the segment right before the target segment and the start position of the segment right after the target segment in contact with one of the start position and the end position of said target segment; and
a third boundary movement processing for moving only one of the start position and the end position of said target segment without moving one of the start position of the segment right after the target segment and the end position of the segment right before the target segment, and inserting a new segment to fill a generated clearance.

6. A structure editing apparatus according to claim 5, wherein
when said target segment has a package, said segment boundary moving unit moves a boundary of a segment in the package in accordance with the range of the target segment.

7. A structure editing apparatus according to claim 6, wherein
said second designating unit displays a line segment for indicating the moving position on said target segment displayed, and freely translating a position of the line segment using the pointing device.

8. A structure editing apparatus according to claim 1, wherein
when said target segment has a structural element below a package in a lower hierarchy, one of a first cutting processing for deleting a structural element below a segment to be cut, a second cutting processing for dividing the segment to be cut, and a third cutting processing for dividing the segment to be cut and then merging divided segment parts with two segments adj acent the divided segment is selectable as a processing for cutting a descendent segment by one of said segment dividing unit and said segment boundary moving unit, respectively, the first cutting processing, the second cutting processing and the third cutting processing recursively applied up to an end descendant.

9. A structure editing apparatus according to claim 1, further comprising:
fourth designating unit which designates segment merger; and
segment merging unit which merges a plurality of segments and replacing the plurality of segment by one segment, wherein said first designating unit can designate a plurality of adjacent segments in a same package as target segments; and
when said first designating unit designates the plurality of target segments and said fourth designating unit designates the segment merger, then said segment merging unit mergers the designated plurality of target segments and replaces a start position of a first segment to an end position of an end segment on basis of time series by one segment.

10. A structure editing apparatus according to claim 1, further comprising:
fifth designating unit which designates an arbitrary package in said structure information as a target package; and
a package hierarchy upgrading unit which replaces a segment above said target package by all segments serving as structural elements of said target package and upgrading said target package by one hierarchy when said fifth designating unit designates the target package.

11. A structure editing apparatus according to claim 1, further comprising:
sixth designating unit which designates segment hierarchy downgrading; and
a segment hierarchy downgrading unit which creates a new package and a new segment out of a plurality of segments, arranging said new segment in place of said plurality of segments, and arranging said new package in a hierarchy below said new segment, wherein
said first designating unit can designate a plurality of adjacent segments in a same package as target segments;
when said first designating unit designates the plurality of target segments and said sixth designating unit designates the segment hierarchy downgrading, then said segment hierarchy downgrading unit creates, as said new segment, a segment in a range corresponding to a combined range of said plurality of target segments, replaces said plurality of target segment by the new segment, creates the new package below the new segment, and moves said plurality of target segments below the new package.

12. A structure editing apparatus according to claim 1, further comprising:
seventh designating unit which designates segment hierarchy upgrading; and
segment hierarchy upgrading unit which moves a plurality of segments to a hierarchy of a segment higher than the plurality of segments by one hierarchy, wherein
said first designating unit can designate a plurality of adjacent segments in a same package as target segments; and
when said fist designating unit designates the plurality of target segments and said seventh unit designate the segment hierarchy upgrading, then said segment hierarchy upgrading unit sets a segment above a package including said plurality of target segments as a parent segment, divides said parent segment into a new segment in a range corresponding to a combined range of said plurality of target segments and other segments, and replaces said plurality of target segments by said new segment.

13. A structure editing apparatus according to claim 1, further comprising:
eighth designating unit which designates segment deletion; and
segment deleting unit which deletes a structural element below said target segment when said eighth designating unit designates the segment deletion.

14. A structure editing apparatus according to claim 13, wherein
as a processing for a clearance generated after said segment deleting unit deletes the structural element below the target segment, one of no post-processing, a first processing for extending a boundary of a segment right before the target segment, a second processing for extending a boundary of a segment right after the target segment, and a fourth processing for designating one point in a range of the target segment and extending the boundaries of the segments right before and after the target segment toward respective designated positions is selectable.

15. A structure editing apparatus according to claim 10, further comprising:
ninth designating unit which designates package deletion; and
package deleting unit which deletes a structural element below the target package when said fifth designating unit designates the target package and said ninth designating unit designates the package deletion.

16. A structure editing apparatus according to claim 1, wherein said arranged data is a picture stream.

17. A picture structure editing apparatus wherein an arbitrary frame range in a picture stream is defined as a segment, and when the range designated by one segment is expressed by a group of a plurality of other segments, the group of said plurality of segments is defined as a package, thereby editing a structure of said picture stream using structure information defining a hierarchical structure of said picture stream, the picture structure editing apparatus comprising:
first designating unit which designates an arbitrary segment in said structure information as a target segment;
second designating unit which designates an arbitrary position included in a range of said target segment; and
segment dividing unit which divides the range of said target segment into a first half segment and a second half segment at a dividing position, the dividing position being said position designated by said second designating unit.

18. A picture structure editing apparatus according to claim 17, wherein
when said target segment has a package, said segment dividing unit divides the package into a first half package consisting of a segment corresponding to a range of said first half segment and a second half package consisting of a segment corresponding to a range of said second half segment.

19. A structure editing apparatus according to claim 17, wherein
said first designating unit is constituted out of a display unit displaying said structure information and a pointing device for designating the target segment, and said second designating unit is constituted out of the display unit displaying said structure information and a pointing device for designating said dividing position; and
said second designating unit displays a line segment for indicating a dividing position on said target segment displayed and freely translating a position of the line segment using the pointing device of said second designating unit.

20. A picture structure editing apparatus according to claim 19, wherein
when said dividing position is in units of frames, a segment start frame A, a segment end frame B, a division target candidate frame C and a frame D right before the division target candidate frame C are arranged in an order of the frame A, the frame D, the frame C and the frame B and displayed together with the number of frames on an operation dialog.

21. A picture structure editing apparatus according to claim 20, wherein
when one of the segment division and the segment boundary movement is conducted through one of said segment dividing unit and said segment boundary moving unit, respectively, it is possible to select one of updating only when an update button is depressed and updating at set update timing to display updating of the respective frames displayed on said operation dialog.

22. A picture structure editing apparatus according to claim 21, wherein
a reproduction button and a frame candidate select button are provided;
when said reproduction button is depressed, the target segment at a time of depression of said reproduction button is reproduced; and
when said frame candidate select button is depressed, peripheries of a candidate frame designated at a time of depression of said frame candidate select button are displayed on a frame continuous display screen.

23. A picture structure editing apparatus according to claim 17, comprising:
third designating unit which designates movement of one of a boundary on a side of a start position of said target segment and a boundary on a side of an end position of said target segment when an end position of a segment right before said target segment is equal to the start position of the target segment and the end position of the target segment is equal to a start position of a segment right after the target segment; and
segment boundary moving unit which moves the designated boundary on one of the sides of the start position and the end position with said position designated by said second designating unit set as a moving position when said third designating unit designates the movement of the boundary.

24. A picture structure editing apparatus according to claim 23, wherein
when said boundary is to be moved, said segment boundary moving unit can select one of three boundary movement processings, the three boundary movement processings being:
a first boundary movement processing for moving only one of the start position and the end position of said target segment without changing one of the start position of the segment right after the target segment and the end position of the segment right before the target segment;
a second boundary movement processing for moving one of the start position and the end position of said target segment, and moving one of the end position of the segment right before the target segment and the start position of the segment right after the target segment in contact with one of the start position and the end position of said target segment; and
a third boundary movement processing for moving only one of the start position and the end position of said target segment without moving one of the start position of the segment right after the target segment and the end position of the segment right before the target segment, and inserting a new segment to fill a generated clearance.

25. A picture structure editing apparatus according to claim 24, wherein
when said target segment has a package, said segment boundary moving unit moves a boundary of a segment in the package in accordance with the range of the target segment.

26. A picture structure editing apparatus according to claim 17, wherein
said second designating unit displays a line segment for indicating the moving position on said target segment displayed, and freely translating a position of the line segment using the pointing device.

27. A picture structure editing apparatus according to claim 26, wherein
when said moving position is in units of frames, a start frame A of a segment right before the target segment, an end frame B of the segment right before the target segment, a start frame C of the target segment, an end frame D of the target segment, a start frame E of a segment right after the target segment and an end frame F of the segment right a fter the target segment are displayed together with the number of frames on an operation dialog.

28. A picture structure editing apparatus according to claim 26, wherein
when one of the segment division and the segment boundary movement is conducted through one of said segment dividing unit and said segment boundary moving unit, respectively, it is possible to select one of updating only when an update button is depressed and updating at set update timing to display updating of the respective frames displayed on said operation dialog.

29. A picture structure editing apparatus according to claim 28, wherein
a reproduction button and a frame candidate select button are provided;
when said reproduction button is depressed, the target segment at a time of depression of said reproduction button is reproduced; and
when said frame candidate select button is depressed, peripheries of a candidate frame designated at a time of depression of said frame candidate select button are displayed on a frame continuous display screen.

30. A computer program for allowing a computer to execute respective unit of a picture structure editing apparatus wherein an appropriate data range in arranged data is defined as a segment and, when the data range defined by one segment is expressed by a group of a plurality of other segments, said group of the plurality of other segments is defined as a package, thereby editing a structure of said arranged data using structure information defining a hierarchical structure of said arranged data, said structure editing apparatus comprising:
first designating unit which designates an arbitrary segment in said structure information as a target segment;
second designating unit which designates an arbitrary position included in a range of said target segment; and
segment dividing unit which divides the range of said target segment into a first half segment and a second half segment at a dividing position, the dividing position being said position designated by said second designating unit.

31. A computer program for allowing a computer to execute respective unit of a picture structure editing apparatus wherein an arbitrary frame range in a picture stream is defined as a segment, and when the range designated by one segment is expressed by a group of a plurality of other segments, the group of said plurality of segments is defined as a package, thereby editing a structure of said picture stream using structure information defining a hierarchical structure of saidpicture stream, the picture structure editing apparatus comprising:
first designating unit which designates an arbitrary segment in said structure information as a target segment;
second designating unit which designates an arbitrary position included in a range of said target segment; and
segment dividing unit which divides the range of said target segment into a first half segment and a second half segment at a dividing position, the dividing position being said position designated by said second designating unit.

32. An object content structure management method for managing a content structure of an object, the content structure of the object expressed by a tree-structure set membership consisting of zero or at least one object, an attribute capable of being held by the object for each object type and the object type being defined by a schema definition, wherein
a list of child objects defined by said schema definition is managed for each said object, the child objects capable of being held by said object;
the list of said child objects holds instances of all objects actually existing as the child objects and objects which do not actually exist but can exist as the child objects, and each object holds determination information for determining whether a certain object is an instance of an actually existing object or an object which does not actually exist but can exist as a child object;
when an arbitrary object is set as a start object, a list of child objects of said start object, a list of the child objects of each object held by the list of the child objects, and a list of child objects of each object held by a list of child objects of the child objects are sequentially managed, thereby managing a content structure of said start object.

33. An object content structure management method according to claim 32, wherein
the objects which do not actually exist but can exist as the child objects are managed one by one for each object of a same type.

34. An object content structure management method according to claim 32, wherein
when a plurality of objects including an exclusively selectable object exist in a plurality of types of objects capable of being held by a certain object by a schema definition of the object, said certain object manages said plurality of objects including the exclusively selectable object as a choice list besides said list of child objects;
when one object is selected from among a plurality of choices, only the selected object is managed by a list of child objects of a parent object and objects other than the selected object of the choices are managed as the objects which do not actually exist but can exist as child objects in the choice list of said selected object.

35. An object content structure display method for displaying a content structure of an object, the content structure of the object expressed by a tree-structure set membership consisting of zero or at least one object, an attribute capable of being held by the object for each object type and the object type being defined by a schema definition, wherein
objects held by said object as child objects are expressed by a tree structure, a character string representing the object type is displayed on each node of the tree structure to display a structure of the object, a type and a value of the attribute capable of being held by an object selected from the displayed tree structure are displayed, thereby displaying a content and a structure of the selected object.

36. An object content structure displaymethod according to claim 35, wherein
not only instance objects actually held by the object but also objects which are not held by the object but can be held based on the schema definition are simultaneously displayed in the tree structure one by one for each object type, and the instance objects and the objects other than the instance objects are discriminated by different icons, respectively and then displayed.

37. An object content structure display method according to claim 35, wherein
when there is a probability that objects likely to be held by the object serving as a root further hold objects, said tree structure is expressed hierarchically; and
when a displayed hierarchical level is designated at a time of hierarchically displaying said tree structure, structures below the actually existing instance objects are displayed up to the designated hierarchical level and display of structures below the designated hierarchical level is omitted.

38. An object content structure display method according to claim 35, wherein
when it is possible to hold any one of a plurality of types of objects under a schema definition of types of child objects capable of being held by the object, all objects of choices are displayed in a tree structure as child nodes and the objects actually selected and held among the choices and the unselected choices are discriminated from each other by different icons, respectively and then displayed.

39. An object content structure display method according to claim 35, wherein
when retrieval is indicated after designating the character string representing the object type, all retrieved objects are highlighted.

40. An object content structure display method according to claim 35, wherein
when it is possible to hold a plurality of child objects of a same type under a schema definition of types of the child objects capable of held by the object, one of a maximum number and a minimum number of the child objects capable of being held are displayed in said tree structure.

41. An object content structure editing method for editing a content structure of an object, the content structure of the object expressed by a tree-structure set membership consisting of zero or at least one object, an attribute capable of being held by the object for each object type and the object type being defined by a schema definition, wherein
objects held by said object as child objects are expressed by a tree structure, a character string representing the object type is displayed on each node of the tree structure to display a structure of the object, a type and a value of an attribute capable of held by an object selected from the displayed tree structure are displayed, thereby displaying a content and a structure of the selected object; and
when a value to be changed is inputted and change is indicated for said displayed attribute value, the attribute value of the object is updated to the input value.

42. An object content structure editing apparatus according to claim 41, wherein
when instance addition is indicated after one of the objects existing in the tree structure is designated, an instance object of the same type as a type of the designated object is created and the object of the same type is displayed as a fraternal node of said designated object in the tree structure.

43. An object content structure editing method according to claim 42, wherein
the object permitted to be held as a plural and the object prohibited from being held as a plural by the schema definition are discriminated by different display colors or different icons, respectively and then displayed, instance addition indication for said object prohibited from being held as a plural is not accepted.

44. An object content structure editing method according to claim 41, wherein
when addition is indicated after designating one dummy objects indicating types of objects which do not actually exist but can be held, said designated dummy object is changed to an actual instance and an icon of said designated dummy object is changed to an icon indicating the actual instance in the tree structure.

45. An object content structure editing method according to claim 44, wherein
when not only said designated dummy object but also ancestor objects of said designated dummy object are dummy objects, the ancestor objects are sequentially changed to instances.

46. An object content structure editing method according to claim 41, wherein
when deletion is indicated after designating the actually existing object and said designated object exists as a plural, then structures below the objects are deleted and display of the objects is deleted from the tree structure; and when the deletion is indicated after designating the actually existing object and said designated object is a single object, then nodes below the designated object are changed to dummy objects and display icons of the nodes in the tree structure are changed.

47. An object content structure editing method according to claim 41, wherein
when selection change is indicated after one of dummy objects indicating unselected choices is designated, the objects selected before the selection change are changed to the objects indicating choices and said designated object is changed to a selected object.

48. An object content structure editing method according to claim 41, wherein
edited object contents are outputted by a description language, the description language being one of an MPEG-7 description language or an XML description language.

49. A computer program for allowing a computer to execute an object content structure management method for managing a content structure of an object, the content structure of the object expressed by a tree-structure set membership consisting of zero or at least one object, an attribute capable of being held by the object for each object type and the object type being defined by a schema definition, wherein
a list of child objects defined by said schema definition is managed for each said object, the child objects capable of being held by said object;
the list of said child objects holds instances of all objects actually existing as the child objects and objects which do not actually exist but can exist as the child objects, and each object holds determination information for determining whether a certain object is an instance of an actually existing object or an object which does not actually exist but can exist as a child object;
when an arbitrary object is set as a start object, a list of child objects of said start object, a list of the child objects of each object held by the list of the child objects, and a list of child objects of each object held by a list of child objects of the child objects are sequentially managed, thereby managing a content structure of said start object.

50. A computer program for allowing a computer to execute an object content structure display method for displaying a content structure of an object, the content structure of the object expressed by a tree-structure set membership consisting of zero or at least one object, an attribute capable of being held by the object for each object type and the object type being defined by a schema definition, wherein
objects held by said object as child objects are expressed by a tree structure, a character string representing the object type is displayed on each node of the tree structure to display a structure of the object, a type and a value of the attribute capable of being held by an object selected from the displayed tree structure are displayed, thereby displaying a content and a structure of the selected object.

51. A computer program for allowing a computer to execute an object content structure editing method for editing a content structure of an object, the content structure of the object expressed by a tree-structure set membership consisting of zero or at least one object, an attribute capable of being held by the object for each object type and the object type being defined by a schema definition, wherein
objects held by said object as child objects are expressed by a tree structure, a character string representing the object type is displayed on each node of the tree structure to display a structure of the object, a type and a value of an attribute capable of held by an object selected from the displayed tree structure are displayed, thereby displaying a content and a structure of the selected object; and
when a value to be changed is inputted and change is indicated for said displayed attribute value, the attribute value of the object is updated to the input value.

52. A content management method capable of managing one content by a plurality of data formats, wherein
data of an original content consisting of one or a plurality of files and a plurality of items of data expressed in a data format different from a data format of the data of the original content are integrated into one logical content and collectively managed.

53. A content management method according to claim 52, wherein
when a content is one of picture data and voice data, then the files of the original contents, a file in a data format suited for a processing or a file registered in response to a user' s request are collectively managed.

54. A content management method according to claim 53, wherein
after registering the original contents, a file in a data format suited for a processing requested in response to a processing request for specifying a logical content is created or files in a plurality of data formats assumed in advance are automatically created at free timing.

55. A content management method according to claim 53, wherein said processing is one of a data editing operation, a content description operation and a delivery operation.

56. A content management method according to claim 55, wherein
after registering the original contents, a file in a data format suited for a processing requested in response to a processing request for specifying a logical content is created or files in a plurality of data formats assumed in advance are automatically created at free timing.

57. A content management method according to claim 52, wherein
when the original contents are constituted out of a plurality of items of data, management information for managing an allocation position and an allocation length of each data for allocating each data to the logical content consisting of the plurality of items of data of the original content is provided, the management information as well as the files being collectively managed.

58. A content management method according to claim 57, wherein
each data of the original content constituting said logical content is a part of one file or has an overlapped content between the data of the original content.

59. A content management method according to claim 52, wherein
an attribute of a content is described as content description information indicating the content.

60. A content management method according to claim 59, wherein the content description information has a logical structure.

61. A content management method according to claim 52, wherein the content description information indicating the content is included as data to be collectively managed.

62. A content management method according to claim 52, wherein the content description information having a logical structure is included as data to be collectively managed.

63. A computer program for executing a content management method capable of managing one content by a plurality of data formats, wherein
data of an original content consisting of one or a plurality of files and a plurality of items of data expressed in a data format different from a data format of the data of the original content are integrated into one logical content and collectively managed.
